(19) Europäisches Patentamt
European Patent Office
Office européen des brevets

(11) **EP 2 271 037 A1**

(12) **EUROPÄISCHE PATENTANMELDUNG**

(43) Veröffentlichungstag:
**05.01.2011 Patentblatt 2011/01**

(21) Anmeldenummer: **09008764.4**

(22) Anmeldetag: **03.07.2009**

(51) Int Cl.:
***H04L 25/03*** *(2006.01)*

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(71) Anmelder: **Universität Duisburg-Essen
45141 Essen (DE)**

(72) Erfinder:
• **Burnic, Admir
47269 Duisburg (DE)**
• **Jung, Peter, Prof. Dr. habil.
47051 Duisburg (DE)**

(74) Vertreter: **Zinkler, Franz et al
Schoppe, Zimmermann, Stöckeler & Zinkler
Patentanwälte
Postfach 246
82043 Pullach bei München (DE)**

(54) **Frequenzbereichberechnungen für MIMO-Vorverzerrung**

(57) Ein Sendesignalvektor ($\underline{m}$), der Datensymbole wenigstens eines teilnehmerspezifischen Datenblocks umfasst, wird über wenigstens einen teilnehmerspezifischen Übertragungskanal (204) mit einer signalverzerrenden Wirkung, der durch wenigstens einen teilnehmerspezifischen Kanalimpulsantwortvektor ($\underline{h}_{k_s}^{(k_u)}$) dargestellt werden kann, zu wenigstens einem Teilnehmer übertragens. Die signalverzerrende Wirkung des Übertragungskanals (204) wird durch eine Vorverzerrung des Sendesignalvektors ($\underline{m}$) kompensiert, wobei die Vorverzerrung basierend auf einer im Frequenzbereich durchgeführten Annäherung einer optimalen Kanalautokorrelationsmatrix ($\underline{J}$) durch eine zirkulante Kanalautokorrelationsmatrix ($\underline{J}_{circ}$), die von dem wenigstens einen Kanalimpulsantwortvektor ($\underline{h}_{k_s}^{(k_u)}$) abhängt.

FIG 3

**Beschreibung**

Die vorliegende Erfindung bezieht sich auf ein Konzept zur Kompensation einer signalverzerrenden Wirkung eines Übertragungskanals durch eine senderseitige Vorverzerrung eines Sendesignals im Frequenzbereich, wie es beispielsweise in drahtlosen Mehrteilnehmerkommunikationssystemen eingesetzt werden kann.

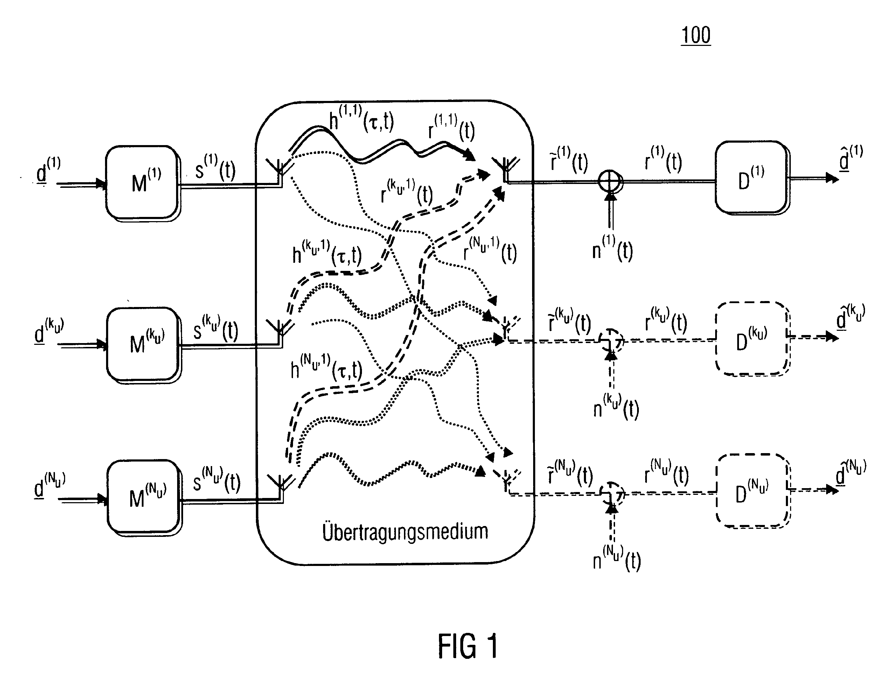

In Mehrteilnehmerkommunikationssystemen greifen sämtliche Kommunikationsteilnehmer auf ein Übertragungsmedium zu. Fig. 1 zeigt schematisch ein Mehrteilnehmerkommunikationssystem 100 mit $N_u$ Kommunikationsteilnehmern.

Zunächst wird ein einzelner Teilnehmer mit Index $k_u$ ($k_u = 1,...,N_u$) betrachtet. Eine Symbolfolge $\underline{d}^{(k_u)}$ wird mit einer Modulationsvorschrift $M^{(k_u)}$

$$\underline{d}^{(k_u)} \xrightarrow{\ M^{(k_u)}\ } s^{(k_u)}(t) \qquad\qquad (1)$$

auf ein Sendesignal $s^{(k_u)}(t)$ abgebildet.

In einem Mehrteilnehmerkommunikationssystem wird üblicherweise eine Wahl der Abbildung $M^{(k_u)}$ getroffen, welche es möglich macht, die unterschiedlichen Sendesignale $s^{(k_u)}(t)$ ($k_u = 1,..., N_u$) voneinander zu unterscheiden. Diese Wahl, die im Weiteren als Vielfachzugriff bezeichnet wird, bestimmt die Art des Zugriffs auf das Übertragungsmedium. Beim Vielfachzugriff wird eine Orthogonalität der Sendesignale

$$E\left\{ \int_{-\infty}^{\infty} s^{(k_i)}(t)s^{(k_j)}(t)dt \right\} = 0, \quad k_i \neq k_j , \qquad\qquad (2)$$

angestrebt, wobei $E\{\cdot\}$ den Erwartungswert bezeichnet. In heutigen Funksystemen ist ein Zugriff auf das Übertragungsmedium nur in einem für das entsprechende System vorgesehenen Frequenzband erlaubt und wird seitens jeweiliger Regulierungsbehörden reguliert.

Das Sendesignal $s^{(k_u)}(t)$ ruft in einem Empfangssignal $r^{(k_u)}(t)$ einen mit $r^{(k_u,k_u)}(t)$ bezeichnetem Nutzanteil hervor. Das Übertragungsmedium übt hierbei einen Einfluss auf das Sendesignal $\mathbf{s}^{(k_u)}(t)$ aus, welcher üblicherweise durch einen linearen Zusammenhang

$$r^{(k_u,k_u)}(t) = \int_{-\infty}^{\infty} h^{(k_u,k_u)}(\tau,t)\cdot s^{(k_u)}(t-\tau)d\tau \qquad\qquad (3)$$

beschrieben wird, wobei $h^{(i,j)}(\tau,t)$ einen Einfluss des Übertragungsmediums vom i-ten Sender zum j-ten Empfänger repräsentiert. Demnach kann das Empfangssignal im selben Band wie das Sendesignal gefunden werden. Die Eigenschaften des Übertragungsmediums $h^{(k_u,k_u)}(\tau,t)$ werden oft als Übertragungskanal bezeichnet.

Beispielsweise entsteht ein Empfangssignal $r^{(1)}(t)$ des ersten Benutzers durch eine additive Überlagerung des Nutzsignals $r^{(1,1)}(t)$, der Signale anderer Teilnehmer und eines thermischen Rauschens

$$r^{(k_u)}(t) = r^{(k_u,k_u)}(t) \ + \ \underbrace{\sum_{k_u=2}^{N_u} r^{(k_u,1)}(t)}_{\text{MAI}} \ + \ \underbrace{n^{(1)}(t)}_{\text{thermisches Rauschen}} . \qquad (4)$$

Der Einfluss der Signale anderer Teilnehmer heißt Vielfachzugriffsinterferenz (engl. Multiple Access Interference, MAI). Der Einfluss des thermischen Rauschens wird durch Superposition der Musterfunktion $n^{(1)}(t)$ des Rauschens und des Signals $\tilde{r}^{(1)}(t)$ zum Ausdruck gebracht. Das thermische Rauschen wird als ein stationärer oder ein schwach stationärer Zufallsprozess, dessen Leistungsdichtespektrum weitgehend frequenzunabhängig ist, aufgefasst. Auch im Sender wird dem senderseitigen Nutzsignal thermisches Rauschen überlagert. Der Einfluss dieser Störung im Sender auf das Sendesignal $s^{(1)}(t)$ ist jedoch aufgrund des großen Unterschiedes zwischen den Leistungen des Sende- und des Störsignals im Sender vernachlässigbar.

Ein detektierter Datenvektor $\hat{\underline{d}}^{(k_u)}$ bzgl. des gesendeten Symbolvektors $\underline{d}^{(k_u)}$ wird empfängerseitig gemäß einer Detektionsvorschrift $D^{(k_u)}$ aufgrund des Empfangssignals $\tilde{r}^{k_u}(t)$ ermittelt

$$\tilde{r}^{(k_u)}(t) \xrightarrow{\quad D^{(k_u)} \quad} \hat{\underline{d}}^{(k_u)} . \qquad (5)$$

Bei der Datendetektion kann der Einfluss der Vielfachzugriffsinterferenz gemäß Gl. (2) teilweise bzw. vollständig unterdrückt werden. Hingegen kann der Einfluss des thermischen Rauschens nicht unterdrückt werden. Dieser Einfluss hängt von der eingesetzten Empfängerstruktur ab.

Die im Vorhergehenden beschriebenen Einflüsse des Übertragungsmediums können durch so genanntes gemeinsames Senden (engl. Joint Transmission, JT) vorteilhaft genutzt werden. Beim gemeinsamen Senden wird ein aktueller Einfluss des Übertragungskanals, wie z. B. Signalverzerrung, auf die gesendeten Signale und auf den Vielfachzugriff schon im Sender berücksichtigt. Dies führt besonders in einer Abwärtsstrecke, die bei einer ortsfesten Basisstationen ihren Anfang nimmt und bei mobilen Kommunikationsendgeräten endet, zu einer Verringerung der Detektionsaufwände in den Empfängern, welche durch eine Erhöhung der Aufwände in den Basisstationen erkauft wird. Werden Aufgabenteile eines Kommunikationsendgerätes auf eine Basisstation ausgelagert, wie z. B. Entzerrungs- bzw. Kombinierungsaufgaben, so spricht man von einer asymmetrischen Lastenverteilung. Bekannte Arbeiten zum gemeinsamen Senden basieren auf der Annahme, dass die Signale im Sender im Zeitbereich dargestellt werden.

Im Folgenden wird das gemeinsame Senden näher beschrieben. Dabei wird eine einheitlicher mathematischer Formalismus in Matrix-Vektor-Schreibweise verwendet, um verschiedene Ausprägungen von CDMA- und Mehrträgerverfahren zusammenfassend zu charakterisieren. Zeitdiskrete Signale werden vorliegend durch Vektoren dargestellt. Die Systemeigenschaften werden mit Matrizen beschrieben. Matrizen werden mit fett und kursiv gedruckten Großbuchstaben bezeichnet, Vektoren sind fett und kursiv gedruckte Kleinbuchstaben. Komplexwertige Größen sind unterstrichen.

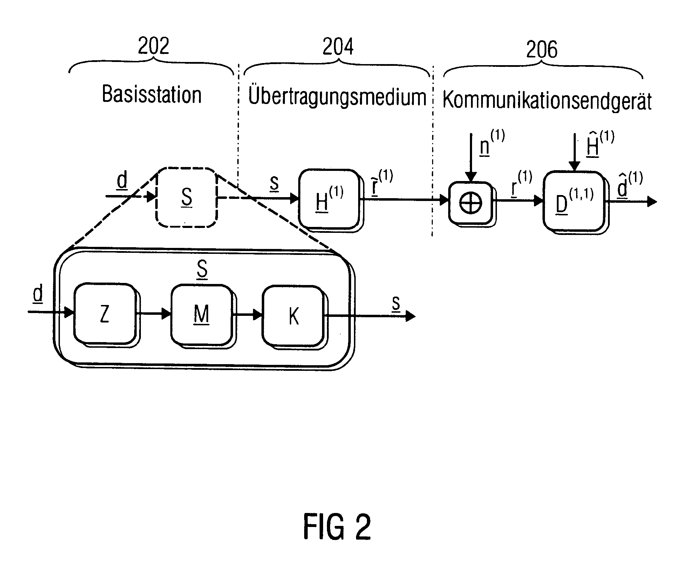

Im Folgenden wird vom zeitdiskreten Basisbandmodell der Abwärtsstrecke nach Fig. 2 ausgegangen. Im zeitdiskreten Basisbandmodell nach Fig. 2 sind schematisch ein Sender einer Basisstation 202, ein Übertragungsmedium 204 und ein Empfänger eines Kommunikationsendgeräts 206 dargestellt.

Es wird ohne Beschränkung der Allgemeinheit davon ausgegangen, dass ein Einfluss von Sende- und Empfangsfiltern in der Modellierung des Übertragungsmediums 204 enthalten sind. Die letzten beiden Komponenten beziehen sich ohne Beschränkung der Allgemeinheit auf ein mit Index $k_u$ bezeichnetes Kommunikationsendgerät.

In Fig. 2 wird von einer blockweisen Datenübertragung von der Basisstation 202 zu insgesamt $N_u$ aktiven Kommunikationsendgeräten 206 ausgegangen. Die Datensymbole der $N_u$ Teilnehmer sind senderseitig in einem kombinierten Datenvektor

$$\underline{d} = \left( \left( \underline{d}^{(1)} \right)^{\mathsf{T}}, \left( \underline{d}^{(2)} \right)^{\mathsf{T}}, \ldots, \left( \underline{d}^{(N_u)} \right)^{\mathsf{T}} \right)^{\mathsf{T}} \qquad (6)$$

enthalten. Der kombinierte Datenvektor $\underline{d}$ besteht aus $N_u$ teilnehmerspezifischen Datenvektoren

$$\underline{d}^{(k_u)} = \left( \underline{d}_1^{(k_u)}, \underline{d}_2^{(k_u)}, \ldots, \underline{d}_{N_d^{(k_u)}}^{(k_u)} \right)^{\mathsf{T}}, k_u = 1, \ldots, N_u; \text{mit } N_d^{(k_u)} > 0. \qquad (7)$$

Jeder teilnehmerspezifische Datenvektor $\underline{d}^{(k_u)}$, $k_u = 1,...,N_u$, enthält $N_d^{(k_u)}$, $k_u = 1,...,N_u$, im allgemeinen komplex-wertige Datensymbole $\underline{d}_{k_d}^{(k_u)}$, $k_d = 1,...,N_d^{(k_u)}$, $k_u = 1,...,N_u$. Der kombinierte Datenvektor $\underline{d}$ hat somit $\sum_{k_u=1}^{N_u} N_d^{(k_u)}$ Elemente.

Im Weiteren wird davon ausgegangen, dass die Datensymbole voneinander statistisch unabhängig sind und alle eine mittlere Datensymbolenergie $\varepsilon_d$ haben. Eine Kovarianzmatrix der Daten ist in diesem Fall durch

$$\underline{R}_d = E\left\{\underline{d}\,\underline{d}^H\right\} = \mathcal{E}_d I_{\left(\sum_{k_u=1}^{N_u} N_d^{(k_u)}\right)} \cdot \qquad (8)$$

gegeben. In Gl. (8) ist $\underline{d}^H$ die komplex konjugierte und transponierte Version des kombinierten Datenvektors $\underline{d}$, und E$\{\underline{d}\,\underline{d}^H\}$ ist der Erwartungswert von $\{\underline{d}\,\underline{d}^H\}$.

Ein zeitkontinuierliches Äquivalent des Sendesignalvektors $\underline{s}$ hat die Dauer $T_s$ und die Bandbreite $B_s$. Somit enthält $\underline{s}$ insgesamt

$$N_s = T_s \cdot B_s \qquad (9)$$

Elemente. Der Sendesignalvektor $\underline{s}$ wird aus Daten unter Anwendung einer Matrix $\underline{S}$ erzeugt. Diese Matrix $\underline{S}$ hat $N_s$ Zeilen und $\sum_{k_u=1}^{N_u} N_d^{(k_u)}$ Spalten, beschreibt eine Signalerzeugung im Sender und wird deshalb im Folgenden als Signalerzeugungsmatrix bezeichnet. So realisiert die Signalerzeugungsmatrix beispielsweise die Bandspreizung im Falle einer DS-CDMA (engl. Direct Sequence Code Division Multiple Access)-Komponente bzw. die Mehrträgerübertragung, sofern eine Mehrträgerkomponente eingesetzt wird. Mit der nachstehend weiter spezifizierten Signalerzeu-gungsmatrix $\underline{S}$ und dem kombinierten Datenvektor $\underline{d}$ aus Gl. (6) erhält man den Sendesignalvektor

$$\underline{s} = \underline{S}\,d \qquad (10)$$

des zeitdiskreten Sendesignals. Die Signalerzeugungsmatrix

$$\underline{S} = K \cdot \underline{M} \cdot Z \qquad (11)$$

besteht aus einer Zuordnungsmatrix $Z$ mit $N_u N_s$ Zeilen und $\sum_{k_u=1}^{N_u} N_d^{(k_u)}$ Spalten, die rein reelle und nicht negative Elemente enthält, einer $N_u N_s \times N_u N_s$-Modulationsmatrix $\underline{M}$, deren Elemente in der Regel komplexwertig sind, und einer $N_s \times N_u N_s$-Kombinationsmatrix $K$ der Form

$$K = \begin{bmatrix} I_{N_s} & I_{N_s} & \cdots & I_{N_s} \end{bmatrix}, \qquad (12)$$

die aus $N_u$ Kopien der $N_s \times N_s$-Einheitsmatrix $I_{N_s}$ besteht.

Die $N_u N_s \times \sum_{k_u=1}^{N_u} N_d^{(k_u)}$ -Zuordnungsmatrix

$$Z = \begin{bmatrix} Z^{(1)T} & Z^{(2)T} & \cdots & Z^{(N_u)T} \end{bmatrix}^T, \qquad (13)$$

besteht aus $N_u$ teilnehmerspezifischen $N_s \times \sum_{k_u=1}^{N_u} N_d^{(k_u)}$ – Zuordnungsmatrizen $Z^{(k_u)}$ $k_u = 1,...,N_u$, welche eine

Zuordnung der teilnehmerspezifischen Datenvektoren $\underline{d}^{(k_u)}$, $k_u = 1,...,N_u$, gemäß Gl. (7) zu jeweiligen Übertragungsressourcen festlegen. Im Zuge dieser Zuordnung erfolgt auch eine Gewichtung der teilnehmerspezifischen Datenvektoren $\underline{d}^{(k_u)}$ gemäß Gl. (7) mit teilnehmerspezifischen Gewinnfaktoren $Z^{(k_u)} \geq 0$ $k_u = 1,...,N_u$. Die teilnehmerspezifischen Gewinnfaktoren $Z^{(k_u)}$, $k_u = 1,...,N_u$, werden aus den jeweiligen Verfahren zur Leistungsregelung bestimmt. Das Ergebnis der Zuordnung ist ein zugeordneter Gesamtdatenvektor

$$\underline{\delta} = Z\underline{d}. \qquad (14)$$

Während die Länge $\sum_{k_u=1}^{N_u} N_d^{(k_u)}$ des Datenvektors $\underline{d}$ aus Gl. (6) variabel ist, hat der zugeordnete Datenvektor $\underline{\delta}$ aus Gl. (14) stets konstant $N_u N_s$ Elemente. Im Falle einer DS-CDMA-Komponente weist die Zuordnungsmatrix $Z$ die teilnehmerspezifischen Datenvektoren $\underline{d}^{(k_u)}$ nach Gl. (7) beispielsweise jeweiligen CDMA-Spreizcodes zu. Im Falle einer Mehrträgerübertragung ordnet die Zuordnungsmatrix $Z$ die Datensymbole $\underline{d}_{k_d}^{(k_u)}$ aus den teilnehmerspezifischen Datenvektoren $\underline{d}^{(k_u)}$ nach Gl. (7) einem jeweiligen Subträger zu.

Eine aus den teilnehmerspezifischen $N_s \times N_s$-Modulationsmatrizen $\underline{M}^{(k_u)}$, $k_u = 1,...,N_u$, zusammengesetzte $N_u N_s \times N_u N_s$-Modulationsmatrix

$$\underline{M} = \begin{bmatrix} \underline{M}^{(1)} & 0_{N_s \times N_s} & \cdots & 0_{N_s \times N_s} \\ 0_{N_s \times N_s} & \underline{M}^{(2)} & \cdots & 0_{N_s \times N_s} \\ \vdots & \vdots & \ddots & \vdots \\ 0_{N_s \times N_s} & 0_{N_s \times N_s} & \cdots & \underline{M}^{(N_u)} \end{bmatrix}. \qquad (15)$$

wendet eine Modulationsvorschrift auf den zugeordneten Gesamtdatenvektor $\underline{\delta}$ aus Gl. (14) an:

$$\underline{m} = \underline{M\delta}. \qquad (16)$$

So erfolgt im Falle einer DS-CDMA-Komponente durch $\underline{M}$ eine Bandspreizung. Wird Mehrträgerübertragung eingesetzt, so realisiert $\underline{M}$ mit einer inversen diskreten Fourier-Transformation (engl. inverse discrete Fourier transform, IDFT) die Umsetzung des im Frequenzbereich existierenden zugeordneten Datenvektors $\underline{\delta}$ in den Zeitbereich. Die Größe der $N_u N_s \times N_u N_s$ -Modulationsmatrix $\underline{M}$ ist stets unabhängig von der Länge $\sum_{k_u=1}^{N_u} N_d^{(k_u)}$ des kombinierten Datenvektors $\underline{d}$ aus Gl. (6).

Die $N_s \times N_u N_s$ -Kombinationsmatrix $\mathbf{K}$ nach Gl. (12) erzeugt eine lineare Überlagerung der $N_u$ teilnehmerspezifischen Komponentenvektoren in $\underline{m}$ aus Gl. (16) zum Sendesignalvektor $\underline{s}$ gemäß Gl. (10). Dieser Sendesignalvektor $\underline{s}$ ist die Grundlage für eine im Sender 202 realisierte analoge Signalverarbeitung, die den Sendevorgang abschließt.

Ein Einfluss des Übertragungsmediums 204 auf das Empfangssignal wird durch einen teilnehmerspezifischen Kanalimpulsantwortvektor

$$\underline{h}_{k_s}^{(k_u)} = \left[ \underline{h}_{k_s,1}^{(k_u)}, \underline{h}_{k_s,2}^{(k_u)}, ..., \underline{h}_{k_s,N_h^{(k_u)}}^{(k_u)} \right]^T, \quad k_s = 1,...,N_s, k_u = 1,...,N_u, \qquad (17)$$

der aus den $N_h^{(k_u)}$ Elementen $\underline{h}_{k_T,k_s}^{(k_u)}$, $k_T = 1,...,N_h^{(k_u)}$, $k_s = 1,...,N_s$, $k_u = 1,...,N_u$, besteht, beschrieben. Der Kanalimpulsantwortvektor $\underline{h}_{k_s}^{(k_u)}$ nach Gl. (17) beschreibt einen $N_h^{(k_u)}$ -Wege-Kanal. In Gl. (17) ist $\underline{h}_{k_T,k_s}^{(k_u)}$ ein komplexer Koeffizient eines $k_T$-ten Weges zwischen Sender 202 und $k_u$-tem Kommunikationsendgerät 206. Die Werte der Elemente im Kanalimpulsantwortvektor $\underline{h}_{k_s}^{(k_u)}$ gemäß Gl. (17) hängen von einer Position $k_s$ eines Elements $[\underline{s}]_{k_s}$, $k_s = 1,...,N_s$, im Sendesignalvektor $\underline{s}$ aus Gl. (10) ab. Deshalb beschreibt $\underline{h}_{k_s}^{(k_u)}$ ein zeitvariantes Übertragungsmedium.

Oft ist der Einfluss der Zeitvarianz während der Dauer $T_s$ des Sendesignalvektors $\underline{s}$ nach Gl. (10) in guter Näherung vernachlässigbar. Im Weiteren wird die Kanalimpulsantwort während der Dauer $T_s$ daher als zeitinvariant betrachtet es sei denn, es ist explizit anders angegeben. Die weitere Notation erfolgt daher ohne die explizite Darstellung von $k_s$ beim Kanalimpulsantwortvektor und bei dessen Elementen.

Aus $\underline{h}^{(k_u)}$ gemäß Gl. (17) entsteht eine teilnehmerspezifische $\left(N_s + N_h^{(k_u)} - 1\right) \times N_s$ -Kanalimpulsantwortmatrix in der bekannten Toeplitzform

$$\underline{\mathbf{H}}^{(k_\mathrm{u})} = \begin{bmatrix} \underline{h}_1^{(k_\mathrm{u})} & 0 & \cdots & 0 \\ \underline{h}_2^{(k_\mathrm{u})} & \underline{h}_1^{(k_\mathrm{u})} & \cdots & 0 \\ \vdots & \vdots & & \vdots \\ \underline{h}_{N_h^{(1)}}^{(k_\mathrm{u})} & \underline{h}_{N_h^{(1)}-1}^{(k_\mathrm{u})} & \cdots & 0 \\ 0 & \underline{h}_{N_h^{(1)}}^{(k_\mathrm{u})} & \cdots & 0 \\ \vdots & \vdots & & \vdots \\ 0 & 0 & \cdots & \underline{h}_{N_h^{(1)}}^{(1)} \end{bmatrix}, \quad k_\mathrm{u} = 1,\ldots,N_\mathrm{u}. \tag{18}$$

Mit dem Sendesignalvektor $\underline{\mathbf{s}}$ aus Gl. (10), mit dem Datenvektor $\underline{\mathbf{d}}$ nach Gl. (6), mit der Zuordnungsmatrix $\mathbf{Z}$ und mit der Modulationsmatrix $\underline{\mathbf{M}}$, siehe Gl. (11), sowie mit der teilnehmerspezifischen Kanalimpulsantwortmatrix $\underline{\mathbf{H}}^{(k_u)}$ nach Gl. (18) ergibt sich somit ein ungestörter teilnehmerspezifischer Empfangssignalvektor

$$\tilde{\underline{\mathbf{r}}}^{(k_\mathrm{u})} = \underline{\mathbf{H}}^{(k_\mathrm{u})}\underline{\mathbf{s}} = \underline{\mathbf{H}}^{(k_\mathrm{u})}\underline{\mathbf{M}}\mathbf{Z}\underline{\mathbf{d}} \tag{19}$$

am Ausgang des Übertragungsmediums 204, der $\left(N_\mathrm{s} + N_\mathrm{h}^{(k_\mathrm{u})} - 1\right)$ Elemente hat. Diesem wird am Empfänge-reingang des $k_\mathrm{u}$-ten Kommunikationsendgeräts 206 der teilnehmerspezifische Störsignalvektor $\underline{\mathbf{n}}^{(k_u)}$ mit ebenfalls $\left(N_\mathrm{s} + N_\mathrm{h}^{(k_\mathrm{u})} - 1\right)$ Elementen additiv überlagert. Der teilnehmerspezifische Empfangssignalvektor des $k_\mathrm{u}$-ten Teilnehmers ergibt sich jetzt zu

$$\begin{aligned} \underline{\mathbf{r}}^{(k_\mathrm{u})} &= \underline{\mathbf{H}}^{(k_\mathrm{u})}\underline{\mathbf{s}} + \underline{\mathbf{n}}^{(k_\mathrm{u})} \\ &= \underline{\mathbf{H}}^{(k_\mathrm{u})}\underline{\mathbf{M}}\mathbf{Z}\underline{\mathbf{d}} + \underline{\mathbf{n}}^{(k_\mathrm{u})}. \end{aligned} \tag{20}$$

Der teilnehmerspezifische Störsignalvektor $\underline{\mathbf{n}}^{(k_u)}$ repräsentiert thermisches Rauschen. Mit einer einseitigen spektralen Störleistungsdichte $N_0$ ist eine Kovarianzmatrix des thermischen Rauschens gleich

$$\underline{\mathbf{R}}_\mathrm{n} = \mathrm{E}\left\{\underline{\mathbf{n}}^{(k_\mathrm{u})}\left(\underline{\mathbf{n}}^{(k_\mathrm{u})}\right)^\mathrm{H}\right\} = N_0\mathbf{I}_{\left(N_\mathrm{s}+N_\mathrm{h}^{(k_\mathrm{u})}-1\right)}. \tag{21}$$

Nun wird die Übertragung in der Abwärtsstrecke vom Sender der Basisstation 202 zu allen $N_\mathrm{u}$ Kommunikationsendgeräten 206 zusammenfassend betrachtet. Die nachstehend angegebene mathematische Beschreibung bildet die Grundlage für das Verständnis des erfindungsgemäßen Konzepts. Mit den teilnehmerspezifischen Kanalimpulsantwortmatrizen $\underline{H}^{(k_u)}$, $k_u = 1,...,N_u$ , nach Gl. (18), ergibt sich eine $\left( \left( \sum_{k_u=1}^{N_u} \left( N_s + N_h^{(k_u)} - 1 \right) \right) \times N_u N_s \right)$-Gesamtkanalimpulsantwortmatrix in der Abwärtstrecke zu

$$\underline{H} = \begin{bmatrix} \underline{H}^{(1)} & \mathbf{0}_{\left(N_s + N_h^{(1)} - 1\right) \times N_s} & \cdots & \mathbf{0}_{\left(N_s + N_h^{(1)} - 1\right) \times N_s} \\ \mathbf{0}_{\left(N_s + N_h^{(2)} - 1\right) \times N_s} & \underline{H}^{(2)} & \cdots & \mathbf{0}_{\left(N_s + N_h^{(2)} - 1\right) \times N_s} \\ \vdots & \vdots & \ddots & \vdots \\ \mathbf{0}_{\left(N_s + N_h^{(N_u)} - 1\right) \times N_s} & \mathbf{0}_{\left(N_s + N_h^{(N_u)} - 1\right) \times N_s} & \cdots & \underline{H}^{(N_u)} \end{bmatrix}$$

$$(22)$$

Mit der Bezeichnung $\otimes$ für das Kroneckerprodukt zweier Matrizen, mit der $\left( \left( \sum_{k_u=1}^{N_u} \left( N_s + N_h^{(k_u)} - 1 \right) \right) \times N_u \right) -$ Gesamtstörsignalmatrix

$$\underline{N} = \begin{bmatrix} \underline{n}^{(1)} & \mathbf{0}_{\left(N_s + N_h^{(1)} - 1\right) \times 1} & \cdots & \mathbf{0}_{\left(N_s + N_h^{(1)} - 1\right) \times 1} \\ \mathbf{0}_{\left(N_s + N_h^{(2)} - 1\right) \times 1} & \underline{n}^{(2)} & \cdots & \mathbf{0}_{\left(N_s + N_h^{(2)} - 1\right) \times 1} \\ \vdots & \vdots & \ddots & \vdots \\ \mathbf{0}_{\left(N_s + N_h^{(N_u)} - 1\right) \times 1} & \mathbf{0}_{\left(N_s + N_h^{(N_u)} - 1\right) \times 1} & \cdots & \underline{n}^{(N_u)} \end{bmatrix}$$

$$(23)$$

in der Abwärtstrecke und mit der Gesamtkanalimpulsantwortmatrix in der Abwärtstrecke $\underline{H}$ gemäß Gl. (22), ergibt sich mit Gl. (20) eine $\left( \left( \sum_{k_u=1}^{N_u} \left( N_s + N_h^{(k_u)} - 1 \right) \right) \times N_u \right)$-Gesamtempfangssignalmatrix in der Abwärtstrecke zu

$$\underline{R} = \begin{bmatrix} \underline{r}^{(1)} & \mathbf{0}_{\left(N_s+N_h^{(1)}-1\right)\times 1} & \cdots & \mathbf{0}_{\left(N_s+N_h^{(1)}-1\right)\times 1} \\ \mathbf{0}_{\left(N_s+N_h^{(2)}-1\right)\times 1} & \underline{r}^{(2)} & \cdots & \mathbf{0}_{\left(N_s+N_h^{(2)}-1\right)\times 1} \\ \vdots & \vdots & \ddots & \vdots \\ \mathbf{0}_{\left(N_s+N_h^{(N_u)}-1\right)\times 1} & \mathbf{0}_{\left(N_s+N_h^{(N_u)}-1\right)\times 1} & \cdots & \underline{r}^{(N_u)} \end{bmatrix} = \underline{H} \cdot \left( I_{N_u} \otimes \left( \underline{MZ}\underline{d} \right) \right) + \underline{N}.$$

$$(24)$$

Der mit der Gl. (20) beschriebene Empfangssignalvektor $\underline{r}^{(k_u)}$ ist Ausgangspunkt einer empfängerseitigen Datendetektion. Die Datendetektion kann auf verschiedene Arten erfolgen und wird durch optimale und suboptimale Algorithmen realisiert, von denen hier lediglich einige erwähnt werden sollen.

Wird als Optimalitätskriterium ein maximales Signal-Stör-Verhältnis (engl. Signal to Noise Ratio, SNR) gewählt, so führt eine Annahme von weißem Rauschen zum signalangepassten Filter (engl. Matched Filter, MF) mit einer Schätzmatrix

$$\underline{D}^{(MF,k_u)} = \mathrm{diag}^{-1}\left( \left( \left( \underline{\hat{H}}^{(k_u)}\underline{MZ} \right)^H \left( \underline{\hat{H}}^{(k_u)}\underline{MZ} \right) \right) \left( \left( \underline{\hat{H}}^{(k_u)}\underline{MZ} \right)^H \right), \quad k_u = 1,\ldots,N_u. \quad (25)$$

In Gl. (25) ist $\underline{\hat{H}}^{(k_u)}$ eine durch eine geeignete Kanalschätzung ermittelte Version der teilnehmerspezifische

Kanalimpulsantwortmatrix $\underline{H}^{(k_u)}$ aus Gl. (18). Dazu wird $\underline{h}_{k_s}^{(k_u)}$ gemäß Gl. (17) beispielsweise von jedem Teilnehmerendgerät geschätzt, so dass jedem Teilnehmerendgerät seine geschätzte Kanalimpulsantwortmatrix $\underline{\hat{H}}^{(k_u)}$ zur Verfügung steht.

Das signalangepasste Filter setzt sich aus der Signalerzeugungsmatrix $\underline{MZ}$ und der geschätzten teilnehmerspezifischen Kanalimpulsantwortmatrix $\underline{\hat{H}}^{(k_u)}$ zusammen. In Gl. (25) dient die Inverse der Diagonalmatrix

$$\mathrm{diag}\left( \left( \left( \underline{\hat{H}}^{(k_u)}\underline{MZ} \right)^H \left( \underline{\hat{H}}^{(k_u)}\underline{MZ} \right) \right) \right)$$ der Energienormierung.

Ein Optimalitätskriterium der Erwartungstreue des Detektors

$$\hat{\mathbf{d}} = \arg\min_{\underline{d}} \left( \left( \underline{r}^{(k_u)} - \underline{\hat{H}}^{(k_u)}\underline{MZ}\underline{d} \right)^H \left( \underline{r}^{(k_u)} - \underline{\hat{H}}^{(k_u)}\underline{MZ}\underline{d} \right) \right) \quad (26)$$

führt zum Zero-Forcing Blockentzerrer (engl. Zero Forcing Block Linear Equalizer, ZF-BLE) mit der Schätzmatrix

$$\underline{D}^{(\text{ZF-BLE},k_u)} = \left(\left(\underline{\hat{H}}^{(k_u)}\underline{MZ}\right)^{\mathsf{H}} \underline{\hat{H}}^{(k_u)}\underline{MZ}\right)^{-1} \left(\underline{\hat{H}}^{(k_u)}\underline{MZ}\right)^{\mathsf{H}}, \quad k_u = 1,\ldots,N_u. \qquad (27)$$

Im Unterschied zum MF unterdrückt der ZF-BLE den Einfluss von Intersymbolinterferenz und Vielfachzugriffsinterferenz. Ein Optimalitätskriterium des minimalen mittleren quadratischen Schätzfehlers führt auf den MMSE-BLE (engl. Minimum Mean Square Error Block Linear Equalizer) mit der Schätzmatrix

$$\underline{D}^{(\text{MMSE-BLE},k_u)} = \left(\left(\underline{\hat{H}}^{(k_u)}\underline{MZ}\right)^{\mathsf{H}} \underline{\hat{H}}^{(k_u)}\underline{MZ} + \frac{N_0}{\mathcal{E}_d}I_{\left(\sum_{k_u=1}^{N_u}N_d^{(k_u)}\right)}\right)^{-1} \left(\underline{\hat{H}}^{(k_u)}\underline{MZ}\right)^{\mathsf{H}}, \qquad (28)$$
$$k_u = 1,\ldots,N_u.$$

Bei einem geringen SNR ist MMSE-BLE in seinem Verhalten dem MF ähnlich. Bei einem großen SNR geht MMSE-BLE in den ZF-BLE über.

Aus den bisherigen Ausführungen geht hervor, dass die eingesetzten $\left(\left(\sum_{k_u=1}^{N_u}N_d^{(k_u)}\right) \times N_s\right)$-Schätzma-

trizen $\underline{D}^{(\cdot,k_u)}$, $k_u = 1,\ldots,N_u$, folgende Struktur haben:

$$\underline{D}^{(\cdot,k_u)} = \underline{N}^{(\cdot,k_u)} \cdot \underline{S}^{\mathsf{H}} \cdot \underline{\hat{H}}^{(k_u)\mathsf{H}}, \quad k_u = 1,\ldots,N_u,. \qquad (29)$$

Die Notation $(.,k_u)$ bezeichnet die Schätzmatrix des $k_u$-ten Teilnehmers, der den linearen Algorithmus ".", z.B. MF, ZF-BLE, MMSE-BLE oder Rake, zur Datendetektion verwendet. Im linearen Algorithmus zur Datendetektion wird mit $\underline{\hat{H}}^{(k_u)\mathsf{H}}$ zuerst die auf den teilnehmerspezifischen Kanalimpulsantwortvektor $\underline{h}^{(k_u)}$ angepasste Filterung durchgeführt. Danach erfolgt mit $\underline{S}^{\mathsf{H}}$ die auf die Signalerzeugungsmatrix im Sender angepasste Filterung. Der Signalvektor am Ausgang von $\underline{S}^{\mathsf{H}}$ wird danach einem datendetektorspezifischen Filter zugeführt. Dieses Filter wird durch die quadratische $\left(\left(\sum_{k_u=1}^{N_u}N_d^{(k_u)}\right) \times \left(\sum_{k_u=1}^{N_u}N_d^{(k_u)}\right)\right)$-Normalmatrix $\underline{N}^{(\cdot,k_u)}$ beschrieben. Es gilt

$$\underline{N}^{(\text{MF},k_u)} = \text{diag}^{-1}\left(\underline{S}^{\mathsf{H}}\underline{\hat{H}}^{(k_u)\mathsf{H}}\underline{\hat{H}}^{(k_u)}\underline{S}\right), \quad k_u = 1,\ldots,N_u,$$

$$\underline{N}^{(\text{ZF-BLE},k_u)} = \left(\underline{S}^{\mathsf{H}}\underline{\hat{H}}^{(k_u)\mathsf{H}}\underline{\hat{H}}^{(k_u)}\underline{S}\right)^{-1}, \quad k_u = 1,\ldots,N_u,$$

$$\underline{N}^{(\text{MMSE-BLE},k_u)} = \left(\underline{S}^{\mathsf{H}}\underline{\hat{H}}^{(k_u)\mathsf{H}}\underline{\hat{H}}^{(k_u)}\underline{S} + \frac{N_0}{\mathcal{E}_d}I_{\left(\sum_{k_u=1}^{N_u}N_d^{(k_u)}\right)}\right)^{-1}, \quad k_u = 1,\ldots,N_u.$$

$$(30)$$

Eine empfängerseitige Realisierung der Gln. (30) bedeutet bzgl. der Signalverarbeitung eines Teilnehmerendgeräts u. U. erheblichen Aufwand, insbesondere aufgrund der Matrixinversionen bei ZF-BLE bzw. MMSE-BLE.

Der Ausgangspunkt für das erfindungsgemäße Konzept ist die Signalerzeugungsmatrix $\underline{S}$ gemäß Gl. (11). Denn die Reduktion der Aufwände in den Empfängern der Kommunikationsendgeräte kann durch Änderung der Signalerzeugungsmatrix $\underline{S}$ nach Gl. (11) erreicht werden. Das Ziel dieser Änderung der Signalerzeugungsmatrix $\underline{S}$ ist es, den ungestörten Anteil des teilnehmerspezifischen Empfangssignalvektors $\underline{r}^{(k_u)}$, $k_u = 1,...,N_u$, möglichst von Intersymbolinterferenz und Vielfachzugriffsinterferenz zu befreien. Eine neue Signalerzeugungsmatrix $\underline{S}^{(JT)}$ berücksichtigt dazu die Gesamtkanalimpulsantwortmatrix $\underline{H}$ gemäß Gl. (22) auf geeignete Weise, um

$$\underline{S} \stackrel{!}{=} \underline{H}^{(k_u)}\underline{S}^{(JT)}, \quad k_u = 1,...,N_u, \tag{31}$$

am Empfängereingang eines jeden Kommunikationsendgeräts $k_u$, $k_u = 1,...,N_u$, exakt oder näherungsweise zu erreichen. Der teilnehmerspezifische Empfangssignalvektor ergibt sich in diesem Fall zu

$$\underline{r}^{(k_u)} = \underline{H}^{(k_u)}\underline{S}^{(JT)}\underline{d} + \underline{n}^{(k_u)} = \underline{S}\underline{d} + \underline{n}^{(k_u)}, \quad k_u = 1,...,N_u. \tag{32}$$

Mit der $N_s \times N_u N_s$-Kombinationsmatrix $\mathbf{K}$ nach Gl. (12), mit der $N_u N_s \times \sum_{k_u=1}^{N_u} N_d^{(k_u)}$-Zuordnungsmatrix $\mathbf{Z}$ aus Gl. (13), mit der in Gl. (15) gegebenen $N_u N_s \times N_u N_s$-Modulationsmatrix $\underline{M}$ und mit einer nachstehend noch näher bestimmten $N_u N_s \times N_u N_s$ - Vorverzerrungsmatrix $\underline{V}$ wird

$$\underline{S}^{(JT)} = \mathbf{K} \cdot \underline{V} \cdot \underline{M} \cdot \mathbf{Z} = \mathbf{K} \cdot \left(\underline{V}_2 \cdot V_1\right) \cdot \underline{M} \cdot \mathbf{Z} \tag{33}$$

gewählt, um Gl. (32) bzw. Gl. (33) zu realisieren. Die $N_u N_s \times N_u N_s$-Vorverzerrungsmatrix $\underline{V}$ besteht aus einer reellwertigen $\left(\sum_{k_u=1}^{N_u}\left(N_s + N_h^{(k_u)} - 1\right)\right) \times N_u N_s$-Erweiterungsmatrix

$$V_1 = \left[\left[\left(E_{N_h^{(1)}-1}\right)^T \quad I_{N_s}\right] \quad \left[\left(E_{N_h^{(2)}-1}\right)^T \quad I_{N_s}\right] \quad \cdots \quad \left[\left(E_{N_h^{(N_u)}-1}\right)^T \quad I_{N_s}\right]\right]^T \tag{34}$$

und einer von einer geschätzten Version $\underline{\hat{H}}$ der $N_u N_s \times \left(\sum_{k_u=1}^{N_u}\left(N_s + N_h^{(k_u)} - 1\right)\right)$-Gesamtkanalimpulsantwortmatrix $\underline{H}$ nach Gl. (22) abhängigen $N_u N_s \times \left(\sum_{k_u=1}^{N_u}\left(N_s + N_h^{(k_u)} - 1\right)\right)$ – Gewichtsmatrix $\underline{V}_2$, und es gilt

$$\underline{V} = \underline{V}_2 \cdot V_1. \qquad (35)$$

Die $\left(N_h^{(k_u)} - 1\right) \times N_s$ -Matrizen $\mathbf{E}_{N_h^{(k_u)}-1}$, $k_u = 1,...,N_u$, der Erweiterungsmatrix $\underline{V}_1$ können im allgemeinen verschieden realisiert werden. Auf eine besonders geschickte Wahl wird weiter unten noch näher eingegangen.

Die $N_u N_s \times \left( \sum_{k_u=1}^{N_u} \left( N_s + N_h^{(k_u)} - 1 \right) \right)$ -Gewichtsmatrix $\underline{V}_2$ kann ebenfalls auf verschiedene Weisen realisiert werden. Bekannte Lösungen sind das Vorverzerrungsfilter kleinster Quadrate (engl. joint transmission zero forcing block linear equalizer, JT-ZF-BLE)

$$\underline{V}_2^{(\text{JT-ZF-BLE})} = \underline{\hat{H}}^H \left( \underline{\hat{H}}\underline{\hat{H}}^H \right)^{-1} \qquad (36)$$

und das Vorverzerrungsfilter mit minimalem mittlerem quadratischem Schätzfehler (engl. joint transmission minimum mean square error block linear equalizer, JT-MMSE-BLE)

$$\underline{V}_2^{(\text{JT-MMSE-BLE})} = \underline{\hat{H}}^H \left( \underline{\hat{H}}\underline{\hat{H}}^H + \frac{N_0}{\mathcal{E}_d} I_{\left( \sum_{k_u=1}^{N_u} \left( N_s + N_h^{(k_u)} - 1 \right) \right)} \right)^{-1} . \qquad (37)$$

Mit Gl. (33) und Gl. (36) ergibt sich nach Gl. (22) das teilnehmerspezifische Empfangssignal

$$\underline{r}^{(k_u)} = \underline{H}^{(k_u)} \cdot \mathbf{K} \cdot \underline{\hat{H}}^H \cdot \left( \underline{\hat{H}}\underline{\hat{H}}^H \right)^{-1} \cdot V_1 \cdot \underline{M} \cdot \mathbf{Z}\underline{d} + \underline{n}^{(k_u)} . \qquad (38)$$

für JT-ZF-BLE. Mit K gemäß Gl. (12) erhält man

$$\underline{r}^{(k_u)} = \left[ \underline{H}^{(k_u)}\underline{\hat{H}}^{(1)H} \quad ... \quad \underline{H}^{(k_u)}\underline{\hat{H}}^{(N_u)H} \right] \cdot \left( \underline{\hat{H}}\underline{\hat{H}}^H \right)^{-1} \cdot V_1 \cdot \underline{M} \cdot \mathbf{Z}\underline{d} + \underline{n}^{(k_u)} . \qquad (39)$$

Mit Gl. (33) und Gl. (37) folgt nach Gl. (22) das teilnehmerspezifische Empfangssignal

$$\underline{r}^{(k_{\mathrm{u}})} = \underline{H}^{(k_{\mathrm{u}})} \cdot \mathbf{K} \cdot \underline{\hat{H}}^{\mathsf{H}} \cdot \left[ \underline{\hat{H}}\underline{\hat{H}}^{\mathsf{H}} + \frac{N_0}{\mathcal{E}_{\mathrm{d}}} \mathbf{I}_{\left( \sum_{k_{\mathrm{u}}=1}^{N_{\mathrm{u}}} \left( N_{\mathrm{s}} + N_{\mathrm{h}}^{(k_{\mathrm{u}})} - 1 \right) \right)} \right]^{-1} \cdot \mathbf{V_1} \cdot \underline{M} \cdot \mathbf{Z}\underline{d} + \underline{n}^{(k_{\mathrm{u}})}.$$

$$(40)$$

für JT-MMSE-BLE. Mit **K** gemäß Gl. (12) ergibt sich

$$\underline{r}^{(k_{\mathrm{u}})} = \left[ \underline{H}^{(k_{\mathrm{u}})}\underline{\hat{H}}^{(1)\mathsf{H}} \quad \cdots \quad \underline{H}^{(k_{\mathrm{u}})}\underline{\hat{H}}^{(N_{\mathrm{u}})\mathsf{H}} \right] \cdot \left[ \underline{\hat{H}}\underline{\hat{H}}^{\mathsf{H}} + \frac{N_0}{\mathcal{E}_{\mathrm{d}}} \mathbf{I}_{\left( \sum_{k_{\mathrm{u}}=1}^{N_{\mathrm{u}}} \left( N_{\mathrm{s}} + N_{\mathrm{h}}^{(k_{\mathrm{u}})} - 1 \right) \right)} \right]^{-1}$$
$$\cdot \mathbf{V_1} \cdot \underline{M} \cdot \mathbf{Z}\underline{d} + \underline{n}^{(k_{\mathrm{u}})}.$$

$$(41)$$

Sowohl JT-ZF-BLE als auch JT-MMSE-BLE beinhaltenen den Term $\underline{\hat{H}}^{\mathsf{H}}$, der die auf die Gesamtkanalimpulsantwortmatrix angepasste Filterung beschreibt. Vernachlässigt man zunächst die in JT-ZF-BLE und JT-MMSE-BLE ebenfalls enthaltenen inversen Matrizen, so gelangt man zum signalangepasste Vorverzerrungsfilter (engl. joint transmission matched filter, JT-MF)

$$\underline{V}_2^{(\text{JT-MF})} = \underline{\hat{H}}^{\mathsf{H}} \qquad (42)$$

Mit Gl. (33) und Gl. (42) folgt für JT-MF das teilnehmerspezifische Empfangssignal nach Gl. (22)

$$\underline{r}^{(k_{\mathrm{u}})} = \underline{H}^{(k_{\mathrm{u}})} \cdot \mathbf{K} \cdot \underline{\hat{H}}^{\mathsf{H}} \cdot \mathbf{V_1} \cdot \underline{M} \cdot \mathbf{Z}\underline{d} + \underline{n}^{(k_{\mathrm{u}})}. \qquad (43)$$

Mit **K** gemäß Gl. (12) ergibt sich

$$\underline{r}^{(k_{\mathrm{u}})} = \left[ \underline{H}^{(k_{\mathrm{u}})}\underline{\hat{H}}^{(1)\mathsf{H}} \quad \cdots \quad \underline{H}^{(k_{\mathrm{u}})}\underline{\hat{H}}^{(N_{\mathrm{u}})\mathsf{H}} \right] \cdot \mathbf{V_1} \cdot \underline{M} \cdot \mathbf{Z}\underline{d} + \underline{n}^{(k_{\mathrm{u}})}. \qquad (44)$$

Es muss aber festgestellt werden, dass eine senderseitige Realisierung von JT-ZF-BLE und JT-MMSE-BLE in Mehrteilnehmersystemen mit einem erheblichen Aufwand verbunden sind. Der Aufwand rührt im Wesentlichen von der Matrixinversion her, siehe Gl. (40) bzw. Gl. (41). So bliebe letztlich nur die Realisierung aufwändiger Datendetektoren in den Empfängern der Kommunikationsendgeräte gemäß den Gln. (30), um den Einfluss von ISI und MAI zu mildern.
Wünschenwert wären jedoch einfache Empfängerstrukturen und eine aufwandsgünstige Realisierung des gemeinsamen Sendens.
Die Aufgabe der vorliegenden Erfindung besteht somit darin, ein Konzept zum gemeinsamen Senden bereitzustellen, welches sich aufwandsgünstig realisieren lässt und einfache Teilnehmerendgeräte ermöglicht.
Diese Aufgabe wird mittels einer Vorrichtung mit den Merkmalen gemäß Anspruch 1 und einem Verfahren nach Anspruch 16 gelöst.

Eine aufwandsgünstige Realisierung des gemeinsamen Sendens im Falle von JT-ZF-BLE und JT-MMSE-BLE setzt voraus, dass eine Inversion der quadratischen

$$\left(\sum_{k_u=1}^{N_u}\left(N_s + N_h^{(k_u)} - 1\right)\right) \times \left(\sum_{k_u=1}^{N_u}\left(N_s + N_h^{(k_u)} - 1\right)\right)\text{-Matrix}$$

$$\underline{J} = \begin{cases} \hat{\underline{H}}\hat{\underline{H}}^H & \text{für} \quad \text{JT-ZF-BLE} \\ \hat{\underline{H}}\hat{\underline{H}}^H + \dfrac{N_0}{\mathcal{E}_d}\mathbf{I}_{\left(\sum_{k_u=1}^{N_u}\left(N_s + N_h^{(k_u)}-1\right)\right)} & \text{für} \quad \text{JT-MMSE-BLE} \end{cases} \quad , \qquad (45)$$

Die im Nachfolgenden als Kanalautokorrelationsmatrix bezeichnet werden soll, vermieden wird. Ausgehend von Gl. (39) bzw. von Gl. (41) erhält man einen vorverzerrten Sendesignalvektor

$$\underline{v} = \underline{J}^{-1} \cdot V_1 \cdot \underline{M} \cdot Z\underline{d} \qquad (46)$$

bzw.

$$\underline{J}\underline{v} = V_1 \cdot \underline{M} \cdot Z\underline{d} \qquad (47)$$

Die Erkenntnis der vorliegenden Erfindung besteht nun darin, die Vorverzerrung, die eine Matrixinversion der Kanalautokorrelationsmatrix $\underline{J}$ notwendig macht, d.h. Gl. (46) bzw. Gl. (47), statt im Zeitbereich aufwandsgünstiger im Frequenzbereich zu realisieren. Dazu kann die sich aus der geschätzten Toeplitz-Gesamtkanalimpulsantwortmatrix $\hat{\underline{H}}$ ergebende hermitesche Kanalautokorrelationsmatrix $\underline{J}$ geschickt durch eine Mehrzahl teilnehmerspezifischer, zirkulanter Kanalautokorrelationsmatrizen $\tilde{\underline{J}}^{(\mathrm{circ},k_u)}$ angenähert werden. Ebenso kann die inverse Kanalautokorrelationsmatrix $\underline{J}^{-1}$ oder eine Frequenztransformierte davon geschickt durch eine Mehrzahl teilnehmerspezifischer, inverser, zirkulanter Kanalautokorrelationsmatrizen $\tilde{\underline{J}}^{(\mathrm{circ},k_u)-1}$ oder Frequenztransformierter $\tilde{\underline{J}}_F^{(k_u)-1}$ davon angenähert werden.

Eine Matrix $\underline{A}_{circ} \in C^{N \times N}$ wird als zirkulante Matrix bezeichnet, wenn sie der folgenden Form genügt.

$$\underline{A}_{cir} = \begin{pmatrix} a_1 & a_N & a_{N-1} & & a_2 \\ a_2 & a_1 & a_N & \ddots & \vdots \\ \vdots & a_2 & a_1 & \ddots & a_{N-1} \\ \vdots & \vdots & a_2 & \ddots & a_N \\ a_N & a_{N-1} & \vdots & & a_1 \end{pmatrix} \qquad (48)$$

Die Matrix $\underline{A}_{circ}$ kann mittels DFT- und IDFT-Operatoren gemäß

$$\underline{A}_{circ} = \underline{F}_N^{-1} \Lambda\left(\underline{A}_{circ}[:,1]\right)\underline{F}_N \qquad (49)$$

mit $\underline{A}_{circ}[:,1]=(a_1,a_2,...,a_N)^T \in C^N$ dargestellt werden, wobei $\underline{A}_{circ}[:,1]$ den ersten Spaltenvektor der Matrix $\underline{A}_{circ}$ bedeutet. $\underline{F}_N$ bedeutet eine N-Punkt DFT Matrix, die für jeden Vektor $\mathbf{x} \in C^N$ gemäß

$$\left(\underline{F}_N x\right)_k = \sum_{n=0}^{N-1} x(n)e^{j\frac{2\pi kn}{N}}, k = 0,...,N-1 \qquad (50)$$

definiert ist. $\underline{F}_N^{-1}$ ist die N-Punkt Inverse DFT Matrix, die für jeden Vektor $\mathbf{x} \in C^N$ gemäß

$$\left(\underline{F}_N^{-1} x\right)_k = \frac{1}{N}\left(\underline{F}_N^* x\right)_k = \frac{1}{N}\sum_{n=0}^{N-1} x(n)e^{-j\frac{2\pi kn}{N}} \qquad (51)$$

definiert ist. AN(.) bezeichnet eine Diagonalmatrix, die für jeden Vektor $\mathbf{x} \in C^N$ gemäß

$$\Lambda_N(\mathbf{x}) = \mathrm{diag}(\underline{F}_N \mathbf{x}) \qquad (52)$$

definiert ist. Damit kann die Inverse der zirkulanten Matrix $\underline{A}_{circ}$ gemäß

$$A_{circ}^{-1} = F_N^{-1} \Lambda_N^{-1}\left(A_{circ}[:,1]\right)F_N \qquad (53)$$

dargestellt werden. Aus der Gl. (53) wird dem Fachmann ersichtlich, dass das Lösen eines linearen Gleichungssystems, wie z. B. Gl. (47), mit einer zirkulanten Matrix im Frequenzbereich deutlich aufwandsgünstiger realisiert werden kann als im Zeitbereich, da für $\Lambda_N^{-1}\left(\mathbf{A}_{circ}[:,1]\right)$ lediglich die Hauptdiagonalelemente von $\Lambda_N(\mathbf{A}_{circ}[:,1])$ invertiert zu werden brauchen. Diese Erkenntnis macht sich die vorliegende Erfindung zunutze. Da die Kanalautokorrelationsmatrix $\underline{J}$ jedoch eine hermetische Matrix ist, nähern Ausführungsbeispiele der vorliegenden Erfindung die Kanalautokorrelationsmatrix $\underline{J}$ durch eine zirkulante Kanalautokorrelationsmatrix $\underline{J}_{circ}$ an.

Um dem Einschwingen des Mehrwegekanals 204 Rechnung zu tragen, wird vorgeschlagen, die für $\mathbf{V}_1$ nach Gl. (34) verwendeten $\left(N_h^{(k_u)} - 1\right) \times N_s$-Matrizen $\mathbf{E}_{N_h^{(k_u)}-1}$, $k_u = 1,...,N_u$, derart zu wählen, dass die jeweils $\left(N_h^{(k_u)} - 1\right)$ letzten Elemente eines jeden teilnehmerspezifischen Ausgangssignalvektors $\underline{m}^{(k_u)}$ (Gl. (15)) der Modulationsmatrix vor den Beginn dieses teilnehmerspezifischen Ausgangssignalvektors $\underline{m}^{(k_u)}$ der Modulationsmatrix gestellt werden und somit eine zyklische Erweiterung um eine Präfix realisiert wird. Die zyklische Erweiterung des teilneh-

merspezifischen Ausgangssignalvektors $\underline{m}^{(k_u)}$ der Modulationsmatrix ermöglicht also eine Verringerung des Signalverarbeitungsaufwands im Sender, was sich insbesondere für größere Teilnehmerzahlen $N_u$ vorteilhaft erweisen kann.

Einzelheiten über das erfindungsgemäße Konzept werden nachfolgend anhand der beiliegenden Figuren detailliert erläutert. Es zeigen:

Fig. 1      eine schematische Darstellung eines digitalen Mobilfunksystems mit Vielfachzugriff;

Fig. 2      eine schematische Darstellung eines zeitdiskreten Basisbandmodells der Abwärtsstrecke;

Fig. 3      ein schematisches Blockdiagramm einer Vorrichtung zum Senden eines Sendesignalvektors gemäß einem Ausführungsbeispiel der vorliegenden Erfindung;

Fig. 4      eine schematische Darstellung einer zyklischen Erweiterung teilnehmerspezifischer Sendesignal- vektoren gemäß einem Ausführungsbeispiel der vor- liegenden Erfindung;

Fig. 5      eine Einrichtung zum Erzeugen einer diagonalen, frequenztransformierten, näherungsweise inversen Vorverzerrungsdiagonalmatrix, gemäß einem Ausfüh- rungsbeispiel der vorliegenden Erfindung;

Fig. 6      einen Vergleich von Aufwänden im Sender einer Basisstation von JT-ZF-BLE realisiert im Zeitbe- reich mittels einer Cholesky-Zerlegung und im

Fig. 7      Frequenzbereich in Abhängigkeit von einer Block- größe; eine Darstellung einer Verringerung der Aufwände durch ein erfindungsgemäßes JT-ZF-BLE Verfahren zum gemeinsamen Senden;

Fig. 8      ein Vergleich von Aufwänden zwischen bekannten und einem erfindungsgemäßen JT-MMSE-BLE Verfah- ren;

Fig. 9      eine Darstellung von Sender- und Empfängerstruk- tur mit und ohne gemeinsames Senden;

Fig. 10     Uncodierte Bitfehlerverhältnisse in der UMTS/WCDMA-Abwärtsstrecke; Dienst mit einer Da- tenrate 384kbit/s; Kanalmodell COST207-TU;

Fig. 11     Uncodierte Bitfehlerverhältnisse in der UMTS/WCDMA-Abwärtsstrecke; Dienst mit der Daten- rate 384kbit/s; Kanalmodell COST207-BU;

Fig. 12     Uncodierte Bitfehlerverhältnisse in der UMTS/WCDMA-Abwärtsstrecke; CDMA-Spreizcodes mit der Länge zwei; Kanalmodell COST207-TU;

Fig. 13     Uncodierte Bitfehlerverhältnisse in der UMTS/WCDMA-Abwärtsstrecke; CDMA-Spreizcodes mit der Länge zwei; Kanalmodell COST207-BU;

Fig. 14     Uncodierte Bitfehlerverhältnisse in der UMTS/WCDMA-Abwärtsstrecke für ZF-BLE und für JT- ZF-BLE; Dienst mit Datenrate 384kbit/s, ein bis vier Teilnehmer; Testszenario 2 [3G25101];

Fig. 15     Uncodierte Bitfehlerverhältnisse in der UMTS/WCDMA-Abwärtsstrecke für MMSE-BLE und für

Fig. 16     JT-MMSE-BLE; Dienst mit Datenrate 384kbit/s, ein bis vier Teilnehmer; Testszenario 2 [3G25101]; Uncodierte Bitfehlerverhältnisse in der UMTS/WCDMA-Abwärtsstrecke mit und ohne gemeinsa- mes Senden im Frequenzbereich; Dienst mit Daten- rate 384kbit/s, Kanalmodell COST207-TU;

Fig. 17     Uncodierte Bitfehlerverhältnisse in der UMTS/WCDMA-Abwärtsstrecke mit und ohne gemeinsa- mes Senden im Frequenzbereich; Dienst mit Daten- rate 384kbit/s, Kanalmodell COST207-BU;

Fig. 18     einen Einfluss der Geschwindigkeit des Kommunika- tionsendgerätes auf das uncodierte Bitfehlerver- hältnis, UMTS/WCDMA-Abwärtstrecke, CDMA- Spreizcode mit zwei Chips; JT-MMSE-BLE im Fre- quenzbereich, Kanalmodell COST207-TU;

Fig. 19     einen Einfluss der Geschwindigkeit des Kommunika- tionsendgerätes auf das für das uncodierte Bit- fehlerverhältnis von $10^{-2}$ erforderliche Signal- Stör-Verhältnis $10\log_{10}(E_b/N_0)$; UMTS/WCDMA- Abwärtsstrecke; JT-MMSE-BLE im Frequenzbereich, Kanalmodell COST207-TU;

Fig. 20     einen Einfluss der Geschwindigkeit des Kommunika- tionsendgerätes auf das für das uncodierte Bit- fehlerverhältnis von $10^{-2}$ erforderliche Signal- Stör-Verhältnis $10\log_{10}(E_b/N_0)$; MTS/WCDMA- Abwärtsstrecke; JT-ZF-BLE im Frequenzbereich, Ka- nalmodell COST207-BU; und

Fig. 21     Blockdiagram eines Demonstrations-Senders für gemeinsames Senden gemäß einem Ausführungsbei- spiel der vorliegenden Erfindung;

Fig. 22     Blockdiagram eines Messaufbaus zur Evaluierung der Übertragungsqualität unter Einsatz des ge- meinsames Senden im Demonstrations-Sender;

Fig. 23     Übertragungsqualität für COST207-TU und COST207- BU entsprechend Gl. (100);

Fig. 24     Bitfehlerverhältnisse für unter Verwendung von JT über COST207-TU und COST207-BU Kanal abhängig von der Verzögerung entsprechend Gl. (101) für ver- schieden Spreizcodelängen; und

Fig. 25     Bitfehlerverhältnisse für unter Verwendung von JT über COST207-TU und COST207-BU Kanal abhängig von der Verzögerung entsprechend Gl. (101) für ver- schieden Wertigkeiten der Modulation.

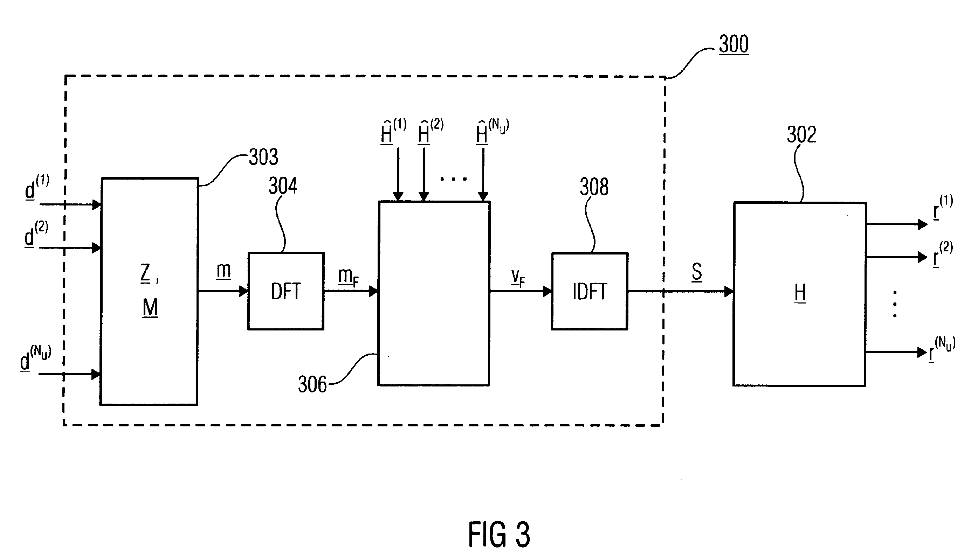

Fig. 3 zeigt ein schematisches Blockdiagramm einer Vorrichtung 300 zum Senden eines vorverzerrten Sendesignalvektors $\underline{V}$, der Datensymbole wenigstens eines teilnehmerspezifischen Datenblocks gemäß Gl. (7) umfasst.

Der vorverzerrte Sendesignalvektor $\underline{V}$ wird über wenigstens einen teilnehmerspezifischen Übertragungskanal 302 mit einer signalverzerrenden Wirkung zu wenigstens einem Teilnehmer gesendet. Dabei kann der wenigstens eine teilnehmerspezifische Übertragungskanal durch wenigstens einen teilnehmerspezifischen Kanalimpulsantwortvektor $\underline{h}_{k_s}^{(k_u)}$ gemäß Gl. (17) dargestellt werden. Die Vorrichtung 300 ist ausgebildet, um die signalverzerrende Wirkung des Übertragungskanals 302 durch eine Vorverzerrung des Ausgangssignalvektors $\underline{m}$ der Modulationsmatrix gemäß Gl. (15) zu kompensieren, wobei die Vorverzerrung basierend auf einer Annäherung einer optimalen Kanalautokorrelationsmatrix $\underline{J}$ durch eine zirkulante Kanalautokorrelationsmatrix $\underline{J}_{circ}$, die von dem wenigstens einen teilnehmerspezifischen Kanalimpulsantwortvektor $\underline{h}_{k_s}^{(k_u)}$ abhängt, im Frequenzbereich durchgeführt wird.

In einer Einrichtung 303 wird der Ausgangssignalvektors $\underline{m}$ gemäß den Gln. (6), (14) und (16) gebildet, so dass $\underline{m}=\underline{MZd}$. Ferner umfasst die Vorrichtung 300 eine Einrichtung 304 zum Transformieren des Ausgangssignalvektors $\underline{m}$ der Modulationsmatrix vom Zeitbereich in den Frequenzbereich, um einen frequenztransformierten Ausgangssignalvektor $\underline{m}_F$ zu erhalten. Der frequenztransformierte Ausgangssignalvektor $\underline{m}_F$ wird einer Einrichtung 306 zum Gewichten des frequenztransformierten Ausgangssignalvektor $\underline{m}_F$ mit einer von der zirkulanten Kanalautokorrelationsmatrix $\underline{J}_{circ}$ abhängigen frequenztransformierten Diagonalmatrix $\underline{\tilde{J}}_F^{-1}$ zugeführt, um am Ausgang der Einrichtung 306 einen frequenztransformierten, vorverzerrten Sensesignalvektor $\underline{v}_F$ zu erhalten. Der frequenztransformierte, vorverzerrte Sendesignalvektor $\underline{v}_F$ wird danach einer Einrichtung 308 zum Transformieren des frequenztransformierten, vorverzerrten Sendesignalvektors $\underline{v}_F$ vom Frequenzbereich in den Zeitbereich zugeführt, um ausgangsseitig den vorverzerrten Sendesignalvektor $\underline{v}$ im Zeitbereich zu erhalten.

Eine Verringerung des arithmetischen Aufwands im Sender kann durch eine geschickte Wahl von $\underline{V}_1$ nach Gl. (34) erreicht werden. Die $\left(N_h^{(k_u)}-1\right)\times N_s$-Matrizen $\mathbf{E}_{N_h^{(k_u)}-1}$, $k_u = 1,...,N_u$, haben die Aufgabe, den Ausgangssignalvektor der Modulationsmatrix um insgesamt $\sum_{k_u=1}^{N_u}\left(N_h^{(k_u)}-1\right)$ Elemente zu erweitern, um dem Einschwingen des Mehrwegekanals Rechnung zu tragen. Es wird vorgeschlagen, die $\left(N_h^{(k_u)} - 1\right) \times N_s$-Matrizen $\mathbf{E}_{N_h^{(k_u)}-1}$, $k_u = 1,...,N_u$, gemäß

$$\mathbf{E}_{N_h^{(k_u)}-1}^{(cyc)} = \left[ \mathbf{0}_{\left(N_h^{(k_u)}-1\right) \times \left(N_s - N_h^{(k_u)}+1\right)} \quad \mathbf{I}_{\left(N_h^{(k_u)}-1\right)} \right], \quad k_u = 1,\ldots,N_u, \tag{55}$$

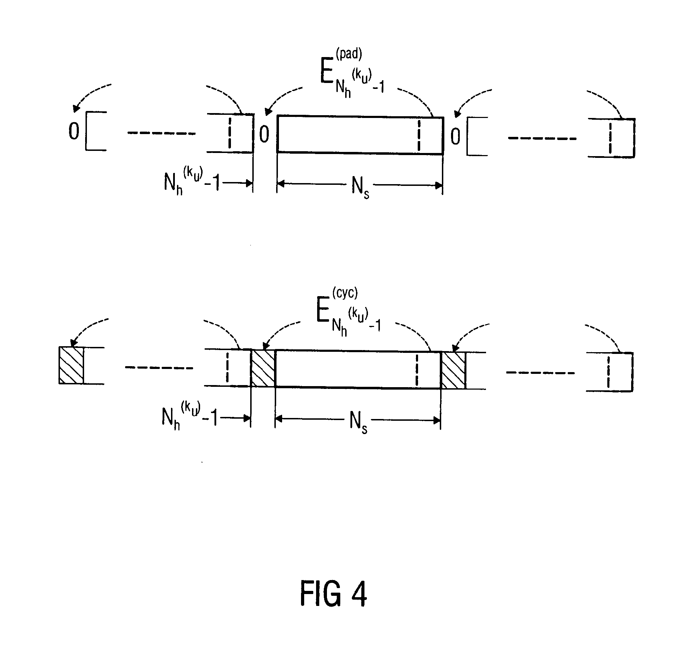

zu wählen. $\mathbf{E}_{N_h^{(k_u)}-1}^{(cyc)}$, stellt die jeweils $\left(N_h^{(k_u)} - 1\right)$ letzten Elemente eines jeden teilnehmerspezifischen Ausgangssignalvektors $\underline{m}^{(k_u)}$ der Modulationsmatrix vor den Beginn dieses teilnehmerspezifischen Ausgangssignalvektors der Modulationsmatrix und realisiert somit eine zyklische Erweiterung um eine Präfix. $\mathbf{E}_{N_h^{(k_u)}-1}^{(cyc)}$ ist schematisch in Fig. 4 dargestellt. Durch die zyklische Erweiterung wird der teilnehmerspezifische Ausgangssignalvektor $\underline{m}^{(k_u)}$ mit $\mathbf{V}_1$ um $N_h^{(k_u)}$, $k_u = 1,...,N_u$, Elemente erweitert. Der Ausgangssignalvektor $\underline{m}=\underline{M}\cdot\underline{Z}\underline{d}$ der Modulationsmatrix hat dann die Länge

$$N_J = \sum_{k_u=1}^{N_u} \left( N_s + N_h^{(k_u)} - 1 \right). \tag{56}$$

Die zyklische Erweiterung des Ausgangssignalvektors $\underline{m}=\underline{M}\cdot\underline{Z}\underline{d}$ der Modulationsmatrix erlaubt die aufwandsgünstige Erzeugung des Sendesignalvektors $\underline{V}$ aus Gl. (46) im Frequenzbereich. Dazu wird zunächst die $N_J \times N_J$-Kanalautokorrelationsmatrix $\underline{J}$ aus Gl. (45) genauer betrachtet. Mit der geschätzten Gesamtkanalimpulsantwortmatrix $\underline{H}$ gemäß Gl. (22) gilt zunächst

$$\underline{\hat{H}}\underline{\hat{H}}^H = \begin{bmatrix} \underline{\hat{H}}^{(1)}\underline{\hat{H}}^{(1)H} & \mathbf{0}_{\left(N_s+N_h^{(1)}-1\right)\times\left(N_s+N_h^{(2)}-1\right)} & \cdots & \mathbf{0}_{\left(N_s+N_h^{(1)}-1\right)\times\left(N_s+N_h^{(N_u)}-1\right)} \\ \mathbf{0}_{\left(N_s+N_h^{(2)}-1\right)\times\left(N_s+N_h^{(1)}-1\right)} & \underline{\hat{H}}^{(2)}\underline{\hat{H}}^{(2)H} & \cdots & \mathbf{0}_{\left(N_s+N_h^{(2)}-1\right)\times\left(N_s+N_h^{(N_u)}-1\right)} \\ \vdots & \vdots & \ddots & \vdots \\ \mathbf{0}_{\left(N_s+N_h^{(N_u)}-1\right)\times\left(N_s+N_h^{(1)}-1\right)} & \mathbf{0}_{\left(N_s+N_h^{(N_u)}-1\right)\times\left(N_s+N_h^{(2)}-1\right)} & \cdots & \underline{\hat{H}}^{(N_u)}\underline{\hat{H}}^{(N_u)H} \end{bmatrix}. \tag{57}$$

Die $N_J \times N_J$-Matrix $\underline{\hat{H}}\underline{\hat{H}}^H$ nach Gl. (57) wird durch ihre Hauptdiagonale dominiert. Für die Inverse $[\underline{\hat{H}}\underline{\hat{H}}^H]^{-1}$ gilt deshalb näherungsweise der Zusammenhang

$$\left(\hat{\underline{H}}\hat{\underline{H}}^{\mathsf{H}}\right)^{-1} \approx \begin{bmatrix} \left(\hat{\underline{H}}^{(1)}\hat{\underline{H}}^{(1)\mathsf{H}}\right)^{-1} & \mathbf{0}_{\left(N_{\mathsf{s}}+N_{\mathsf{h}}^{(1)}-1\right)\times\left(N_{\mathsf{s}}+N_{\mathsf{h}}^{(2)}-1\right)} & \cdots & \mathbf{0}_{\left(N_{\mathsf{s}}+N_{\mathsf{h}}^{(1)}-1\right)\times\left(N_{\mathsf{s}}+N_{\mathsf{h}}^{(N_{\mathsf{u}})}-1\right)} \\ \mathbf{0}_{\left(N_{\mathsf{s}}+N_{\mathsf{h}}^{(2)}-1\right)\times\left(N_{\mathsf{s}}+N_{\mathsf{h}}^{(1)}-1\right)} & \left(\hat{\underline{H}}^{(2)}\hat{\underline{H}}^{(2)\mathsf{H}}\right)^{-1} & \cdots & \mathbf{0}_{\left(N_{\mathsf{s}}+N_{\mathsf{h}}^{(2)}-1\right)\times\left(N_{\mathsf{s}}+N_{\mathsf{h}}^{(N_{\mathsf{u}})}-1\right)} \\ \vdots & \vdots & \ddots & \vdots \\ \mathbf{0}_{\left(N_{\mathsf{s}}+N_{\mathsf{h}}^{(N_{\mathsf{u}})}-1\right)\times\left(N_{\mathsf{s}}+N_{\mathsf{h}}^{(1)}-1\right)} & \mathbf{0}_{\left(N_{\mathsf{s}}+N_{\mathsf{h}}^{(N_{\mathsf{u}})}-1\right)\times\left(N_{\mathsf{s}}+N_{\mathsf{h}}^{(2)}-1\right)} & \cdots & \left(\hat{\underline{H}}^{(N_{\mathsf{u}})}\hat{\underline{H}}^{(N_{\mathsf{u}})\mathsf{H}}\right)^{-1} \end{bmatrix}.$$

$$(58)$$

Für die inverse $N_{\mathsf{J}} \times N_{\mathsf{J}}$-Matrix $\underline{J}^{-1}$ von $\underline{J}$ aus Gl. (45) gilt entsprechend Gl. (58) näherungsweise

$$\underline{J}^{-1} \approx \begin{bmatrix} \underline{J}^{(1)-1} & \mathbf{0}_{\left(N_{\mathsf{s}}+N_{\mathsf{h}}^{(1)}-1\right)\times\left(N_{\mathsf{s}}+N_{\mathsf{h}}^{(2)}-1\right)} & \cdots & \mathbf{0}_{\left(N_{\mathsf{s}}+N_{\mathsf{h}}^{(1)}-1\right)\times\left(N_{\mathsf{s}}+N_{\mathsf{h}}^{(N_{\mathsf{u}})}-1\right)} \\ \mathbf{0}_{\left(N_{\mathsf{s}}+N_{\mathsf{h}}^{(2)}-1\right)\times\left(N_{\mathsf{s}}+N_{\mathsf{h}}^{(1)}-1\right)} & \underline{J}^{(2)-1} & \cdots & \mathbf{0}_{\left(N_{\mathsf{s}}+N_{\mathsf{h}}^{(2)}-1\right)\times\left(N_{\mathsf{s}}+N_{\mathsf{h}}^{(N_{\mathsf{u}})}-1\right)} \\ \vdots & \vdots & \ddots & \vdots \\ \mathbf{0}_{\left(N_{\mathsf{s}}+N_{\mathsf{h}}^{(N_{\mathsf{u}})}-1\right)\times\left(N_{\mathsf{s}}+N_{\mathsf{h}}^{(1)}-1\right)} & \mathbf{0}_{\left(N_{\mathsf{s}}+N_{\mathsf{h}}^{(N_{\mathsf{u}})}-1\right)\times\left(N_{\mathsf{s}}+N_{\mathsf{h}}^{(2)}-1\right)} & \cdots & \underline{J}^{(N_{\mathsf{u}})-1} \end{bmatrix}$$

$$(59)$$

mit einer teilnehmerspezifischen Kanalautokorrelationsmatrix

$$\underline{J}^{(k_{\mathsf{u}})-1} = \begin{cases} \left(\hat{\underline{H}}^{(k_{\mathsf{u}})}\hat{\underline{H}}^{(k_{\mathsf{u}})\mathsf{H}}\right)^{-1} & \text{für} \quad \text{JT-ZF-BLE,} \\ \left(\hat{\underline{H}}^{(k_{\mathsf{u}})}\hat{\underline{H}}^{(k_{\mathsf{u}})\mathsf{H}} + \dfrac{N_0}{\mathcal{E}_{\mathsf{d}}}\mathbf{I}_{\left(N_{\mathsf{s}}+N_{\mathsf{h}}^{(k_{\mathsf{u}})}-1\right)}\right)^{-1} & \text{für} \quad \text{JT-MMSE-BLE,} \end{cases}$$

$$(60)$$

$$k_{\mathsf{u}} = 1,\dots,N_{\mathsf{u}}.$$

Alle teilnehmerspezifischen, inversen $\left(N_{\mathsf{s}} + N_{\mathsf{h}}^{(k_{\mathsf{u}})} - 1\right) \times \left(N_{\mathsf{s}} + N_{\mathsf{h}}^{(k_{\mathsf{u}})} - 1\right)$ Kanalautokorrelations-matrizen $\underline{J}^{(k_{\mathsf{u}})-1}$, $k_{\mathsf{u}} = 1,\dots,N_{\mathsf{u}}$, werden ebenfalls von ihren jeweiligen Hauptdiagonalen dominiert und sind hermitesche Matrizen. Die hermitesche Matrix gemäß Gl. (60) kann, $N_{\mathsf{h}}^{(k_{\mathsf{u}})} \ll N_{\mathsf{s}}$ vorausgesetzt, durch Elemente ihres $N_{\mathsf{h}}^{(k_{\mathsf{u}})}$

-ten Spaltenvektors angenähert werden. Der $N_h^{(k_u)}$-te Spaltenvektor der Matrix $\underline{J}^{(k_u)-1}$, $k_u = 1,..., N_u$, ist mit

$$\underline{\bar{J}}^{(k_u)} = \left(\left[\underline{J}^{(k_u)-1}\right]_{1,N_h^{(k_u)}} \quad \left[\underline{J}^{(k_u)-1}\right]_{2,N_h^{(k_u)}} \quad \cdots \quad \left[\underline{J}^{(k_u)-1}\right]_{N_s + N_h^{(k_u)}-1,N_h^{(k_u)}}\right)^T,$$

$$k_u = 1,\ldots,N_u,$$

$$(61)$$

gegeben. Da die Energie $\left\|\underline{\bar{J}}^{(k_u)}\right\|^2$ von $\underline{\bar{J}}^{(k_u)}$, $k_u = 1,...,N_u$, nach Gl. (61) im Wesentlichen durch die ersten

$2N_h^{(k_u)} - 1$ Elemente von $\underline{\bar{J}}^{(k_u)}$, $k_u = 1,...,N_u$, bestimmt wird, werden nachfolgend alle weiteren Elemente von

$\underline{\bar{J}}^{(k_u)}$, $k_u = 1,....,N_u$, zu Null gesetzt:

$$\underline{\tilde{\bar{J}}}^{(k_u)} = \left(\left[\underline{J}^{(k_u)-1}\right]_{1,N_h^{(k_u)}} \quad \left[\underline{J}^{(k_u)-1}\right]_{2,N_h^{(k_u)}} \quad \cdots \quad \left[\underline{J}^{(k_u)-1}\right]_{2N_h^{(k_u)}-1,N_h^{(k_u)}} \quad 0 \quad \cdots \quad 0\right)^T,$$

$$k_u = 1,\ldots,N_u,$$

$$(62)$$

und mit $\underline{\hat{J}}^{(k_u)}$, $k_u = 1,...,N_u$, die hermiteschen, inversen teilnehmerspezifischen Kanalautokorrelationsmatrizen

$$\underline{\hat{J}}^{(k_u)-1} = \begin{bmatrix} \left[\underline{J}^{(k_u)-1}\right]_{N_h^{(k_u)},N_h^{(k_u)}} & \cdots & \left[\underline{J}^{(k_u)-1}\right]_{1,N_h^{(k_u)}} & 0 & \cdots & 0 \\ \vdots & \ddots & \vdots & \ddots & & \\ \left[\underline{J}^{(k_u)-1}\right]_{2N_h^{(k_u)}-1,N_h^{(k_u)}} & \left[\underline{J}^{(k_u)-1}\right]_{N_h^{(k_u)},N_h^{(k_u)}} & & \vdots & & \ddots \\ 0 & \ddots & & & \ddots & 0 \\ \vdots & & & & \ddots & \left[\underline{J}^{(k_u)-1}\right]_{1,N_h^{(k_u)}} \\ \vdots & & \ddots & \ddots & & \\ 0 & \cdots & 0 & \left[\underline{J}^{(k_u)-1}\right]_{2N_h^{(k_u)}-1,N_h^{(k_u)}} & \cdots & \left[\underline{J}^{(k_u)-1}\right]_{N_h^{(k_u)},N_h^{(k_u)}} \end{bmatrix}$$

$$k_u = 1,\ldots,N_u.$$

$$(63)$$

$\underline{\tilde{\mathbf{J}}}^{(k_u)\text{-}1}$, $k_u = 1,...,N_u$ , gebildet.

Die Übertragung der zyklisch erweiterten Ausgangssignalvektoren $\mathbf{V}_1 \cdot \underline{\mathbf{M}} \cdot \underline{\mathbf{Z}} \underline{\mathbf{d}}$ von $\mathbf{V}_1$ kann entsprechend der zyklischen Erweiterung der Sendesignale im Falle der Übertragung in Systemen mit einer konventionellen OFDM-Komponente durch rechtszirkulante $N_s \times N_s$ -Matrizen

$$\underline{\tilde{\mathbf{J}}}^{(circ,k_u)\text{-}1} = \left[\left[\underline{\tilde{\mathbf{J}}}^{(circ,k_u)\text{-}1}\right]_{\mu,\nu}\right],$$

$$\left[\underline{\tilde{\mathbf{J}}}^{(circ,k_u)\text{-}1}\right]_{\mu,\nu} = \begin{bmatrix} [\underline{\mathbf{J}}]_{N_h^{(k_u)}} & \cdots & [\underline{\mathbf{J}}]_2 & [\underline{\mathbf{J}}]_1 & 0 & \cdots & 0 & [\underline{\mathbf{J}}]_{2N_h^{(k_u)}-1} & \cdots & [\underline{\mathbf{J}}]_{N_h^{(k_u)}+1} \\ \vdots & \ddots & \vdots & \vdots & \ddots & & & 0 & \ddots & \vdots \\ [\underline{\mathbf{J}}]_{2N_h^{(k_u)}-2} & & \vdots & \vdots & \ddots & [\underline{\mathbf{J}}]_1 & & \vdots & & [\underline{\mathbf{J}}]_{2N_h^{(k_u)}-1} \\ [\underline{\mathbf{J}}]_{2N_h^{(k_u)}-1} & \ddots & \vdots & \vdots & & & \ddots & & & 0 \\ 0 & \ddots & \vdots & \vdots & & & & [\underline{\mathbf{J}}]_1 & & \vdots \\ \vdots & & [\underline{\mathbf{J}}]_{2N_h^{(k_u)}-1} & \vdots & & & & & \ddots & 0 \\ 0 & & 0 & [\underline{\mathbf{J}}]_{2N_h^{(k_u)}-1} & & & & & & [\underline{\mathbf{J}}]_1 \\ [\underline{\mathbf{J}}]_1 & & \vdots & 0 & \ddots & & & & & [\underline{\mathbf{J}}]_2 \\ \vdots & \ddots & 0 & \vdots & & [\underline{\mathbf{J}}]_{2N_h^{(k_u)}-1} & & & & \vdots \\ [\underline{\mathbf{J}}]_{N_h^{(k_u)}-1} & \cdots & [\underline{\mathbf{J}}]_1 & 0 & \cdots & 0 & [\underline{\mathbf{J}}]_{2N_h^{(k_u)}-1} & [\underline{\mathbf{J}}]_{2N_h^{(k_u)}-2} & \cdots & [\underline{\mathbf{J}}]_{N_h^{(k_u)}} \end{bmatrix}$$

$$k_u = 1,\ldots,N_u.$$

$$(64)$$

realisiert werden.

In Gl. (64) ist $\left[\underline{\mathbf{J}}^{(k_u)\text{-}1}\right]_{x,N_h^{(k_u)}}$ mit $[\underline{\mathbf{J}}]_x$ abgekürzt. Die Erzeugung von $\underline{\tilde{\mathbf{J}}}^{(circ,k_u)\text{-}1}$ , ,$k_u = 1,....,N_u$,

aus $\underline{\tilde{\tilde{\mathbf{J}}}}^{(k_u)}$ , $k_u = 1,....,N_u$, gemäß Gl. (64) wird abkürzend mit einem Operator $\text{Rcirc}\left(\underline{\tilde{\tilde{\mathbf{J}}}}^{(k_u)}\right)$

$$\underline{\tilde{\mathbf{J}}}^{(circ,k_u)\text{-}1} = \text{Rcirc}\left(\underline{\tilde{\tilde{\mathbf{J}}}}^{(k_u)}\right), \quad k_u = 1,\ldots,N_u,\tag{65}$$

beschrieben. Wendet man eine quadratische $N_s \times N_s$ -Matrix

$$\underline{\mathbf{F}} = \left[[\underline{\mathbf{F}}]_{\mu,\nu}\right],$$

$$[\underline{\mathbf{F}}]_{\mu,\nu} = \frac{1}{\sqrt{N_s}}\exp\left\{-\text{j}\frac{2\pi}{N_s}(\mu-1)(\nu-1)\right\}, \quad \mu,\nu = 1,\ldots,N_s,\tag{66}$$

der diskreten Fourier-Transformation (engl.: discrete Fourier transform, DFT), die im Folgenden DFT-Matrix genannt

wird, auf $\underline{\tilde{J}}^{(\mathrm{circ},k_u)-1}$ $k_u = 1,\ldots,N_u$, nach Gl. (64) an, so entsteht eine $N_s \times N_s$ -Diagonalmatrix $\underline{\tilde{J}}_F^{(k_u)-1}$ gemäß

$$\underline{\tilde{J}}_F^{(k_u)-1} = \underline{F}\,\underline{\tilde{J}}^{(\mathrm{circ},k_u)-1}\underline{F}^H, \quad k_u = 1,\ldots,N_u, \tag{67}$$

wie es bereits anhand der Gln. (48) bis (53) erläutert wurde.

Aufgrund des Zusammenhangs

$$\underline{\tilde{J}}_F^{(k_u)-1} = \left( \underline{F}^H\,\underline{\tilde{J}}^{(\mathrm{circ},k_u)}\underline{F} \right)^{-1}, \quad k_u = 1,\ldots,N_u. \tag{68}$$

ist es zweckmäßig, zuerst die teilnehmerspezifische, zirkulante $N_s \times N_s$ - Kanalautokorrelationsmatrix

$$\underline{\tilde{J}}^{(\mathrm{circ},k_u)} = \mathrm{Rcirc}\left( \underline{\hat{h}}_N^{(k_u)} \right), \quad k_u = 1,\ldots,N_u, \tag{69}$$

im Falle von JT-ZF-BLE aus den ersten $2N_h^{(k_u)} - 1$ Elementen des $N_h^{(k_u)}$ -ten Spaltenvektors

$$\underline{\hat{h}}_N^{(k_u)} = \left( \left[ \left( \underline{\hat{H}}^{(k_u)}\underline{\hat{H}}^{(k_u)H} \right) \right]_{1,N_h^{(k_u)}} \quad \cdots \quad \left[ \left( \underline{\hat{H}}^{(k_u)}\underline{\hat{H}}^{(k_u)H} \right) \right]_{2N_h^{(k_u)}-1,N_h^{(k_u)}} \quad 0 \quad \cdots \quad 0 \right)^T,$$
$$k_u = 1,\ldots,N_u, \tag{70}$$

bzw. im Falle von JT-MMSE-BLE aus den ersten $2N_h^{(k_u)} - 1$ Elementen des $N_h^{(k_u)}$ -ten Spaltenvektors

$$\underline{\hat{h}}_N^{(k_u)} = \left( \left[ \left( \underline{\hat{H}}^{(k_u)}\underline{\hat{H}}^{(k_u)H} \right) \right]_{1,N_h^{(k_u)}} + \frac{N_0}{\mathcal{E}_d} \right) \quad \cdots \quad \left[ \left( \underline{\hat{H}}^{(k_u)}\underline{\hat{H}}^{(k_u)H} + \right) \right]_{2N_h^{(k_u)}-1,N_h^{(k_u)}} + \frac{N_0}{\mathcal{E}_d} \right) \quad 0 \quad \cdots \quad 0 \right)^T,$$
$$k_u = 1,\ldots,N_u, \tag{71}$$

zu berechnen. D. h., die Vorrichtung 300 ist ausgebildet, um in Abhängigkeit des $N_h^{(k_u)}$-ten Spaltenvektors der teilnehmerspezifischen optimalen Kanalautokorrelationsmatrix $\underline{J}^{(k_u)}$ die teilnehmerspezifische, zirkulante ($N_s \times N_s$)- Kanalautokorrelationsmatrix $\underline{\widetilde{J}}^{(k_u)}$ gemäß Gl. (64) zu bilden, wobei

$$
\begin{aligned}
\underline{\widetilde{J}}^{(k_u)} &= \left[ \left[\underline{J}^{(k_u)}\right]_{1,N_h^{(k_u)}} \quad \left[\underline{J}^{(k_u)}\right]_{2,N_h^{(k_u)}} \quad \cdots \quad \left[\underline{J}^{(k_u)}\right]_{2N_h^{(k_u)}-1,N_h^{(k_u)}} \quad 0 \quad \ldots \quad 0 \right]^T, \\
&= \left[ \left[\left[\left(\underline{\hat{H}}^{(k_u)}\underline{\hat{H}}^{(k_u)H}\right)\right]_{1,N_h^{(k_u)}} + x\right] \quad \cdots \quad \left[\left[\left(\underline{\hat{H}}^{(k_u)}\underline{\hat{H}}^{(k_u)H}\right)\right]_{2N_h^{(k_u)}-1,N_h^{(k_u)}} + x\right] \quad 0 \quad \ldots \quad 0 \right]^T,
\end{aligned}
$$

$$
k_u = 1,\ldots,N_u,
$$

$$(72)$$

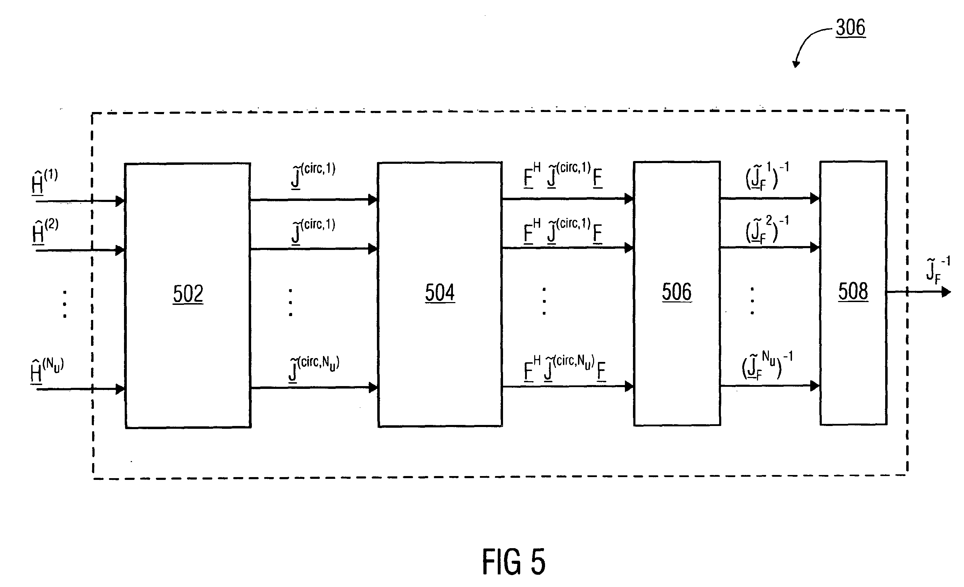

und $\left[\underline{J}^{(k_u)}\right]_{x,N_h^{(k_u)}} = \left[\underline{\widetilde{J}}\right]_x$, $x \in IR_0^+$. Dazu weist die Einrichtung 306 zum Gewichten des frequenztransformierten Sendesignalvektors $\underline{F}^{(N_u)}\underline{MZ}\underline{d}$, wie in Fig. 5 gezeigt ist, eine Einrichtung 502 auf, der eingangsseitig $N_u$ teilnehmerspezifische, geschätzte Kanalimpulsantwortmatrizen $\underline{\hat{H}}^{(k_u)}$ bzw. $N_u$ teilnehmerspezifische, geschätzte Kanalimpulsantvektoren zugeführt werden, um ausgangsseitig nach Gl. (69) $N_u$ teilnehmerspezifische, zirkulante ($N_s \times N_s$)- Kanalautokorrelationsmatrizen $\underline{\widetilde{J}}^{(circ,k_u)}$ zu erhalten. fische, zirkulante ($N_s \times N_s$)- Kanalautokorrelationsmatrizen $\underline{\widetilde{J}}^{(circ,ku)}$ zu erhalten.

Danach wird gemäß Gl. (68) zu jeder der $N_u$ teilnehmerspezifischen, zirkulanten ($N_s \times N_s$) Kanalautokorrelationsmatrizen $\underline{\widetilde{J}}^{(circ,k_u)}$ eine Fourier-transformierte $N_s \times N_s$-Diagonalmatrix $\underline{F}^H \underline{\widetilde{J}}^{(circ,k_u)}\underline{F}$ bestimmt und daraus durch Reziprokwertbildung der Elemente auf der Hauptdiagonalen der Diagonalmatrix $\underline{F}^H\underline{\widetilde{J}}^{(circ,k_u)}\underline{F}$ eine $N_s \times N_s$-Diagonalmatrix

$\underline{\widetilde{J}}_F^{(k_u)-1}$, $k_u = 1,...,N_u$, gemäß Gl. (68) berechnet. D. h., die Vorrichtung 300 ist ausgebildet, um durch eine Transformation der teilnehmerspezifischen, zirkulanten Kanalautokorrelationsmatrix $\underline{\widetilde{J}}^{(circ,k_u)}$ vom Zeitbereich in den Frequenzbereich eine teilnehmerspezifische, frequenztransformierte, zirkulante Kanalautokorrelationsdiagonalmatrix $\underline{F}^H\underline{\widetilde{J}}^{(circ,k_u)}\underline{F}$ zu erhalten und durch Inversion der teilnehmerspezifischen, frequenztransformierten, Kanalautokorrelationsdiagonalmatrix $\underline{F}^H\underline{\widetilde{J}}^{(circ,k_u)}\underline{F}$ eine Inverse $\underline{\widetilde{J}}_F^{(k_u)-1}$ der teilnehmerspezifischen, frequenztransformierten, Kanalautokorrelationsdiagonalmatrix $\underline{F}^H\underline{\widetilde{J}}^{(circ,k_u)}\underline{F}$ zu bilden. Die Frequenztransformation von $\underline{\widetilde{J}}^{(circ,k_u)}$ wird in einer Transformationseinrichtung 504 und die anschließende Diagonalmatrixinversion $(\underline{F}^H\underline{\widetilde{J}}^{(circ,k_u)}\underline{F})^{-1}$ durch Reziprokwertbildung der Hauptdiagonalelemente wird in einer Inversionseinrichtung 506 durchgeführt.

Aus den $N_u$ Inversen $\underline{\widetilde{J}}_F^{(k_u)-1}$ der teilnehmerspezifischen, frequenztransformierten, Kanalautokorrelationsdiagonalmatrizen $\underline{F}^H\underline{\widetilde{J}}^{(circ,k_u)}\underline{F}$, $k_u = 1,...,N_u$, ergibt sich eine inverse $N_uN_s \times N_uN_s$- Gesamtkanalautokorrelationsdiagonalmatrix

$$\tilde{\underline{J}}_F^{-1} \approx \begin{bmatrix} \tilde{\underline{J}}_F^{(1)-1} & \mathbf{0}_{N_s \times N_s} & \cdots & \mathbf{0}_{N_s \times N_s} \\ \mathbf{0}_{N_s \times N_s} & \tilde{\underline{J}}_F^{(2)-1} & \cdots & \mathbf{0}_{N_s \times N_s} \\ \vdots & \vdots & \ddots & \vdots \\ \mathbf{0}_{N_s \times N_s} & \mathbf{0}_{N_s \times N_s} & \cdots & \tilde{\underline{J}}_F^{(N_u)-1} \end{bmatrix}. \tag{73}$$

D. h., die Vorrichtung 300 ist ausgebildet, um, bei einer Mehrzahl von $N_u$ Teilnehmern, für jeden der Teilnehmer die Matrix $\tilde{\underline{J}}_F^{(k_u)-1}$ zu bestimmen und daraus gemäß Gl. (73) eine $N_u N_s \times N_u N_s$ diagonale, frequenztransformierte, näherungsweise inverse Vorverzerrungsdiagonalmatrix $\tilde{\underline{J}}_F^{-1}$ zu bilden.

Mit einer $N_u N_s \times N_u N_s$-DFT-Matrix

$$\underline{F}^{(N_u)} = \begin{bmatrix} \underline{F} & \cdots & \mathbf{0}_{N_s \times N_s} \\ \vdots & \ddots & \vdots \\ \mathbf{0}_{N_s \times N_s} & \cdots & \underline{F} \end{bmatrix} \tag{74}$$

wird das Produkt $\underline{J}^{-1} \cdot \mathbf{V}_1$ ausgehend von Gl. (46) durch $\mathbf{V}_1 \underline{F}^{(N_u)H} \tilde{\underline{J}}_F^{-1} \underline{F}^{(N_u)}$ ersetzt. Der vorverzerrte Ausgangssignalvektor ergibt sich gemäß

$$\underline{\mathbf{v}} = \underbrace{\mathbf{V}_1}_{\text{zyklische Erweiterung}} \cdot \underbrace{\underline{F}^{(N_u)H}}_{N_u \times \text{IDFT}} \cdot \underbrace{\tilde{\underline{J}}_F^{-1}}_{\text{Gewichtung im Frequenzbereich}} \cdot \underbrace{\underline{F}^{(N_u)}}_{N_u \times \text{DFT}} \cdot \underbrace{\underline{M}\underline{Z}\underline{d}}_{\substack{\text{Bestimmen des} \\ \text{Ausgangssignalvektors} \\ \text{von } \underline{M} \text{ im Zeitbereich}}}$$

$$\tag{75}$$

und hat $N_J$ Elemente. Die Erzeugung von $\underline{V}$ geschieht also in folgenden Schritten:

- Zuerst wird der standardkonforme Ausgangssignalvektor $\underline{M}\underline{Z}\underline{d}$ der Modulationsmatrix im Zeitbereich ermittelt.

- Dieser standardkonforme Ausgangssignalvektor $\underline{M}\underline{Z}\underline{d}$ wird im zweiten Schritt mit $\underline{F}^{(N_u)}$ aus Gl. (74) stückweise in den Frequenzbereich transformiert. Dazu sind $N_u$ DFT-Operationen mit $\underline{F}$ nach Gl. (66) erforderlich.

- Dann wird $\tilde{\underline{J}}_F^{-1}$ gebildet und die Gewichtung im Frequenzbereich vorgenommen.

- Im vierten Schritt wird der Ausgangssignalvektor von $\tilde{\underline{J}}_F^{-1}$ durch $N_u$ IDFT-Operationen in den Zeitbereich transformiert.

- Im fünften und letzten Schritt erfolgt die zyklische Erweiterung von $\underline{v}$ mit $\mathbf{V_1}$.

Ausgehend von Gl. (38) gilt für den Sendesignalvektor

$$\underline{s} = \left[\hat{\underline{H}}^{(1)H} \quad \dots \quad \hat{\underline{H}}^{(N_u)H}\right] \cdot \mathbf{V}_1 \cdot \underline{F}^{(N_u)H} \cdot \tilde{\underline{J}}_F^{-1} \cdot \underline{F}^{(N_u)} \cdot \underline{M}\underline{Z}\underline{d}. \tag{76}$$

Die Operation $[\hat{\underline{H}}^{(1)H} \dots \hat{\underline{H}}^{(N_u)H}] \cdot \mathbf{V}_1 \cdot \underline{F}^{(N_u)H}$ gemäß Gl. (76) kann mit der schnellen Faltung im Frequenzbereich realisiert werden. Ausgehend von den geschätzten teilnehmerspezifischen Kanalimpulsantwortvektoren $\underline{\hat{h}}^{(k_u)}$, $k_u = 1,\dots,$ $N_u$, und einer anschließenden Reihenfolgenumkehr der darin enthaltenen Elemente, erhält man rechtszirkulante teilnehmerspezifische Kanalimpulsantwortmatrizen

$$\hat{\underline{H}}^{(\text{circ},k_u)} = \text{Rcirc}\left(\left[\underline{\hat{h}}^{(k_u)}\right]_{N_h^{(k_u)}}, \quad \left[\underline{\hat{h}}^{(k_u)}\right]_{\left(N_h^{(k_u)}-1\right)}, \quad \dots \quad \left[\underline{\hat{h}}^{(k_u)}\right]_1\right), \quad k_u = 1,\dots,N_u, \tag{77}$$

Damit ergibt sich mit Gl. (76) ein auf $N_u N_s$ Elemente verkürzter Sendesignalvektor

$$\underline{s}' = \left[\hat{\underline{H}}^{(\text{circ},1)H} \quad \dots \quad \hat{\underline{H}}^{(\text{circ},N_u)H}\right] \cdot \underline{F}^{(N_u)H} \cdot \tilde{\underline{J}}_F^{-1} \cdot \underline{F}^{(N_u)} \cdot \underline{M}\underline{Z}\underline{d}. \tag{78}$$

Da

$$\underline{F}^H \hat{\underline{H}}_F^{(k_u)H} = \hat{\underline{H}}^{(\text{circ},k_u)H} \underline{F}^H, \quad k_u = 1,\dots,N_u, \tag{79}$$

gilt, weil $\hat{\underline{H}}^{(\text{circ},k_u)}$ eine zirkulante Matrix ist, folgt aus Gl. (78)

$$\underline{s}' = \underbrace{\underline{F}^H}_{1 \times \text{IDFT}} \cdot \underbrace{\left[\hat{\underline{H}}_F^{(1)H} \quad \dots \quad \hat{\underline{H}}_F^{(N_u)H}\right] \cdot \tilde{\underline{J}}_F^{-1}}_{\text{Gewichtung im Frequenzbereich}} \cdot \underbrace{\underline{F}^{(N_u)}}_{N_u \times \text{DFT}} \cdot \underbrace{\underline{M}\underline{Z}\underline{d}}_{\substack{\text{Bestimmen des} \\ \text{Ausgangssignalvektors} \\ \text{von } \underline{M} \text{ im Zeitbereich}}}. \tag{80}$$

Eine erfindungsgemäß aufwandsgünstige Realisierung der Signalerzeugung kann gemäß Gl. (80) in folgenden Schritten erfolgen:

- Zuerst wird mittels der Einrichtung 303 der standardkonforme Ausgangssignalvektor $\underline{m} = \underline{M}\underline{Z}\underline{d}$ der Modulationsmatrix im Zeitbereich ermittelt.

- Dieser standardkonforme Ausgangssignalvektor $\underline{m}$ wird in einem zweiten Schritt mit $\underline{F}^{(N_u)}$ aus Gl. (74) mittels der Einrichtung 304 zum Transformieren des Ausgangssignalvektors $\underline{m}$ der Modulationsmatrix vom Zeitbereich in den Frequenzbereich stückweise in den Frequenzbereich transformiert. Dazu sind $N_u$ DFT-Operationen mit $\underline{F}$ nach Gl. (66) erforderlich.

- Dann wird mittels der Einrichtung 306 zum Gewichten $\left[\underline{\hat{H}}_F^{(1)H} \quad \dots \quad \underline{\hat{H}}_F^{(N_u)H}\right] \cdot \underline{\tilde{J}}_F^{-1}$ gebildet und die Gewichtung im Frequenzbereich vorgenommen.

- In einem vierten Schritt wird mittels der Einrichtung 308 zum Transformieren des Vektors $\underline{v}_F$ vom Frequenzbereich in den Zeitbereich der Ausgangssignalvektor von $\left[\underline{\hat{H}}_F^{(1)H} \quad \dots \quad \underline{\hat{H}}_F^{(N_u)H}\right] \cdot \underline{\tilde{J}}_F^{-1}$ durch eine IDFT-Operation in den Zeitbereich transformiert, um den vorverzerrten Vektor $\underline{s}'$ zu erhalten.

Der Aufwand des erfindungsgemäßen Verfahrens zum gemeinsamen Senden ist durch den Aufwand der DFT bzw. IDFT dominiert, für die aufwandsgünstige Realisierungen existieren. Sie gehören zum heutigen Stand der Technik und werden hier aus diesem Grund nicht weiter vertieft. Es wird im Nachfolgenden von einer aufwandsgünstigen Mixed-Radix-FFT ausgegangen, um den Aufwand des gemeinsamen Sendens abzuschätzen. Der Mixed-Radix-FFT Algorithmus geht von einer Primfaktorzerlegung der zu transformierenden Länge $N_s$ in die voneinander unterschiedliche Primfaktoren $p_{k_p}$ aus, die der Beziehung

$$\prod_{k_p}\left(p_{k_p}^{N_J}\right)^{e_{k_p}^{N_J}} \overset{!}{=} N_s, \quad k_p = 1,\dots,N_p, e_{k_p} \in \mathbb{N} \tag{81}$$

genügen. Hinsichtlich eines Implementierungsaufwandes ist vorteilhaft, sowohl eine Anzahl $N_p$ voneinander unterschiedlicher Primfaktoren $p_{k_p}$, $k_p = 1,\dots,N_p$, als auch das Wert vom maximalen Primfaktor $p_{k_p}$, $k_p = 1,\dots,N_p$' gering zu halten.
Der Aufwand der DFT ist gleich dem Aufwand IDFT und umfasst für den Mixed-Radix-FFT Algorithmus

$$\mathcal{A}^{(\text{mixed-radix})}(N_s) \approx \prod_{k_p=1}^{N_p}\left(p_{k_p}^{(N_J)}\right)^{e_{k_p}^{(N_J)}} \sum_{k_p=1}^{N_p} e_{k_p}^{(N_J)} p_{k_p}^{(N_J)}$$

$$\approx N_s \sum_{k_p=1}^{N_p} e_{k_p}^{(N_J)} p_{k_p}^{(N_J)} \tag{82}$$

arithmetische, komplexwertige Operationen.
Zur Lösung des Gleichungssystems gemäß Gl. (80) wird Kenntnis des Vektors $\underline{MZd}$ und der Matrix $\left[\underline{\hat{H}}_F^{(1)H} \quad \dots \quad \underline{\hat{H}}_F^{(N_u)H}\right] \cdot \underline{\tilde{J}}_F^{-1}$ benötigt. Insgesamt werden zur Bestimmung des Vektors $\underline{M} \cdot \underline{Zd}$

$$\mathcal{A}^{(\mathbf{V}_1 \cdot \underline{\mathbf{M}} \cdot \underline{\mathbf{Z}} \underline{\mathbf{d}})} \approx 2\left(N_u N_s\right)^2 \tag{83}$$

arithmetische, komplexwertige Operationen gebraucht. Zum Ermitteln von $\widetilde{\underline{\mathbf{J}}}_F^{-1}$ nach Gl. (73) sind wegen Gl. (69), Gl. (70), Gl. (71) und Gl. (72) für den Fall von JT-ZF-BLE insgesamt

$$\mathcal{A}^{\left(\widetilde{\underline{\mathbf{J}}}_F^{-1}, \text{JT-ZF-BLE}\right)} \approx \sum_{k_u=1}^{N_u} N_h^{(k_u)}\left(N_h^{(k_u)} + 2\right) + N_u \mathcal{A}^{(\text{mixed-radix})}\left(N_s\right) \tag{84}$$

bzw. für den Fall von JT-MMSE-BLE Fall insgesamt

$$\mathcal{A}^{\left(\widetilde{\underline{\mathbf{J}}}_F^{-1}, \text{JT-MMSE-BLE}\right)} \approx \sum_{k_u=1}^{N_u} N_h^{(k_u)}\left(N_h^{(k_u)} + \frac{5}{2}\right) + N_u \mathcal{A}^{(\text{mixed-radix})}\left(N_s\right) \tag{85}$$

arithmetische, komplexwertige Operationen notwendig. Zum Erzeugen von $\left[\hat{\underline{\mathbf{H}}}_F^{(1)\mathrm{H}} \quad \cdots \quad \hat{\underline{\mathbf{H}}}_F^{(N_u)\mathrm{H}}\right]$ aus Gl. (80) sind mit Gl. (77) und mit Gl. (79)

$$\mathcal{A}^{\left(\left[\hat{\underline{\mathbf{H}}}_F^{(1)\mathrm{H}} \quad \cdots \quad \hat{\underline{\mathbf{H}}}_F^{(N_u)\mathrm{H}}\right]\right)} \approx \frac{N_u N_s}{2} + N_u \mathcal{A}^{(\text{mixed-radix})}\left(N_s\right) \tag{86}$$

arithmetische, komplexwertige Operationen notwendig.

Zum Erzeugen des Sendesignalvektors entsprechend Gl. (80) sind im Fall von JT-ZF-BLE mit Gl. (82), mit G1 . (83), mit Gl. (84) und mit Gl. (86) insgesamt

$$\mathcal{A}^{(\text{JT-ZF-BLE})} \approx N_u\left(\frac{N_s}{2} + 1\right) + \left(2N_u + 1\right)N_s \sum_{k_p=1}^{N_p} e_{k_p}^{(N_J)} p_{k_p}^{(N_J)}$$
$$+ \sum_{k_u=1}^{N_u} N_h^{(k_u)}\left(N_h^{(k_u)} + 2\right) \tag{87}$$

arithmetische, komplexwertige Operationen notwendig.

Beim JT-MMSE-BLE sind zum Erzeugen des Sendesignalvektors entsprechend Gl. (82), mit Gl. (83), mit Gl. (85) und mit Gl. (86)

$$\mathcal{A}^{(\text{JT-MMSE-BLE})} \approx N_u \left( \frac{N_s}{2} + 1 \right) + (2N_u + 1)N_s \sum_{k_p=1}^{N_p} e_{k_p}^{(N_J)} p_{k_p}^{(N_J)}$$

$$+ \sum_{k_u=1}^{N_u} N_h^{(k_u)} \left( N_h^{(k_u)} + \frac{5}{2} \right)$$

$$(88)$$

arithmetische, komplexwertige Operationen erforderlich.

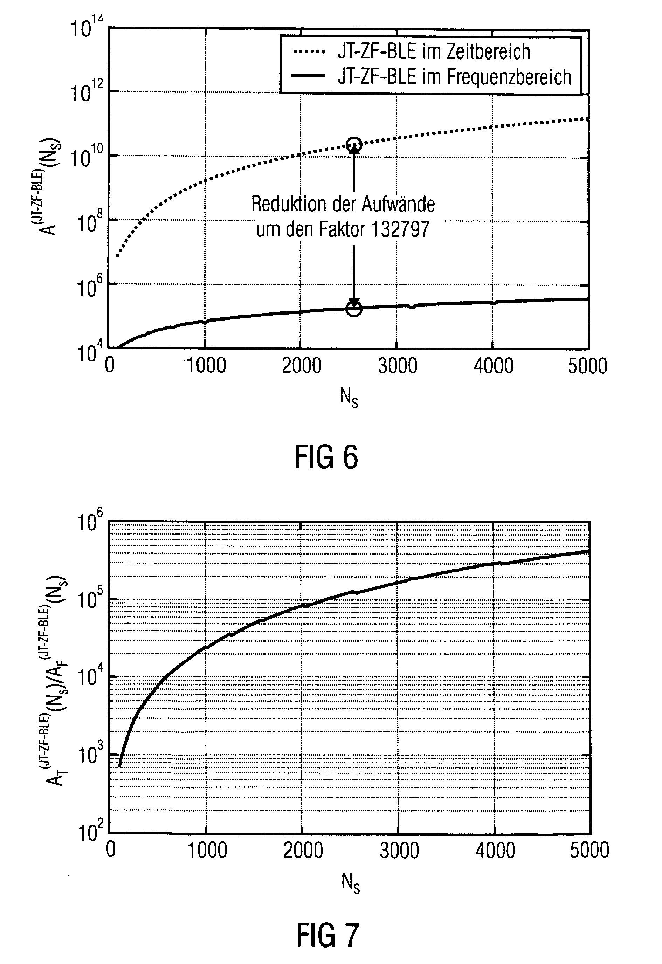

Fig. 6 zeigt einen Vergleich von Aufwänden im Sender der Basisstation 202 mit gemeinsamem Senden nach JT-ZF-BLE in Abhängigkeit von der Blockgröße $N_s$, einmal realisiert im Zeitbereich mit einer Cholesky-Zerlegung und zum zweiten erfindungsgemäß realisiert im Frequenzbereich.

Statt $\underline{V}$ nach Gl. (46) mit der Inversen $\underline{J}^{-1}$ von $\underline{J}$ gemäß Gl. (45) zu berechnen, löst man das Gleichungssystem (47). Dazu kann zweckmäßigerweise die Cholesky-Zerlegung auf $\underline{J}$ angewendet werden. Das Ergebnis dieser Zerlegung ist eine obere $\left( \sum_{k_u=1}^{N_u} \left( N_s + N_h^{(k_u)} - 1 \right) \right) \times \left( \sum_{k_u=1}^{N_u} \left( N_s + N_h^{(k_u)} - 1 \right) \right)$-Dreiecksmatrix $\underline{L}$, welche eine Forderung $\underline{L}^H \underline{L} = \underline{J}$ erfüllt. $\underline{L}^H$ ist eine untere $\left( \sum_{k_u=1}^{N_u} \left( N_s + N_h^{(k_u)} - 1 \right) \right) \times \left( \sum_{k_u=1}^{N_u} \left( N_s + N_h^{(k_u)} - 1 \right) \right)$ Dreiecksmatrix. Daraus ergibt sich $\underline{L}^H \underline{L} \underline{v} = V_1 \cdot \underline{M} \cdot \underline{Z} \underline{d}$ für Gl. (47). Da $V_1 \cdot \underline{M} \cdot \underline{Z} \underline{d}$ ein bekannter Vektor mit $\left( \sum_{k_u=1}^{N_u} \left( N_s + N_h^{(k_u)} - 1 \right) \right)$ Elementen ist, können die $\left( \sum_{k_u=1}^{N_u} \left( N_s + N_h^{(k_u)} - 1 \right) \right)$ Elemente von $\underline{L}\underline{v}$ und

damit auch $\underline{V}$ iterativ bestimmt werden.

Die Ordinate stellt die Aufwände im logarithmischen Maßstab dar. In diesem Vergleich wird die Anzahl der Teilnehmer $N_u$ gleich eins gewählt. Entsprechend dem Testszenario 2 aus 3rd Generation Partnership Project, Technical Specification Group Radio Access Network: *User Equipment (UE) radio transmission and reception (FDD).* Release 6, 3GPP TS 25.101, Version 6.15.0, September 2007, ist die Länge $N_h^{(1)}$ des Kanalimpulsantwortvektors gleich 77. Die Aufwände der Zeitbereichsrealisierung von JT-ZF-BLE wurden zu

$$\mathcal{A}_T^{(\text{JT-ZF-BLE})} \approx \frac{4}{3}(N_J)^3 + 2 \left\{ (N_u N_s)^2 + \sum_{k_u=1}^{N_u} \left( N_h^{(k_u)} \right)^2 + N_s \sum_{k_u=1}^{N_u} N_h^{(k_u)} \right\}$$

$$(89)$$

berechnet. Die Aufwände der Realisierung von JT-ZF-BLE im Frequenzbereich wurden entsprechend Gl. (87) bestimmt. Die Aufwände für die Realisierung von JT-ZF-BLE steigen mit wachsendem $N_s$ unabhängig von der Realisierungsart monoton an.

Als markanten Punkt für den Vergleich der Aufwände wird in Fig. 6 die Blocklänge $N_s$ gleich 2560 betrachtet. Dieser Wert ist in Anlehnung an die Blocklänge von UMTS/WCDMA gewählt. Die Erzeugung des Sendesignalvektors im Zeitbereich benötigt 24.4 Mrd. arithmetische, komplexwertige Operationen. Dies bedeutet, dass bei der Dauer eines UMTS/WCDMA-Verarbeitungsblocks von 0.67ms (3rd Generation Partnership Project, Technical Specification Group Radio Access Network: Physical channels and mapping of transport channels onto physical channels (FDD). Release 7, 3GPP TS 25.211, Version 7.0.0, März 2006) ein Aufwand von 36,5 Billionen arithmetischen, komplexwertigen Operationen pro Sekunde notwendig ist, um JT-ZF-BLE im Zeitbereich zu realisieren. Die Annahme, dass ein heutiger DSP durchschnittlich zwei Zyklen pro arithmetischer, komplexer Operation braucht, resultiert im Aufwand von ca. 73,0 Billionen Zyklen pro Sekunde. Dieser Aufwand kann von einem heutigen DSP nicht bewältigt werden. Geht man vom Einsatz eines leistungsfähigen DSP, beispielsweise aus der C64xx DSP-Familie der Firma Texas Instruments (TI) (Texas Instruments Incorporated : TMS320C6414T, TMS320C6415T, TMS320C6416T Fixed-Point Digital Signal Processor. Revised Feb. 2008. Document ID SPRS226L, Dallas Feb. 2008) mit einer Taktfrequenz von 1 GHz und maximal acht Mrd. Instruktionen pro Sekunde aus, so werden mindestens 4559 solcher DSPs parallel benötigt.

Die Erzeugung des Sendesignalvektors im Frequenzbereich gemäß der vorliegenden Erfindung braucht lediglich 13.3 Mio. arithmetische, komplexwertige Operationen. Die Realisierung von JT-ZF-BLE im Frequenzbereich ist somit um den Faktor 132609 aufwandsgünstiger als die Realsierung von JT-ZF-BLE im Zeitbereich. Dies bedeutet, dass bei der Dauer eines UMTS/WCDMA-Verarbeitungsblocks von 0.67ms ein Aufwand von 184004 arithmetischen, komplexwertigen Operationen pro Sekunde notwendig ist, um JT-ZF-BLE im Frequenzbereich zu realisieren. Geht man wiederum vom Einsatz eines leistungsfähigen DSP aus der C64xx DSP-Familie der Firma Texas Instruments (TI) mit einer Taktfrequenz von 1 GHz und maximal acht Mrd. Instruktionen pro Sekunde aus, so wird einziger DSP benötigt.

In Fig. 7 ist eine Verringerung der Aufwände durch die erfindungsgemäße Realisierung von JT-ZF-BLE im Frequenzbereich im Vergleich zur Realsierung im Zeitbereich dargestellt.

Die Blockgröße $N_s$ ist auf der Abszisse aufgetragen. Die Ordinate zeigt den dekadischen Logarithmus des Verhältnisses zwischen den Aufwänden der Realsierung von JT-ZF-BLE im Zeitbereich zu den Aufwänden der Realsierung von JT-ZF-BLE im Frequenzbereich. Die Aufwände der Realisierung von JT-ZF-BLE im Frequenzbereich sind schon bei kleinen Blockgrößen $N_s$ von wenigen zehn Chips um mehrere Größenordnungen geringer als die Aufwände der Realisierung von JT-ZF-BLE im Zeitbereich. Je größer $N_s$ ist, umso größer ist die erreichbare Einsparung.

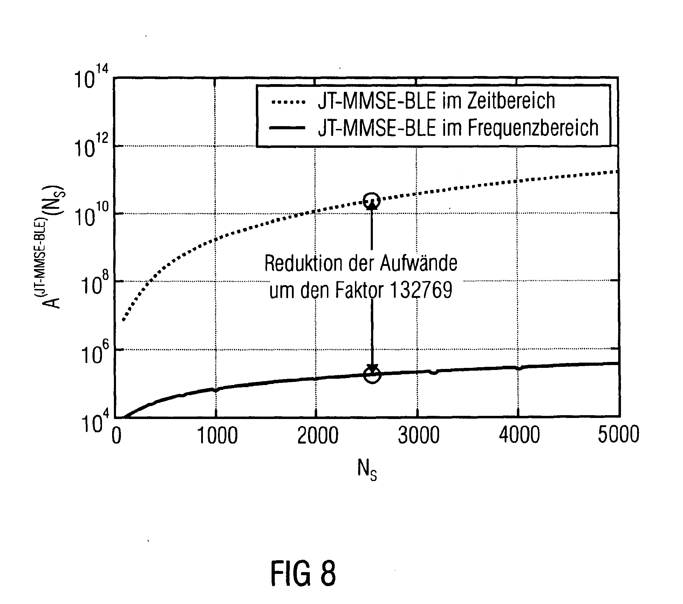

In Fig. 8 sind die Aufwände für die Realsierung von JT-MMSE-BLE im Zeitbereich nach

$$\mathcal{A}_T^{(\text{JT-MMSE-BLE})} \approx \frac{4}{3}(N_J)^3 + 2\left\{(N_u N_s)^2 + \sum_{k_u=1}^{N_u}\left(N_h^{(k_u)}\right)^2 + N_s \sum_{k_u=1}^{N_u} N_h^{(k_u)}\right\}$$
$$+ \frac{N_J + 1}{2}.$$

$$(90)$$

und für die Realsierung von JT-MMSE-BLE im Frequenzbereich nach Gl. (88) in Abhängigkeit von der Blockgröße $N_s$ gezeigt.

Die Ordinate stellt die Aufwände wieder im logarithmischen Maßstab dar. Die Aufwände der Realsierung von JT-MMSE-BLE im Zeitbereich und im Frequenzbereich entsprechend Gl. (90) bzw. Gl. (88) sind nahezu identisch mit den Aufwänden für die Realsierung von JT-ZF-BLE. Die gerade gemachten Aussagen für JT-ZF-BLE treffen daher auch auf die Realisierung von JT-MMSE-BLE zu.

In untenstehender Tabelle sind sowohl die Aufwände der Realsierung von JT-ZF-BLE nach Gl. (89) im Zeitbereich und von JT-MMSE-BLE nach Gl. (87) im Frequenzbereich exemplarisch für die für WCDMS/UMTS wichtige Blockgröße $N_s$ zusammengefasst.

| Anzahl $N_u$ der gleichzeitig aktiven Teilnehmer | | 1 | 2 | 4 | 8 |
|---|---|---|---|---|---|
| JT-ZF-BLE im Zeitbereich | Anzahl arithmetischer, komplexwertiger Operationen | 2,4E+10 | 2,0E+11 | 1,6E+12 | 1,3E+13 |
| | Operationen pro Sekunde in einem UMTS/WCDMA-Zeitschlitz | 3,6E+13 | 2,9E+14 | 2,3E+15 | 1,9E+16 |
| | Anzahl der benötigten TMS320C64xx DSPs | 4,6E+03 | 3,6E+04 | 2,9E+05 | 2,3E+06 |
| JT-ZF-BLE im Frequenzbereich | Anzahl arithmetischer, komplexwertiger Operationen | 1,8E+05 | 3,1E+05 | 5,6E+05 | 1,1E+06 |
| | Operationen pro Sekunde in einem UMTS/WCDMA-Zeitschlitz | 2,7E+08 | 4,6E+08 | 8,3E+08 | 1,6E+09 |
| | Anzahl der benötigten TMS320C64xx DSPs | 1 | 1 | 1 | 1 |
| JT-MMSE-BLE Zeitbereich | Anzahl arithmetischer, komplexwertiger Operationen | 2,4E+10 | 2,0E+11 | 1,6E+12 | 1,3E+13 |
| | Operationen pro Sekunde in einem UMTS/WCDMA-Zeitschlitz | 3,6E+13 | 2,9E+14 | 2,3E+15 | 1,9E+16 |

| | | | 4,6E+03 | 3,6E+04 | 2,9E+05 | 2,3E+06 |
|---|---|---|---|---|---|---|
| JT-MMSE-BLE im Frequenzbereich | | Anzahl der benötigten TMS320C64xx DSPs | | | | |
| | | Anzahl arithmetischer, komplexwertiger Operationen | 1,8E+05 | 3,1E+05 | 5,6E+05 | 1,1E+06 |
| | | Operationen pro Sekunde in einem UMTS/WCDMA-Zeitschlitz | 2,7E+08 | 4,6E+08 | 8,4E+08 | 1,6E+09 |
| | | Anzahl der benötigten TMS320C64xx DSPs | 1 | 1 | 1 | 1 |

Die Zusammenfassung beinhaltet die Aufwände der Realsierungen für 1, 2, 4, und 8 aktive Teilnehmer. Um die Aufwände der Realsierungen im Zeitbereich zu bewältigen ist die Leistungsfähigkeit von mehreren Tausend DSPs notwendig. Die Verdoppelung der Anzahl der Teilnehmer führt zu einer Erhöhung der Anzahl der notwendigen DSPs um Faktor acht. Das gemeinsame Senden im Frequenzbereich lässt sich für alle betrachtete Fälle auf einem DSP realisieren.

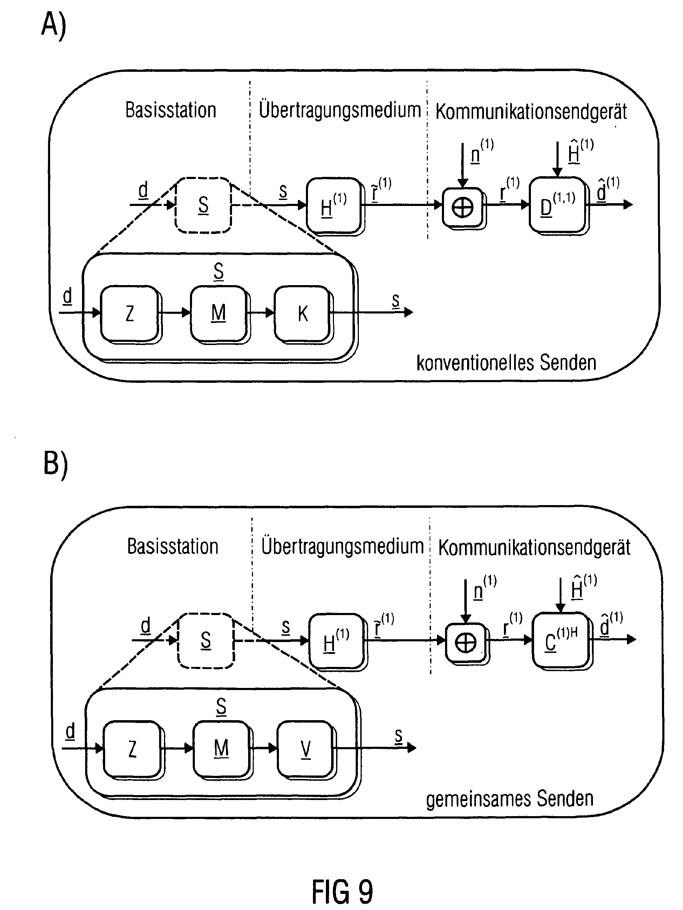

Im Nachfolgenden wird die Leistungsfähigkeit der im Vorhergehenden vorgestellten erfindungsgemäßen Verfahren zum gemeinsamen Senden im Frequenzbereich untersucht. Des Weiteren wird die Leistungsfähigkeit dieser Verfahren mit der Leistungsfähigkeit konventioneller Funksysteme verglichen. Die im Vorhergehenden erläuterten Einflüsse hinsichtlich der Reduktion der Aufwände in den Kommunikationsendgeräten werden im Weiteren berücksichtigt. Ausgehend von hochratigen Diensten in UMTS/WCDMA wird die Leistungsfähigkeit anhand der erzielbaren Bitfehlerverhältnisse für die uncodierte Übertragung bei einer Mittenfrequenz von 1,9 GHz beurteilt. Diese heißen im Folgenden uncodierte Bitfehlerverhältnisse. Denn der Schwerpunkt nachfolgender Untersuchungen liegt nicht auf einer Beurteilung der Leistungsfähigkeit von Mehrteilnehmersystemen, sondern auf der Reduktion der Aufwände in den Kommunikationsendgeräten. Die Leistungsfähigkeit von Mehrteilnehmerfunksystemen, insbesondere von UMTS/WCDMA, mit gemeinsamem Senden im Zeitbereich wurden bereits zahlreichen Veröffentlichungen behandelt. Die Sender und die Empfänger mit und ohne gemeinsames Senden in der Abwärtsstrecke sind in Fig. 9 gegenübergestellt.

In Fig. 9a ist konventionelles Senden und Empfangen in der Abwärtsstrecke gezeigt. Der konventionelle Sender muss nur wenige Operationen durchführen. Die Signalerzeugungsmatrix $\underline{\mathbf{S}}$ setzt sich aus einer Zuordnungsmatrix $\mathbf{Z}$ einer Spreizmatrix $\underline{\mathbf{M}}$ und einer Kombinationsmatrix $\mathbf{K}$ zusammen, was mit einem geringen Aufwand zu bewältigen ist. Der konventionelle Empfänger muss in der Lage sein, den Einflüssen des Übertragungsmediums entgegen zu wirken (siehe Gln. (25), (27), (28)). Dies geschieht mit der Schätzmatrix $\underline{\mathbf{D}}^{(1,1)}$. Wie bereits detailliert dargestellt wurde, führt dies in den meisten Fällen zu aufwendigen Strukturen in den Kommunikationsendgeräten. Die Sender der Abwärtsstrecke gehören zur Infrastruktur des entsprechenden Funksystems. In UMTS/WCDMA sind sie in den Basisstationen realisiert. Sie sind ortsfest und verfügen über einer drahtgebundenen Energieversorgung. Die Aufwände in diesen Sendern unterliegen somit nicht denjenigen Begrenzungen, welche durch den begrenzten Energiespeicher und durch den für die Mobilität erforderlichen Formfaktor gegeben sind.

In Fig. 9b sind das Senden und das Empfangen in einem Übertragungssystem mit gemeinsamem Senden dargestellt. Im Empfänger ist es nicht mehr notwendig, mit aufwändigen Strukturen gegen den Einfluss des Übertragungsmediums zu wirken. Die Schätzmatrix $\underline{\mathbf{D}}^{(1,1)}$ wird gleich einer Entspreizmatrix $(\underline{\mathbf{C}}^{(1)H})$, die mit einem geringen Aufwand in Form eines Korrelators realisierbar ist. Durch diese Reduktion der Aufwände in den Empfängern sind einfachere und preiswertere Kommunikationsendgeräte möglich. Um solche einfacheren Kommunikationsendgeräte ohne signifikante Minderung der Leistungsfähigkeit verwenden zu können, ist es notwendig, in Sendern mit gemeinsamem Senden gegen des Einflusses des Übertragungsmediums zu wirken, siehe Gln. (39), (44) und (75).

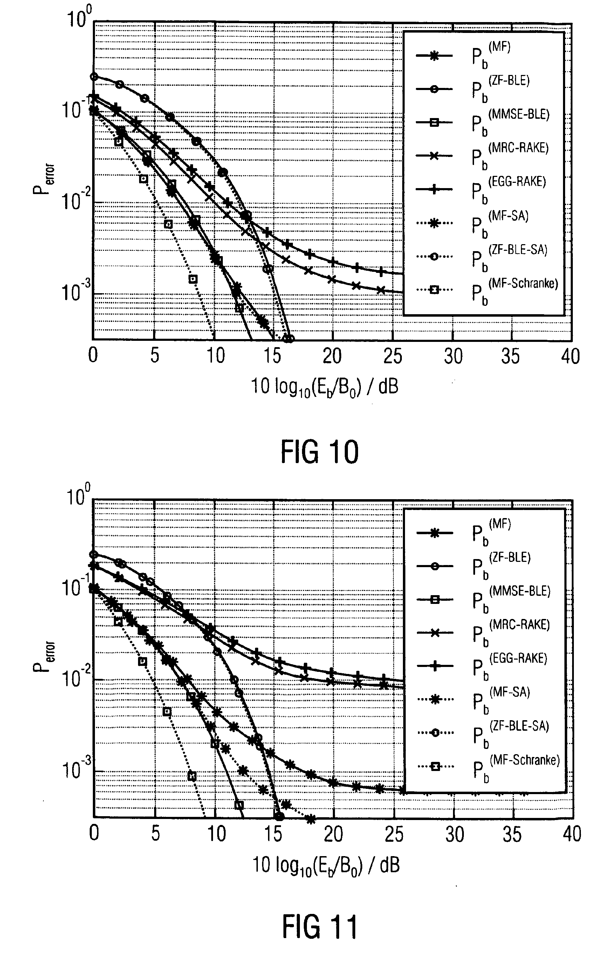

In Fig. 10 und Fig. 11 sind uncodierte Bitfehlerverhältnisse in der UMTS/WCDMA-Abwärtstrecke in Abhängigkeit vom empfängerseitigen Signal-Stör-Verhältnis in dB bei der Übertragung über die Kanalmodelle COST207-TU und COST207-BU (Jung, P. : Analyse und Entwurf digitaler Mobilfunksysteme. Stuttgart: B. G. Teubner, 1997. ISBN: 3-519-06190-2) gezeigt. Es wird QPSK-Modulation mit $M$ gleich vier eingesetzt. Weiterhin wird vom Dienst mit der Datenrate 384kbit/s (3rd Generation Partnership Project, Technical Specification Group Radio Access Network: User Equipment (UE) radio transmission and reception (FDD). Release 6, 3GPP TS 25.101, Version 6.15.0, September 2007) ausgegangen. Bei den Untersuchungen Dienst wird der CDMA-Spreizcode mit der Nummer vier nach 3rd Generation Partnership Project, Technical Specification Group Radio Access Network: User Equipment (UE) radio transmission and reception (FDD). Release 6, 3GPP TS 25.101, Version 6.15.0, September 2007, mit der Länge acht eingesetzt. Weiterhin wird perfekte Kanalschätzung, d. h.

$$\hat{\underline{H}}^{(k_u)} = \underline{H}^{(k_u)} \quad . \qquad\qquad (91)$$

angenommen. Im Falle von RAKE-Empfängern werden bis zu vier Finger verwendet. Verzögerungszeitpunkte der Pfade im Mehrwegekanal, $\tau_k$, und zugehörige Werte der Kanalimpulsantwort entsprechen den vier größten Werten der abgetasteten Kanalimpulsantwort $\underline{h}_{k_\tau}^{(k_u)}$ .

Die uncodierten Bitfehlerverhältnisse werden für die Fälle

- signalangepasstes Filter (MF),
- ZF-BLE,
- MMSE-BLE,
- RAKE-Empfänger mit MRC (MRC-RAKE, MRC = Maximum Ratio Combining) und
- RAKE-Empfänger mit EGC (EGC-RAKE, EGC = Equal Gain Combining)

betrachtet. Des Weiteren sind auch die semi-analytisch (SA) ermittelte Bitfehlerverhältnisse für den Fall des signalangepassten Filters (MF-SA) und für den ZF-BLE (ZF-BLE-SA gezeigt. Die semi-analytisch ermittelten Bitfehlerverhältnisse ergeben sich aus Erwartungswerten der uncodierten Bitfehlerverhältnisse in Abhängigkeit vom Signal-Stör-Verhältnis entsprechend

$$\underline{P}_b^{(X)}\left(\mathcal{E}_d, \sigma_{\underline{n}(MF)}^2, \mathrm{ld}(N_{mod})\right) = E\left\{\underline{P}_b^{(AWGN)}\left(\mathcal{E}_d, \sigma_{\underline{n}(X)}^2, \mathrm{ld}(N_{mod})\right)\right\} . \qquad (92)$$

Die Stufenanzahl der eingesetzten Modulation ist $M$. Die Störleistung $\sigma_{\underline{n}(X)}^2$ ist vom momentanen Kanalzustand abhängig. X steht für MF-SA, oder für ZF-BLE-SA. Mit $\varepsilon_X$ wird im Weiteren der Erwartungswert der Energie von $\underline{X}$ bezeichnet. So ist

$$\mathcal{E}_{h^{(k_u)}} = E\left\{\underline{h}^{(k_u)H}\underline{h}^{(k_u)}\right\}$$

$$(93)$$

und

$$\mathcal{E}_{c^{(k_u)}} = E\left\{\underline{c}^{(k_u)H}\underline{c}^{(k_u)}\right\} \quad .$$

$$(94)$$

Die Störleistung Kommunikationsendgerät mit MF ist gemäß

$$\sigma^2_{\underline{n}(MF)} = \text{diag}\left\{ \frac{\mathcal{E}_{d^{(1)}}}{N_{d^{(1)}}} \left| \frac{\left(\underline{H}^{(1)}\underline{C}^{(1)}\right)^H \underline{H}^{(1)}\underline{C}^{(1)} - \mathcal{E}_h\mathcal{E}_c I_{\left(N_s+N_h^{(1)}-1\right)\times\left(N_s+N_h^{(1)}-1\right)}}{\mathcal{E}_{h^{(1)}}\mathcal{E}_{c^{(1)}}} \right|^2 \right.$$

$$\left. +N_0 \frac{\left(\underline{H}^{(1)}\underline{C}^{(1)}\right)^H \underline{H}^{(1)}\underline{C}^{(1)}}{\left(\mathcal{E}_{h^{(1)}}\mathcal{E}_{c^{(1)}}\right)^2} \right\}$$

$$(95)$$

gegeben. Im Kommunikationsendgerät mit einem ZF-BLE gilt

$$\sigma^2_{\underline{n}(ZF)} = N_0 \cdot \text{diag}\left[\left(\left(\underline{C}^{(1)}\right)^H \left(\underline{H}^{(1)}\right)^H \underline{H}^{(1)}\underline{C}^{(1)}\right)^{-1}\right]$$

$$(96)$$

gegeben. Zudem wird die untere Schranke $\underline{P}_b^{(MF\text{-Schranke})}\left(\mathcal{E}_d,\mathcal{E}_h,\sigma^2_{\underline{n}},\text{ld}\left(N_{mod}\right)\right)$ des uncodierten Bitfehlerverhältnisses gezeigt. $\underline{P}_b^{(MF\text{-Schranke})}\left(\mathcal{E}_d,\mathcal{E}_h,\sigma^2_{\underline{n}},\text{ld}\left(N_{mod}\right)\right)$ wird im Weiteren als MF-Schranke bezeichnet und beschreibt die Leistungsfähigkeit eines Kommunikationsendgerätes ohne Intersymbolinterferenz und ist somit der bestmögliche Fall.

Kommunikationsendgeräte mit MRC-RAKE zeigen in urbanen Szenarien eine höhere Leistungsfähigkeit, als die Kommunikationsendgeräte mit EGC-RAKE.

Jedoch weisen sowohl MRC-RAKE als auch EGC-RAKE untere Schranken der uncodierten Bitfehlerverhältnisse auf, die unabhängig vom Signal-Stör-Verhältnis größer als Null sind. Diese unteren Schranken heißen Fehlerteppich. Der Fehlerteppich liegt im Fall des MRC-RAKE bei einem uncodierten Bitfehlerverhältnis von etwa $1.10^{-3}$ für COST207-TU und bei einem uncodierten Bitfehlerverhältnis von etwa $8.10^{-3}$ für COST207-BU. Die Aufwände der Kommunikationsendgeräte für MRC-RAKE und für EGC-RAKE unterscheiden sich nur unwesentlich voneinander. Aufgrund seiner geringen Leistungsfähigkeit wird das EGC-Prinzip im Nachfolgenden nicht mehr betrachtet.

Die Leistungsfähigkeit des MRC-RAKE ist im Wesentlichen wegen der durch die Mehrwegeausbreitung entstandener ISI und MAI eingeschränkt. Gegenüber dem MF führt vor allem die Einschränkung der von Null verschiedenen Pfade bei einem gegebenen Signal-Stör-Verhältnis zu erheblichen Nachteilen.

So erreichen die uncodierten Bitfehlerverhältnisse des MF bei wachsendem Signal-Stör-Verhältnis Werte kleiner $1.10^{-4}$ für den Fall COST207-TU und etwa $6.10^{-4}$ für den Fall COST207-BU. Die Leistungsfähigkeit des MF ist durch Intersymbolinterferenz begrenzt, deren Einfluss durch die CDMA-Komponente gemildert, jedoch nicht unterdrückt wird.

Für niedrige Werte des Signal-Stör-Verhältnisses stimmen die semi-analytisch ermittelten Bitfehlerverhältnisse mit den durch die Simulation gewonnenen Bitfehlerverhältnissen im Falle des MF gut überein. Mit wachsendem Signal-Stör-Verhältnis nimmt die Genauigkeit des semi-analytischen Modells ab.

Kommunikationsendgeräte mit ZF-BLE und mit MMSE-BLE unterdrücken bei exakter Kenntnis von $\tilde{\underline{H}}^{(k_u)} = \underline{H}^{(k_u)}$ den Einfluss der Intersymbolinterferenz vollständig. Die korrespondierenden uncodierten Bitfehlerverhältnisse weisen keinen Fehlerteppich auf. Die durch die Simulation gewonnenen Kurven für das uncodierte Bitfehlerverhältnis beim ZF-BLE sind stimmen mit den semi-analytisch bestimmten Kurven fast vollkommen überein.

Der MMSE-BLE ist leistungsfähiger als die bisher diskutierten Empfängerkonzepte. Ein bestimmter Wert des uncodierten Bitfehlerverhältnisses lässt sich bei einem geringeren Signal-Stör-Verhältnis als im Falle der anderen Empfängerkonzepte erzielen. Obwohl aufwändiger zu realisieren, erscheint MMSE-BLE besser für den Einsatz in Kommunikationsendgeräten geeignet als beispielsweise der ZF-BLE.

Der im vorigen Abschnitt erläuterte Wunsch nach höheren Datenraten kann durch Verkürzung der Spreizfolgen erfüllt werden. Ein solcher Dienst könnte eine Länge der CDMA-Spreizcodes von zwei Chips betragen. Im Nachfolgenden wird eine solche Modifikation des Kommunikationsszenarios untersucht.

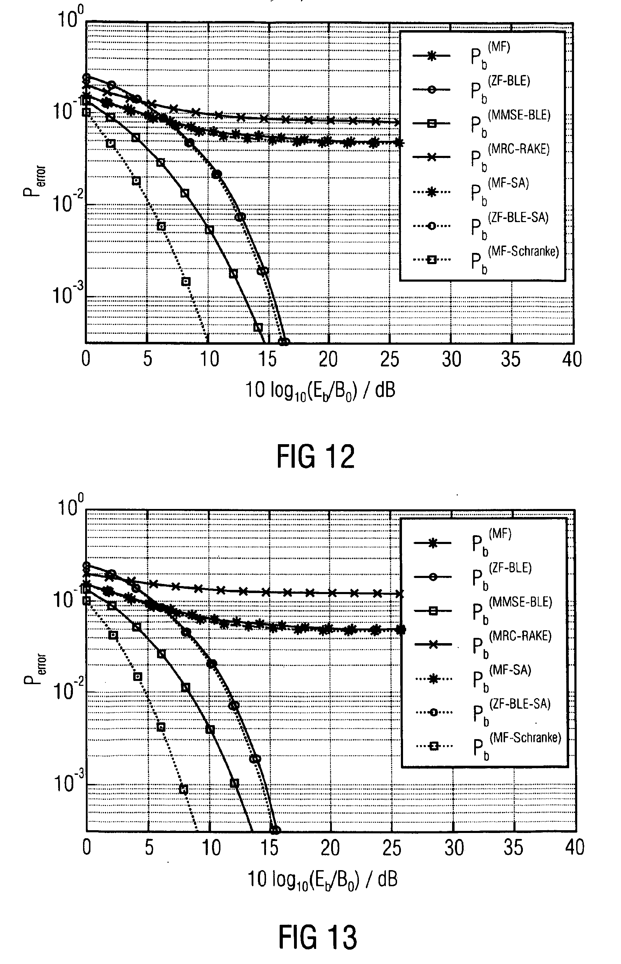

In Fig. 12 und in Fig. 13 sind Untersuchungsergebnisse für ein UMTS/WCDMA-System mit einer Länge der CDMA-Spreizcodes von zwei Chips dargestellt. Als Anwendungsszenario ist weiterhin eine urbane Umgebung entsprechend COST207-TU und entsprechend COST207-BU vorausgesetzt.

Die Leistungsfähigkeit des MRC-RAKE mit vier Fingern nimmt mit bei der Verkürzung des CDMA-Spreizcodes ab. So kann im Fall von COST207-TU das Bitfehlerverhältnis von $5.10^{-2}$ nicht unterschritten werden. Für den COST207-BU Kanalmodell liegt diese untere Schranke sogar bei $6 \cdot 10^{-2}$. Der MRC-RAKE erscheint für den Einsatz bei Diensten mit sehr kurzen CDMA-Spreizcodes in urbanen Szenarien ungeeignet. Stattdessen ist der Einsatz von ZF-BLE bzw. von MMSE-BLE zweckmäßig. Da sowohl ZF-BLE als auch MMSE-BLE die Aufwände in den Kommunikationsendgeräten erhöhen, steht deren Einsatz in den Kommunikationsendgeräten jedoch im Widerspruch zu der Zielsetzung der vorliegenden Arbeit. Das erfindungsgemäße gemeinsame Senden verlagert diese Aufwände auf die Seite des Senders. Sie haben das Potenzial, die Aufwände in den Kommunikationsendgeräten zu reduzieren.

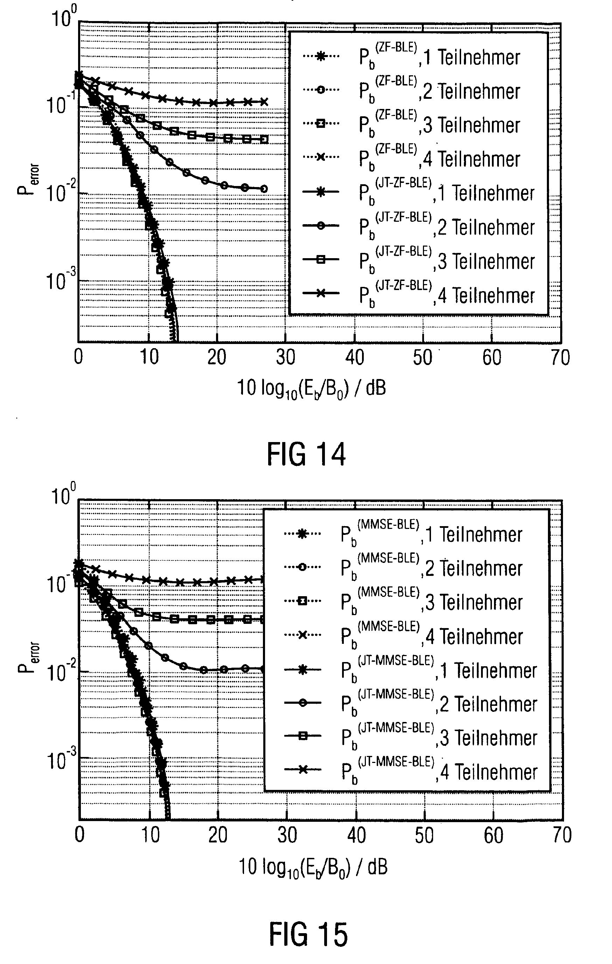

In Fig. 14 und Fig. 15 sind die uncodierten Bitfehlerverhältnisse in der UMTS/WCDMA-Abwärtstrecke in Abhängigkeit vom empfängerseitigen Signal-Stör-Verhältnis $10\log_{10}(E_b/N_0)$ in dB bei der Übertragung entsprechend dem Testszenario 2 aus 3rd Generation Partnership Project, Technical Specification Group Radio Access Network: User Equipment (UE) radio transmission and reception (FDD). Release 6, 3GPP TS 25.101, Version 6.15.0, September 2007 [3G25101], dargestellt. Es wird QPSK-Modulation mit $M$ gleich vier eingesetzt. Weiterhin wird vom Dienst mit der Datenrate 384kbit/s [3G25101] ausgegangen. Bei dem betrachteten Dienst wird der CDMA-Spreizcode mit der Nummer vier nach [3G25101] mit der Länge acht eingesetzt. Es wird perfekte Kanalschätzung gemäß Gl. (91) angenommen. Zum Senden als auch zum Empfangen wird jeweils eine Antenne verwendet. Fig. 14 und Fig. 15 stellen die Leistungsfähigkeit des gemeinsamen Sendens entsprechend JT-ZF-BLE und entsprechend JT-MMSE-BLE der Leistungsfähigkeit der konventionellen Kommunikationsendgeräte ohne gemeinsames Senden und unter Verwendung von ZF-BLE bzw. MMSE-BLE gegenüber.

Die für Fig. 14 und Fig. 15 betrachteten Kanalmodelle gehen im Gegensatz zu den COST207-Kanalmodellen von fest vorgegebenen diskreten Verzögerungszeiten $\tau_{k_T}$, $k_T = 1,...,N_T$, aus.

Ist nur ein Teilnehmer aktiv, so kann kein nennenswerter Unterschied in der Leistungsfähigkeit der betrachteten Systeme beobachtet werden. Steigt die Anzahl der gleichzeitig aktiven Teilnehmer, so verschlechtert sich die Leistungsfähigkeit. Im Falle der konventionellen Kommunikationsendgeräte ohne gemeinsames Senden und unter Verwendung von ZF-BLE bzw. MMSE-BLE fällt diese Verschlechterung sehr klein aus. Dies liegt daran, dass die Orthogonalität der Sendesignale durch die Übertragung nur gering beeinträchtigt wird und die empfängerseitige Separation der teilnehmerspezifischen Sendesignale fas ohne Einbußen beim Signal-Stör-Verhältnis erfolgen kann. Kommt jedoch das gemeinsame Senden unter Verwendung einfacher Kommunikationsendgeräte zum Einsatz, so tritt bereits bei der Koexistenz von lediglich zwei Teilnehmern eine deutliche Verschlechterung zutage. Dies entspricht einer Auslastung von 25%. Die Verschlechterung entsteht, weil bereits im Sender die Orthogonalität der teilnehmerspezifischen Sendesignale aufgegeben und somit eine deutlich spürbare MAI erzeugt wird. Diese MAI kann in den Empfängern der Kommunikationsendgeräte nicht mehr bekämpft werden. Senderseitig kann die MAI durch den Einsatz mehrerer Sendeantennen bzw. durch die Verwendung von Array-Antennen bekämpft werden. Dies ist jedoch nicht Gegenstand der vorliegenden Arbeit.

Nachfolgend wird das erreichbare Bitfehlerverhältnis beim Einsatz von

- gemeinsamem Senden mit Maximalverhältnis-Überlagern (JT-MRC),
- gemeinsamem Senden mit signalangepasstem Filter (JT-MF),
- gemeinsamem Senden mit ZF-BLE (JT-ZF-BLE) und
- gemeinsamem Senden mit MMSE-BLE (JT-MMSE-BLE)

untersucht.

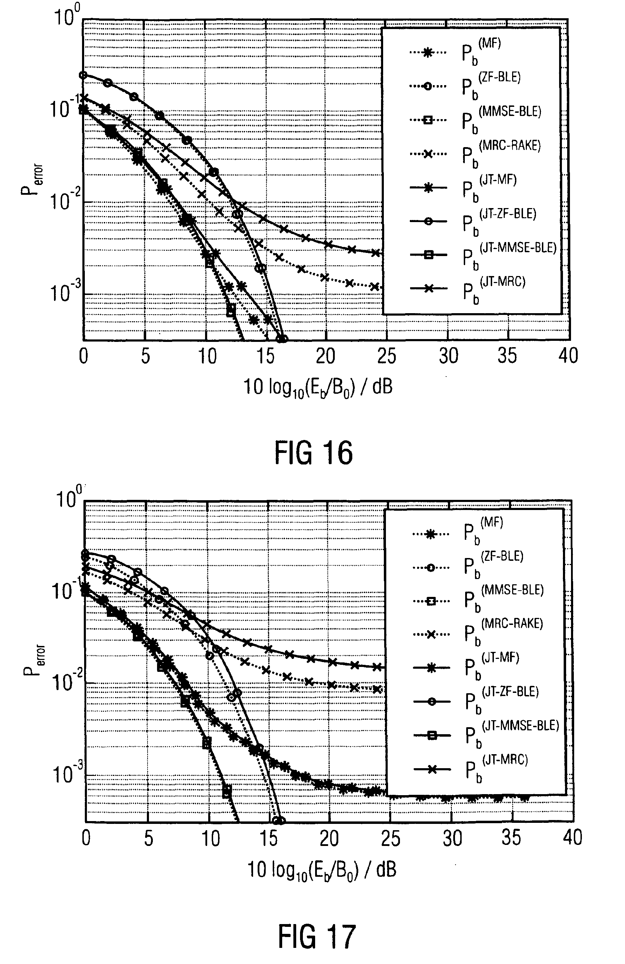

In Fig. 16 und Fig. 17 sind in Analogie zu Fig. 10 und Fig. 11 die uncodierten Bitfehlerverhältnisse in der UMTS/WCDMA-Abwärtsstrecke für den Fall des Dienstes mit einer Datenrate von 384kbit/s in Abhängigkeit vom empfängerseitigen Signal-Stör-Verhältnis $10\log_{10}(E_b/N_0)$ in dB dargestellt. Als Übertragungskanäle sind jeweils COST207-TU und COST207-BU verwendet. In Fig. 16 und Fig. 17 wird die Leistungsfähigkeit des gemeinsamen Sendens im Frequenzbereich mit der Leistungsfähigkeit der konventionellen Form der Übertragung ohne gemeinsames Senden und mit aufwändigeren Datendetektoren in den Kommunikationsendgeräten verglichen.

Bei JT-MRC macht sich empfängerseitig eine Degradation der Leistungsfähigkeit im Vergleich zum Einsatz von MRC-RAKE bemerkbar. Um das uncodierte Bitfehlerverhältnis gleich $10^{-2}$ zu erreichen benötigt die Übertragung mit JT-MRC ein um etwa 2,4dB größeres Signal-Stör-Verhältnis als das konventionelle System mit MRC-RAKE, das lediglich $10\log_{10}(E_b/N_0) \approx 10$dB braucht.

Der Einsatz des JT-MF und die konventionelle Übertragung mit einem empfängerseitigen MF liefern in den betrachteten Szenarien ähnliche Ergebnisse. Um das uncodierte Bitfehlerverhältnis von $10^{-2}$ zu erreichen, ist in beiden Fällen $10\log_{10}(E_b/N_0)$ von ca. 7dB erforderlich.

Ähnliches gilt für JT-ZF-BLE im Frequenzbereich im Vergleich zur konventionellen Übertragung mit empfängerseitigem Einsatz des ZF-BLE. Auch hier ist die Leistungsfähigkeit nahezu identisch. Um das uncodierte Bitfehlerverhältnis von $10^{-2}$ zu erreichen, ist in beiden Fällen $10\log_{10}(E_b/N_0)$ von ca. 12dB erforderlich.

Auch für die Varianten des MMSE-BLE gilt, dass gemeinsames Senden mit JT-MMSE-BLE und die konventionelle Übertragung mit einem empfängerseitigen Einsatz des MMSE-BLE zu nahezu identischen Abhängigkeiten der jeweiligen Kurven des Bitfehlerverhältnisses in Abhängigkeit von $10\log_{10}(E_b/N_0)$ führen. Jedoch benötigen die MMSE-BLE-Varianten ein um ca. 5dB kleineres Signal-Stör-Verhältnis als die ZF-BLE-Versionen um das Bitfehlerverhältnis von $10^{-2}$ zu erreichen.

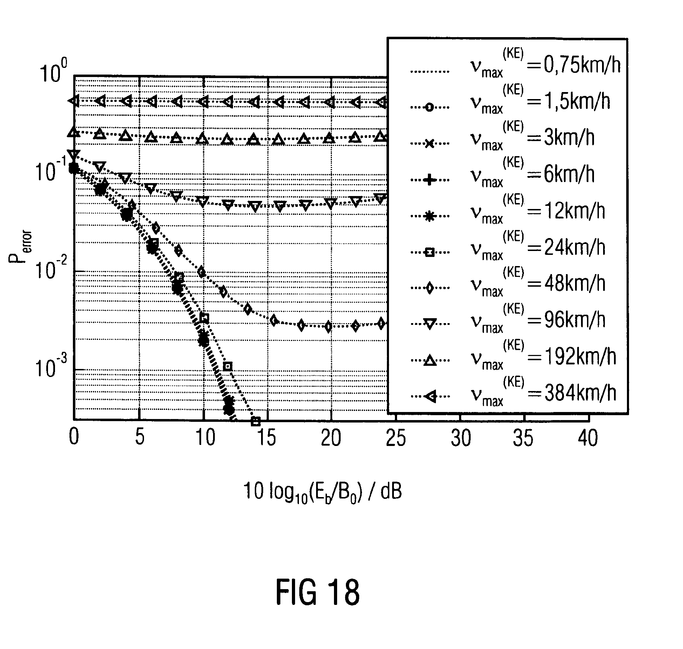

Im Folgenden wird die Geschwindigkeitsabhängigkeit des Bitfehlerverhältnisses beim Einsatz von Verfahren zum gemeinsamen Senden untersucht. Stellvertretend für alle Verfahren wird JT-MMSE-BLE betrachtet. Es wird von der UMTS/WCDMA-Abwärtstrecke und der Verwendung eines CDMA-Spreizcodes mit zwei Chips ausgegangen. Es wird angenommen, dass der Kanalimpulsantwortvektor ein einziges Mal pro UMTS/WCDMA-Slot, d.h. alle rund 0.67ms, ermittelt und bei der JT-MMSE-BLE-basierten Sendesignalerzeugung eingesetzt wird. In Fig. 18 sind die Kurven für das uncodierte Bitfehlerverhältnis in Abhängigkeit von $10\log_{10}(E_b/N_0)$ gezeigt, wenn das Kommunikationsendgerät sich mit unterschiedlichen Geschwindigkeiten bewegt. Bei niedrigen Geschwindigkeiten des Kommunikationsendgerätes bis etwa 12km/h, wird das uncodierte Bitfehlerverhältnis von $10^{-2}$ bei $10\log_{10}(E_b/N_0) \approx 6,4$dB erreicht. Eine nennenswerte Erhöhung des uncodierten Bitfehlerverhältnisses bei gegebenem $10\log_{10}(E_b/N_0)$ tritt erst ab einer Geschwindigkeit des Kommunikationsendgerätes von rund 24km/h auf. Um das uncodierte Bitfehlerverhältnis von $10^{-2}$ bei der Geschwindigkeit von 24km/h zu erreichen, wird ein um 0.4dB größeres Signal-Stör-Verhältnis gebraucht. Bei 48km/h steigt die Degradation des Signal-Stör-Verhältnisses auf 3.4dB. Bei höheren Geschwindigkeiten kann das Bitfehlerverhältnis von $10^{-2}$ nicht mehr erreicht werden.

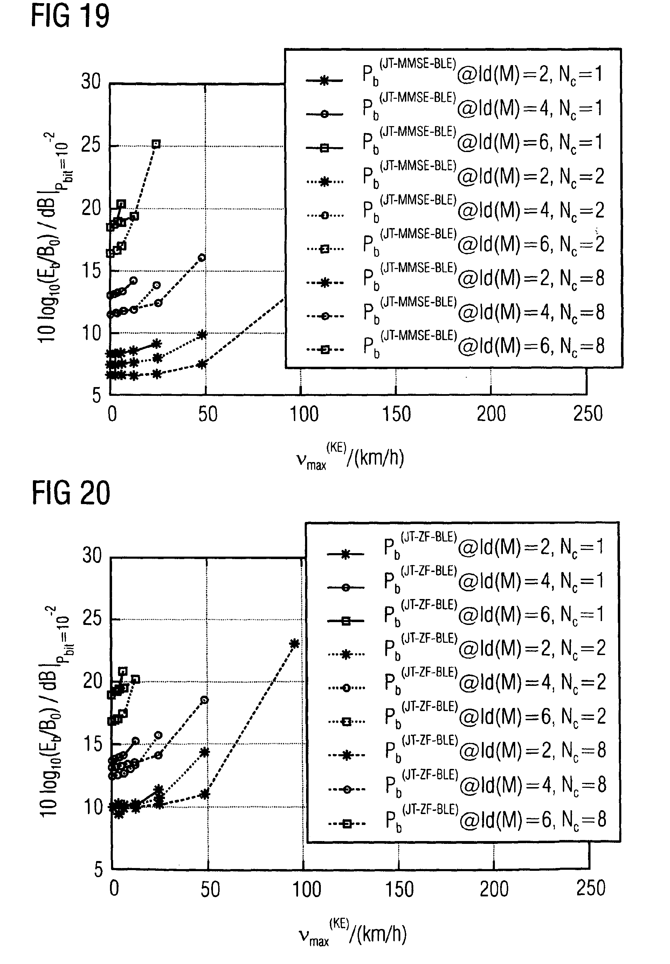

In Fig. 19 und in Fig. 20 ist der Einfluss der Geschwindigkeiten auf die Leistungsfähigkeit des gemeinsamen Sendens jeweils bei Verwendung von JT-MMSE-BLE und von JT-ZF-BLE dargestellt. Die Ordinate zeigt das zum Erreichen des uncodierten Bitfehlerverhältnisses von $10^{-2}$ notwendige Signal-Stör-Verhältnis $10\log_{10}(E_b/N_0)$ in dB. Die Abszisse zeigt die Geschwindigkeit des Kommunikationsendgerätes. Als Parameter werden

- der Logarithmus zur Basis zwei der Stufigkeit der eingesetzten Modulationsart Id($M$), wobei Id($M$)=2 QPSK, Id($M$)=4 16-QAM und Id($M$)=6 64-QAM entsprechen, und

- die Länge des CDMA-Spreizcodes, $N_c^{(k_u)}$,

betrachtet.

Die steigende Geschwindigkeit führt in allen Untersuchungen zur Verringerung der Leistungsfähigkeit der betrachteten Kommunikationsendgeräte. So ist für QPSK mit der Spreizfolge der Länge acht sowohl bei JT-MMSE-BLE, als auch bei JT-ZF-BLE ab einer Geschwindigkeit über 50km/h eine schnell abnehmende Leistungsfähigkeit der Kommunikationsendgeräte beobachtet worden.

Der Einfluss der Geschwindigkeit auf die Leistungsfähigkeit der Kommunikationsendgeräte nimmt mit zunehmender Länge der CDMA-Spreizcodes ab. So ist für QPSK ohne Spreizung bis einer Geschwindigkeit von bis ca. 20km/h, mit einem CDMA-Spreizcode der Länge zwei bis einer Geschwindigkeit von bis ca. 25km/h und mit einem CDMA-Spreizcode der Länge acht bis einer Geschwindigkeit von bis ca. 50km/h der Einsatz des gemeinsamen Sendens sinnvoll.

Der Einfluss der Geschwindigkeit auf die Leistungsfähigkeit der Kommunikationsendgeräte steigt mit wachsendem Id($M$). So wird bei einer Spreizung mit dem CDMA-Spreizcode der Länge acht für QPSK ab einer Geschwindigkeit von über ca. 50km/h, für 16-QAM ab einer Geschwindigkeit von über ca. 25km/h und für 64-QAM ab einer Geschwindigkeit von über ca. 5km/h eine rasch schnell abnehmende Leistungsfähigkeit der Kommunikationsendgeräte beobachtet.

Zum praktischen Nachweis der Machbarkeit des erfindungsgemäßen gemeinsamen Sendens wurde von den Erfindern ein Demonstrator für eine Bereitstellung einer multimedialen Anwendung und verschiedener multimedialer Dienste für den Echtzeitbetrieb realisiert, auf welchen im Nachfolgenden beschrieben wird.

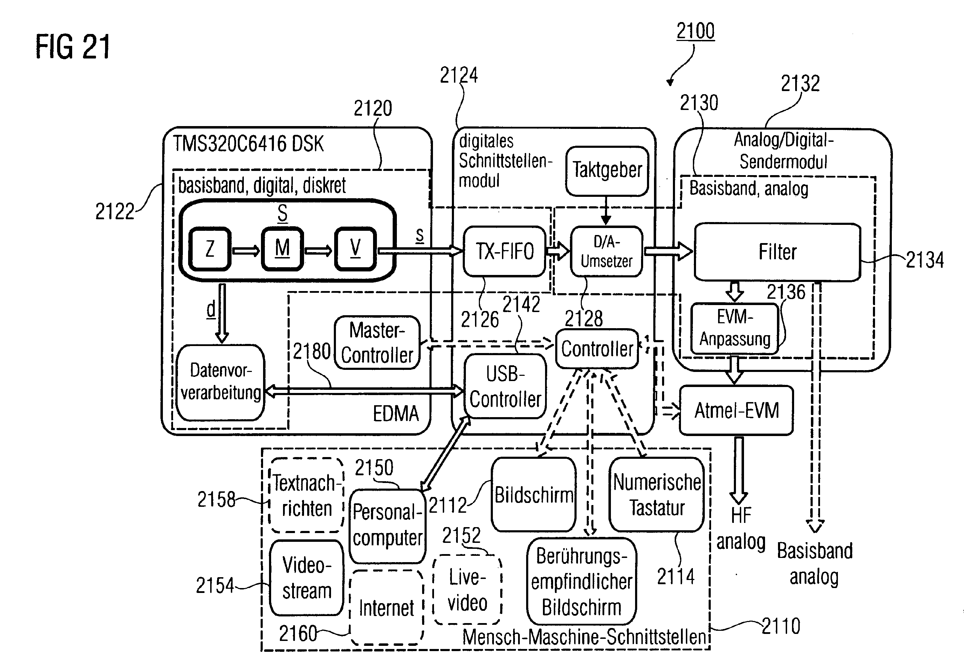

Ein Blockdiagramm eines im Rahmen der vorliegenden Erfindung realisierten Demonstrators bzw. Senders 2100 ist in Fig. 21 dargestellt.

Das gemeinsame Senden kann in der Abwärtsstrecke, d.h. von Basisstation zu Mobilstation, eines Funksystems eingesetzt werden. Der Sender 2100 besteht aus funktionellen Einheiten

- Mensch-Maschine-Schnittstelle (MMS) 2110,

- digitales Basisband 2120,

- analoges Basisband 2130 und

- Mischer (nicht gezeigt).

Diese funktionellen Einheiten können beispielsweise mit einem sog. DSP Starter Kit (DSK) 2122, einem digitalen Schnittstellenmodul 2124, einem analog/digital-Sendermodul 2132, einer SD-Kartenschnittselle mit SPI/UART und EEPROM, einem Bildschirm 2112 und einer numerischen Tastatur 2114, einer USB-Platine 2142, einem EVM (engl. Evaluation Module zur Realisierung der Hochfrequenzkomponente des Senders 2100) und einer Antenne (nicht gezeigt) realisiert werden.

Im Blockdiagram des Senders 2100 gemäß Fig. 21 sind die wesentlichen Funktionsblöcke, die dem im Vorhergehenden detailliert diskutierten gemeinsamen Senden dienen, hervorgehoben. Die zu sendenden Daten werden beispielsweise zuerst mittels eines PC's 2150 mit einer dort realisierten Anwendung erzeugt. Diese Anwendung kann folgende Dienste bereitstellen:

- Live video (2152),

- Streaming Media (2154),

- Datenübertragung (2156),

- Textnachrichten (2158) und

- Internet (2160).

Des Weiteren können mit der Anwendung Betriebsparameter der Quelle veranschaulicht werden.

Die von der Anwendung erfassten Daten werden über eine USB-Schnittstelle an den Sender 2100 weitergereicht. Auf der Seite des Senders 2100 nimmt die USB-Platine 2142 die vom PC 2150 bereitgestellten Daten entgegen.

Die über die USB-Platine 2142 empfangenen Daten werden mit EDMA (engl. enhanced direct memory access)-Transfers 2180 in einen internen Speicher des DSK 2122 geladen. Eine hohe Geschwindigkeit der EDMA-Transfers ermöglicht eine Echtzeitübertragung.

In einem DSP (Digitaler Signal Prozessor) des DSK 2122 erfolgen wesentliche Teile der Signal- und der Datenverarbeitung. In einem ersten Datenverarbeitungsschritt wird eine Kanalcodierung durchgeführt. Diese erlaubt einerseits eine Fehlererkennung. Zur Fehlererkennung wird eine zyklische Redundanzprüfung (engl. cyclic redundancy check, CRC) mit dem Generatorpolynom

$$g(D) = D^{16} \oplus D^{12} \oplus D^5 \oplus D^0 \qquad (97)$$

verwendet. In G1. (97) und im Nachfolgenden ist mit D eine Variable aus dem Galois-Feld mit zwei Elementen, kurz *GF*(2), bezeichnet. Der binäre Operator $\oplus$ bezeichnet die Addition im *GF*(2). Der sich ergebende Code ist der von der CCITT (frz. comité consultatif international telegraphique et téléphonique) vorgeschlagene CRC-16. Andererseits gestattet die verwendete Kanalcodierung die Fehlerkorrektur in einem Empfänger. Die Kanalcodierung zur Fehlerkorrektur wird nach dem Bestimmen der zyklischen Prüfsumme mit dem CRC-16 gemäß Gl. (97) erledigt. Zur Fehlerkorrektur kommt ein gekürzter (15, 10, 4)-Hammingcode mit dem Generatorpolynom

$$g(D) = D^5 \oplus D^4 \oplus D^2 \oplus D^0 \qquad (98)$$

zum Einsatz. Die zyklische Redundanzprüfung in Verbindung mit der Fehlerkorrektur erlaubt eine Realisierung eines hybriden ARQ (engl automatic repeat request)-Verfahrens im Sender 2100.

Nach der Kanalcodierung wird der codierte Bitstrom auf digitale Datensymbole abgebildet. Je nach gewählter Modulationsart sind dies 16-QAM-, 32-Kreuz-QAM-, oder 64-QAM-Symbole.

Danach erfolgt die Anordnung der resultierenden Datenfolgen **d** in Datenrahmen. Dieser Vorgang heißt Rahmenbildung. Die Datenfolgen **d** liegen also rahmenweise im internen Speicher des DSP vor. Dies macht weitere Blockverarbeitung im DSP möglich.

Nach der Rahmenbildung werden die im Vorhergehenden diskutierten Algorithmen für das gemeinsame Senden, siehe G1. (76) und Gl. (80), im DSP auf die rahmenweise vorliegenden Datenfolgen **d** angewendet. Es entstehen die digitalen, komplexwertigen Datenrahmen **s,** siehe Fig. 21.

Diese digitalen, komplexwertigen Datenrahmen **s** werden mit schnellen EDMA-Transfers über die Schnittstelle zum externen Speicher zum digitalen Schnittstellenmodul 2124 übertragen und dort in einen Sender-FIFO (engl. First-In, First-Out, TX-FIFO)-Speicher 2126 abgelegt.

Im nächsten Schritt werden die im Sender-FIFO-Speicher enthaltenen digitalen, komplexwertigen Datenrahmensymbole nacheinander und in Echtzeit an einen D/A-Umsetzer 2128, der auf dem digitalen Schnittstellenmodul 2124 vorhanden ist, übertragen. Der D/A-Umsetzer 2128 verfügt beispielsweise über zwei Eingangskanäle mit einer maximalen Auflösung von 14 Bit pro Eingangswert, arbeitet mit einer maximalen Symbolrate von 125 MHz und erzeugt aus dem Strom der komplexwertigen Datenrahmensymbole die komplexe Hüllkurve des Sendesignals.

Die komplexe Hüllkurve kann anschließend über einen Steckverbinder an das Analog/digital-Sendermodul 2130 weitergereicht werden. Danach wird die komplexe Hüllkurve zwei reellen Signalrekonstruktionsfiltern 2134 zugeführt. Je ein Signalrekonstruktionsfilter 2134 ist für die I- und für den Q-Komponente der komplexen Hüllkurve vorgesehen. Diese Signalrekonstruktionsfilter können als Butterworth-Filter dritter Ordnung und mit Hilfe von Operationsverstärkern realisiert werden. Die gefilterte I- und die gefilterte Q-Komponente können in einem weiteren Operationsverstärker zum Zwecke der Gewinnanpassung (engl. gain matching) zugeführt werden. Das resultierende massebezogene Signal (engl. single-ended signal) kann danach in ein Differenz-Signal (engl. differential signal) umgesetzt werden. Dazu kann ein vierter Operationsverstärker eingesetzt werden. Nach dieser EVM-Anpassung 2136 wird das Differenz-Signal an das EVM 2140 geliefert und von diesem schließlich über die Antenne abgestrahlt. Die Mittenfrequenz $f_c$ kann beispielsweise im ISM-Band um 2,45 GHz liegen.

Im Folgenden wird die mit dem Sender 2100 erreichte Übertragungsqualität des gemeinsamen Sendens entsprechend G1. (80) diskutiert. Diese wurde anhand der mittels des Senders 2100 erzeugter Sendesignale ermittelt. Im Nachfolgenden ist die Signalqualität durch das SNR eines Empfangssignals und durch die erzielbaren Bitfehlerverhältnisse zum Ausdruck gebracht.

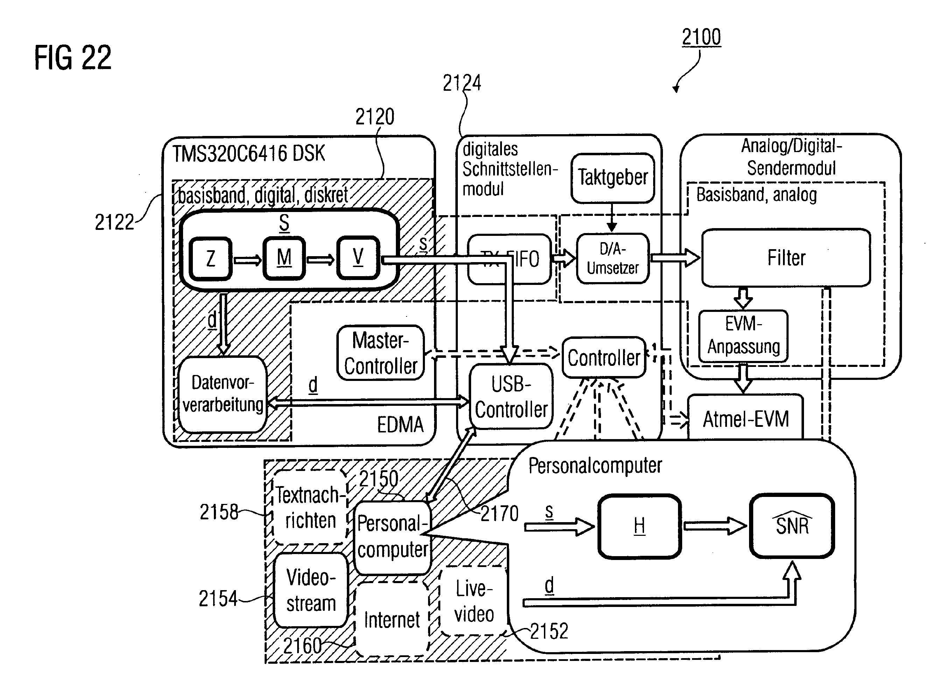

Bei dieser Untersuchung wurden die bereits im Vorhergehenden untersuchten Kanäle COST207-TU und COST207-BU betrachtet. Des Weiteren ist die in Fig. 22 dargestellte und im Nachfolgenden beschriebene Konfiguration der Hardware und der Software verwendet.

Der in der nachfolgenden Untersuchung verwendete Teil des Senders 2100 setzt sich aus

- DSK 2122,

- Schnittstellenmodul 2124 und

- MMS-Modulen

zusammen.

Die zu sendenden Daten werden, wie bereits beschrieben wurde, über der am Schnittstellenmodul 2124 untergebrachten USB-Schnittstelle 2170 an den Sender 2100 übertragen. Die Nachfolgende digitale Signalverarbeitung, mit welcher das erfindungsgemäße gemeinsame Senden realisiert wird, bleibt wie im vorigen Abschnitt beschrieben unverändert.

Der an das Schnittstellenmodul 2124 zu Verfügung gestellte Basisbandversion des Sendesignal **s** wird direkt über USB-Schnittstelle 2170 an den PC 2150 weitergereicht und somit der im PC 2150 realisierten Anwendung, im Weiteren als PC-Anwendung bezeichnet, bereitgestellt. Über USB-Schnittstelle 2170 wird zu dem auch das vorverarbeitete Signal **d** der PC-Anwendung bereitgestellt.

In der PC-Anwendung wird Sendesignal **s** einem im digitalen Basisband modellierten Kanalemulator zugeführt. Am Ausgang des Kanalemulators liegt die Basisbandversion des Empfangssignals **r'** vor. Die Basisbandversion des Empfangssignals **r'** soll im Idealfall dem modulierten Signal

$$\underline{r} = \underline{\underline{M}}\,\underline{\underline{Z}}\,\underline{d} \qquad\qquad (99)$$

entsprechen, woraus sich für das Empfangssignals $\underline{r}'$ ein SNR entsprechend

$$\widehat{SNR} = \frac{\displaystyle\sum_{k_s=1}^{N_s} \underline{r}_{k_s} \cdot \underline{r}_{k_s}^{*}}{\displaystyle\sum_{k_s=1}^{N_s} \left( \underline{r}_{k_s} \cdot \underline{r}_{k_s}^{*} - \underline{r}'_{k_s} \cdot \underline{r}'^{*}_{k_s} \right)} \qquad (100)$$

ergibt.

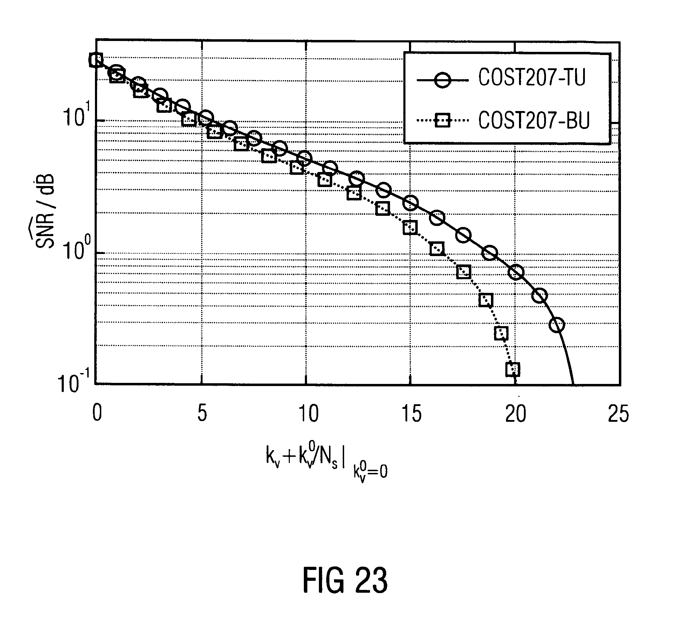

In Fig. 23 ist die Übertragungsqualität von JT-MMSE-BLE entsprechend G1. (80) für COST207-TU und COST207-BU Kanäle bei einer Geschwindigkeit von 6 km/h dargestellt. An der Abszisse ist die Verzögerung

$$T_V = \left( k_V + k_V^0 / N_s \right) \cdot T_s, \quad k_V = 0,1,...; \quad k_V^0 > 0; \quad N_s \geq 0 \qquad (101)$$

zwischen der aktuellen und der in G1. (80) verwendeten geschätzten Kanalimpulsantwort

$$\underline{h}_{k_\tau, k_t} = \hat{\underline{h}}_{k_\tau, k_t - \left( k_V + k_V^0 / N_s \right)}, \quad k_\tau = 1,...,N_h^{(k_u)}, \quad k_t > k_V + k_V^0 / N_s \qquad (102)$$

aufgetragen. Sie entspricht der Zeit die für die Bereitstellung der Kanalimpulsantwort. Diese setzt sich aus der Zeit für die empfängerseitige Schätzung und aus der Zeit die für die Übermittlung der geschätzten Kanalimpulsantwort notwendig ist. Der Wert $k_V^0$ entspricht der durch das System bedingten minimalen Verzögerung der verwendeten Kanalimpulsantwort, die eine minimale Totzeit des Systems darstellt. Der Wert für $T_V$ bzw. für $k_V N_s + k_V^0$ gleich Null ist physikalisch nicht realisierbar, führt jedoch zur Schranke für die maximale Übertragungsqualität die mit dem gemeinsamen Senden erreichbar wäre. Im Weiteren wird von einer perfekten Schätzung der Kanalimpulsantwort ausgegangen.

Im Nachfolgenden ist entsprechend UMTS/WCDMA-Standard die Rahmenlänge $N_s$ von 2560 Chips verwendet. Des Weiteren sind QPSK, 16-QAM und 64-QAM im Funksystem ohne CDMA-Komponente und mit CDMA-Komponente mit $SF = 2$, $SF = 4$ und mit $SF = 8$ betrachtet. Für das $k_V^0$ ist $N_s$ gewählt. Die gemessenen SNR-Werte sind in Fig. 23 mit den rechteckigen bzw. kreisförmigen Marker für $k_V=0,1,..$ dargestellt. Das das betrachtete Funksystem als ein lineares System mit eine begrenzten Bandbreite dargestellt werden kann, so kann aus den gemessenen SNR-Werten auch die Übertragungsqualität für $k_V^0 \neq N_s$ berechnet werden. Diese ist in Fig. 23 mit der gestrichelten Linie dargestellt.

An der Ordinate in Fig. 23 ist das gemessene Wert für $10\log_{10}\left(\widehat{SNR}\right)$ in dB entsprechend G1. (100) aufgetragen.

Selbst bei $k_V$ gleich Null ist das SNR des Empfangssignals begrenzt und beträgt ungefähr 28 dB. Dieses ist auf die endliche Auflösung des eingesetzten arithmetischen Rechenwerkes vom verwendeten DSP zurückzuführen. Der zu Demonstrationszwecken auf dem DSK 2122 untergebrachte DSP verfügt über ein komplexes Festkommarechenwerk, das maximal 32 Bit zur Darstellung der Zahlen verwendet.

Die Übertragungsqualität ist beim COST207-BU Kanal, geringfügig schlechter als beim COST207-TU Kanal. Mit zunehmender Verzögerung $k_V + k_V^0 / N_S$ nimmt auch die Übertragungsqualität zunehmend ab. Die Übertragungsqualität ist beim COST207-BU Kanal, schlechter als beim COST207-TU Kanal.

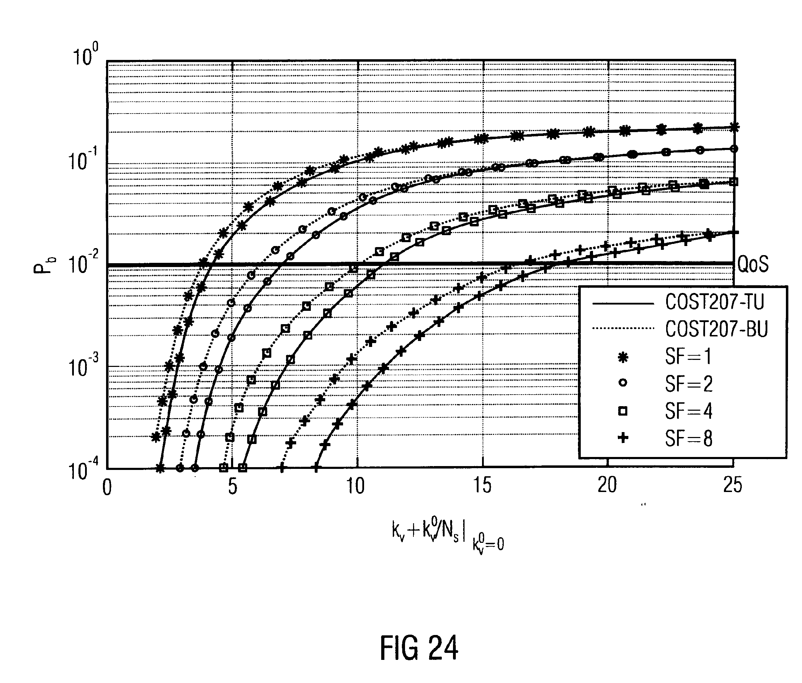

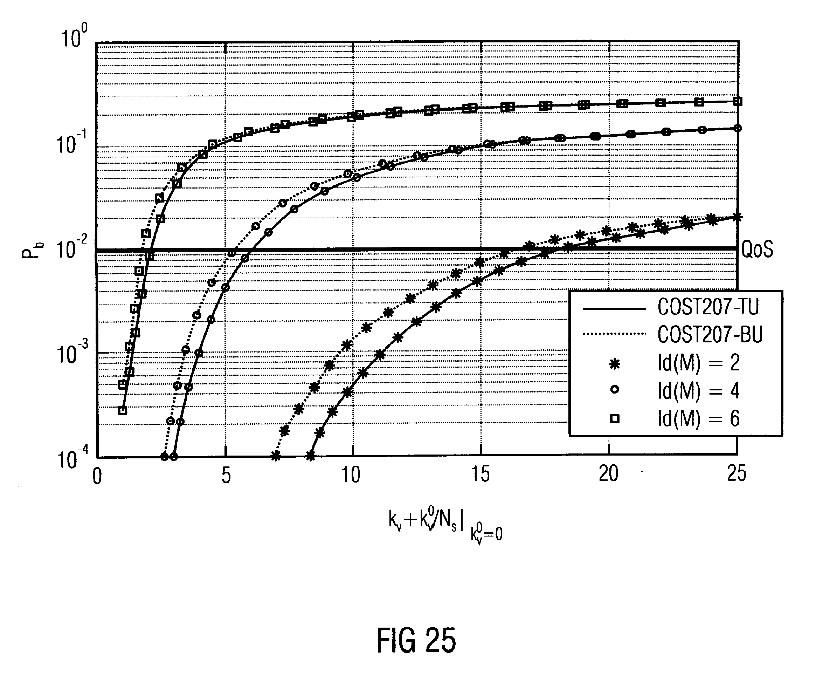

Der in Fig. 23 dargestellten Übertragungsqualität mit der oben diskutierten Leistungsfähigkeit des gemeinsamen Sendens (JT) folgen die in Fig. 24 und in Fig. 25 dargestellten Bitfehlerverhältnisse.

In Fig. 24 sind die Bitfehlerverhältnisse der uncodierten Daten für JT-MMSE-BLE entsprechend G1. (80) in Abhängigkeit von der Verzögerung $k_V + k_V^0 / N_S$ dargestellt. Dabei wurden COST207-TU und COST207-BU Kanäle betrachtet. Des Weiteren wurden QPSK-Modulation ohne des Spreizens, $SF$=1, und mit dem Spreizen $SF \in \{2,4,8\}$, dem WCDMA/UMTS-Standard entsprechend, verwendet. Die eingesetzten Spreizcode haben die Länge von zwei, $SF$ = 2 , vier, $SF$ = 4 , und acht, $SF$ = 8 , Chip. Der letzte Fall, $SF$ = 8, entspricht dem UMTS/WCDMA 384 kbit/s Dienst.

Der Wert für die Bitfehlerverhältnisse $P_b$ von $10^{-2}$, das als obere Schranke für die üblicher Weise angestrebte Dienstgüte (engl. quality of service, QoS) gilt, ist in Fig. 24 und in Fig. 25 durch eine wegerechte und mit QoS beschriftete Linie betont.

Die Dienste mit längeren Spreizcodes sind robuster gegenüber der auf die Rahmendauer bezogene Verzögerung $k_V + k_V^0 / N_S$ . So erlaubt das oben definierte QoS für den acht Chips langen Spreizcode und mit COST207-TU Kanal eine Verzögerung $k_V + k_V^0 / N_S$ bis zu 18,9. Für den vier Chip langen Spreizcode verringert sich die maximale Verzögerung $k_V + k_V^0 / N_S$ auf 11,2. Für den zwei Chip langen Spreizcode ist nur noch $k_V + k_V^0 / N_S$ kleiner als 7,1 erlaubt. Wird das Spreizen nicht eingesetzt, so ist nur noch eine Verzögerung $k_V + k_V^0 / N_S$ von maximal 4,4 erlaubt.

Wird das COST207-BU Kanal betrachtet, so verringert sich die durch die oben vorgegebenes QoS die maximal erlaubte Verzögerung $k_V + k_V^0 / N_S$ für $SF$=8 auf 17, 1, für $SF$=8 auf 10,1, für $SF$ =8 auf 6,2 und für den Fall das kein Spreizen Stadt findet auf 3,8. Verglichen mit dem COST207-TU Kanal bedeutet dies eine Verringerung der maximalen Verzögerung $k_V + k_V^0 / N_S$ um 1,8 für $SF$ = 8, um 1,1 für $SF$ =4, um 0,9 für $SF$ = 2 und um 0,6 ohne Spreizens.

In Fig. 25 sind die Bitfehlerverhältnisse der uncodierten Daten für JT-MMSE-BLE entsprechend G1. (80) in Abhängigkeit von der Verzögerung $k_V + k_V^0 / N_S$ dargestellt. Auch hier wurden COST207-TU und COST207-BU Kanäle betrachtet. Zum Spreizen wurden acht Chip lange die Spreizcodes entsprechen dem WCDMA/UMTS-Standard verwendet. Des Weiteren sind drei verschiedene Dienste mit unterschiedlicher Wertigkeiten der Modulation

- QPSK, Id($M$) = 2 ,
- 16-QAM, Id($M$) = 4 und
- 64-QAM, Id($M$) = 6

betrachtet worden.

Das QoS wurde wie vorhin mit der obere Schranke Wert für die Bitfehlerverhältnisse $P_b$ von $10^{-2}$ definiert, und im Fig. 25 durch eine wegerechte und mit QoS beschriftete Linie dargestellt.

Die Dienste mit geringeren Wertigkeiten der Modulation sind robuster gegenüber der auf die Rahmendauer bezogene Verzögerung $k_V + k_V^0 / N_S$ . So erlaubt das oben definierte QoS für QPSK über COST207-TU Kanal eine Verzögerung $k_V + k_V^0 / N_S$ bis zu 18,9. Für 16-QAM verringert sich die maximale Verzögerung $k_V + k_V^0 / N_S$ auf unter 6,1. Für 64-QAM ist nur noch $k_V + k_V^0 / N_S$ kleiner als 2,0 erlaubt.

Wird das COST207-BU Kanal betrachtet, so verringert sich die durch die oben vorgegebenes QoS die maximal erlaubte Verzögerung $k_V + k_V^0/N_S$ für QPSK auf 17,1, für 16-QAM auf 5,4 und für 64-QAM auf unter 1,9. Verglichen mit dem COST207-TU Kanal bedeutet dies eine Verringerung der maximalen Verzögerung $k_V + k_V^0/N_S$ um 1,8

für QPSK, um 0,2 für 64-QAM.

Das gemeinsame Senden bei hochratigen Diensten, hohe Wertigkeit der Modulation und geringe Spreizung der Daten, ist nur bedingt für den mobilen Einsatz geeignet. So ist das gemeinsame Senden besonders für nomadische Szenarien sinnvoll. Solche Szenarien sind typisch für die Vernetzung der unmittelbaren persönlichen Umgebung in PAN und BAN. Bei den Diensten mit den niedrigeren Datenraten, wie z.B. UMTS/WCDMA, bietet das gemeinsame Senden eine sinnvolle Möglichkeit die Aufwände in den Kommunikationsendgeräte zu verringern.

Die hier analysierten Maßnahmen zur Reduktion der Aufwände in den Kommunikationsendgeräten können zu einer Verlagerung der Aufwände von den Kommunikationsendgeräten hin zu den Infrastrukturkomponenten der Funksysteme führen. Die durch den Einfluss des Übertragungsmediums verursachte Minderung der Leistungsfähigkeit der Kommunikationsendgeräte kann mit dem gemeinsamen Senden erfolgreich bekämpft werden. Zu diesem Zweck sind anstelle sonst aufwendiger Verfahren in den Kommunikationsendgeräten, die auf denselben Prinzipien basierenden Verfahren zum gemeinsamen Senden erfolgreich einsetzbar. Sie führen zur einen erheblichen Reduktion der Aufwände in den Kommunikationsendgeräten, bei einer nicht nennenswerten bzw. moderaten Verringerung der Leistungsfähigkeit der Kommunikationsendgeräte. In manchen Fällen schränken sie allerdings die Mobilität ein. Diese Einschränkung ist vor allem für mobile Kommunikationssysteme von Nachteil.

Die Verlagerung der Aufwände vom Kommunikationsendgerät in die Basisstation führt zu einer Erhöhung der Aufwände in der Basisstation. Der Aufwand in der Basisstation kann durch bekannte Verfahren zum gemeinsamen Senden insoweit erhöht werden, um die Möglichkeit und die Wirtschaftlichkeit des Einsatzes vom gemeinsamen Senden sogar zweifelhaft erscheinen zu lassen. Durch das vorgeschlagene, erfindungsgemäße, neuartige Verfahren zum gemeinsamen Senden im Frequenzbereich ist es möglich, diese Aufwände erheblich zu reduzieren, ohne die Leistungsfähigkeit der Kommunikationsendgeräte signifikant zu verringern, so dass die Möglichkeit der Realisierung mittels heutiger Technologien zweifelsfrei ist.

Die Reduktion der Aufwände hat vor allem für PAN und BAN eine große Bedeutung und kommt der steigenden Vernetzung der persönlichen Umgebung zu gute. In PAN und BAN ist die im früheren Abschnitt beschriebene relative Geschwindigkeit gering. Aus diesem Grund ist das gemeinsame Senden besonders gut geeignet zum Einsatz in PAN und BAN.

Abschließend soll festgestellt werden, dass, abhängig von den Gegebenheiten, das erfindungsgemäße Verfahren in Hardware oder in Software implementiert werden kann. Die Implementierung kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt, kann die Erfindung somit als ein Computerprogramm mit einem Programmcode zur Durchführung des Verfahrens realisiert werden, wenn das Computerprogramm auf einem Computer abläuft. Ausführungsbeispiele der Erfindung können in digitaler oder analoger Logik, beispielsweise als elektronische oder photonische Schaltungen aufgebaut sein.

**Patentansprüche**

**1.** Vorrichtung (300) zum Senden eines Sendesignalvektors ($\underline{m}$), der Datensymbole wenigstens eines teilnehmerspezifischen Datenblocks umfasst, über wenigstens einen teilnehmerspezifischen Übertragungskanal (204) mit einer signalverzerrenden Wirkung, der durch wenigstens einen teilnehmerspezifischen Kanalimpulsantwortvektor

($\underline{h}_{k_S}^{(k_u)}$) dargestellt werden kann, zu wenigstens einem Teilnehmer, wobei die Vorrichtung ausgebildet ist, um die signalverzerrende Wirkung des Übertragungskanals (204) durch eine Vorverzerrung des Sendesignalvektors ($\underline{m}$) zu kompensieren und, um die Vorverzerrung basierend auf einer Annäherung einer optimalen Kanalautokorrelationsmatrix ($\underline{J}$) durch eine zirkulante Kanalautokorrelationsmatrix ($\underline{J}_{circ}$), die von dem wenigstens einen Kanalimpulsantwortvektor ($\underline{h}_{k_S}^{(k_u)}$) abhängt, im Frequenzbereich durchführen.

2. Vorrichtung gemäß Anspruch 1, die ausgebildet ist, um eine Inversion der zirkulanten Kanalautokorrelationsmatrix ($\underline{J}_{circ}$) im Frequenzbereich durchzuführen.

3. Vorrichtung gemäß Anspruch 1 oder 2, wobei der wenigstens eine teilnehmerspezifische Kanalimpulsantwortvektor gemäß

$$\underline{h}_{k_s}^{(k_u)} = \left( \underline{h}_{k_s,1}^{(k_u)}, \underline{h}_{k_s,2}^{(k_u)}, \dots, \underline{h}_{k_s,N_h^{(k_u)}}^{(k_u)} \right)^{\mathsf{T}}, \quad k_s = 1, \dots, N_s, k_u = 1, \dots, N_u,,$$

dargestellt werden kann und kürzer ist als der Sendesignalvektor ($\underline{m}$), und aus dem teilnehmerspezifischen Kanalimpulsantwortvektor ($\underline{h}_{k_s}^{(k_u)}$) eine teilnehmerspezifische $\left( N_s + N_h^{(k_u)} - 1 \right) \times N_s$ Kanalimpulsantwortmatrix ($\underline{H}^{(k_u)}$) für einen $k_u$-ten Teilnehmer gemäß

$$\underline{H}^{(k_u)} = \begin{bmatrix} \underline{h}_1^{(k_u)} & 0 & \cdots & 0 \\ \underline{h}_2^{(k_u)} & \underline{h}_1^{(k_u)} & \cdots & 0 \\ \vdots & \vdots & & \vdots \\ \underline{h}_{N_h^{(1)}}^{(k_u)} & \underline{h}_{N_h^{(1)}-1}^{(k_u)} & \cdots & 0 \\ 0 & \underline{h}_{N_h^{(1)}}^{(k_u)} & \cdots & 0 \\ \vdots & \vdots & & \vdots \\ 0 & 0 & \cdots & \underline{h}_{N_h^{(1)}}^{(1)} \end{bmatrix}, \quad k_u = 1, \dots, N_u.$$

gebildet werden kann, wobei $N_u$ eine Anzahl von Teilnehmern bedeutet.

4. Vorrichtung nach Anspruch 3, wobei eine optimale Kanalautokorrelationsmatrix ($\underline{J}^{(k_u)}$) bzgl. eines $k_u$-ten Teilnehmers als hermitesche $\left( N_s + N_h^{(k_u)} - 1 \right) \times \left( N_s + N_h^{(k_u)} - 1 \right) -$ Matrix gemäß

$$\underline{J}^{(k_u)} = \underline{\hat{H}}^{(k_u)} \underline{\hat{H}}^{(k_u)\mathsf{H}} + x\mathbf{I}_{\left( N_s + N_h^{(k_u)} - 1 \right)}$$

mit $k_u = 1, \dots, N_u$ und $x \in \mathrm{IR}_0^+$ dargestellt werden kann, wobei $N_s$ eine Länge des wenigstens einen nutzerspezifischen Datenblocks und $N_h^{(k_u)} - 1$ eine Länge des wenigstens einen teilnehmerspezifischen Kanalimpulsantwortvektors

( $\underline{h}_{k_s}^{(k_u)}$ ) bezeichnet.

5. Vorrichtung nach Anspruch 4, die ausgebildet ist, um in Abhängigkeit des $N_h^{(k_u)}$ -ten Spaltenvektors der teilneh-merspezifischen optimalen Kanalautokorrelationsmatrix ($\underline{J}^{(k_u)}$) eine teilnehmerspezifische, zirkulante ($N_s$ x $N_s$) Ka-nalautokorrelationsmatrix ($\underline{\tilde{J}}^{(k_u)}$) gemäß

$$\underline{\tilde{J}}^{(circ,k_u)} = \left[\left[\underline{\tilde{J}}^{(circ,k_u)}\right]_{\mu,\nu}\right],$$

$$\left[\underline{\tilde{J}}^{(circ,k_u)}\right]_{\mu,\nu} = \begin{bmatrix} [\underline{J}]_{N_h^{(k_u)}} & \cdots & [\underline{J}]_2 & [\underline{J}]_1 & 0 & \cdots & 0 & [\underline{J}]_{2N_h^{(k_u)}-1} & \cdots & [\underline{J}]_{N_h^{(k_u)}+1} \\ \vdots & \ddots & \vdots & \vdots & \ddots & & & 0 & \ddots & \vdots \\ [\underline{J}]_{2N_h^{(k_u)}-2} & & \vdots & \vdots & \ddots & [\underline{J}]_1 & & \vdots & & [\underline{J}]_{2N_h^{(k_u)}-1} \\ [\underline{J}]_{2N_h^{(k_u)}-1} & \ddots & \vdots & \vdots & & & \ddots & & & 0 \\ 0 & \ddots & \vdots & \vdots & & & & [\underline{J}]_1 & & \vdots \\ \vdots & & [\underline{J}]_{2N_h^{(k_u)}-1} & \vdots & & & & & \ddots & 0 \\ 0 & 0 & [\underline{J}]_{2N_h^{(k_u)}-1} & & & & & & & [\underline{J}]_1 \\ [\underline{J}]_1 & \vdots & 0 & \ddots & & & & & & [\underline{J}]_2 \\ \vdots & \ddots & 0 & \vdots & [\underline{J}]_{2N_h^{(k_u)}-1} & & & & & \vdots \\ [\underline{J}]_{N_h^{(k_u)}-1} & \cdots & [\underline{J}]_1 & 0 & \cdots & 0 & [\underline{J}]_{2N_h^{(k_u)}-1} & [\underline{J}]_{2N_h^{(k_u)}-2} & \cdots & [\underline{J}]_{N_h^{(k_u)}} \end{bmatrix}$$

$$k_u = 1,\dots,N_u.$$

zu bilden, wobei

$$\underline{\tilde{J}}^{(k_u)} = \left[\left[\underline{J}^{(k_u)}\right]_{1,N_h^{(k_u)}} \quad \left[\underline{J}^{(k_u)}\right]_{2,N_h^{(k_u)}} \quad \cdots \quad \left[\underline{J}^{(k_u)}\right]_{2N_h^{(k_u)}-1,N_h^{(k_u)}} \quad 0 \quad \cdots \quad 0\right]^T,$$

$$= \left[\left[\left[\underline{\hat{H}}^{(k_u)}\underline{\hat{H}}^{(k_u)H}\right]\right]_{1,N_h^{(k_u)}} + x\right) \quad \cdots \quad \left(\left[\left[\underline{\hat{H}}^{(k_u)}\underline{\hat{H}}^{(k_u)H}\right]\right]_{2N_h^{(k_u)}-1,N_h^{(k_u)}} + x\right) \quad 0 \quad \cdots \quad 0\right]^T,$$

$$k_u = 1,\dots,N_u,$$

und $\left[\underline{J}^{(k_u)}\right]_{x,N_h^{(k_u)}} = [\underline{J}]_x , \quad x \in \mathrm{IR}_0^+.$

6. Vorrichtung nach einem der vorhergehenden Ansprüche, die ausgebildet ist, um durch eine Transformation der 6. Vorrichtung nach einem der vorhergehenden Ansprüche, die ausgebildet ist, um durch eine Transformation der teilnehmerspezifischen, zirkulanten Kanalautokorrelationsmatrix ($\underline{\tilde{J}}^{(circ,k_u)}$) vom Zeitbereich in den Frequenzbereich eine teilnehmerspezifische, frequenztransformierte Kanalautokorrelationsdiagonalmatrix ($\underline{F}^H\underline{\tilde{J}}^{(circ,k_u)}\underline{F}$) zu erhalten

und durch Inversion der teilnehmerspezifischen, frequenztransformierten Kanalautokorrelationsdiagonalmatrix ($\underline{\mathbf{F}}^{\mathrm{H}}\underline{\tilde{\mathbf{J}}}^{(\mathrm{circ},k_{\mathrm{u}})}\underline{\mathbf{F}}$) gemäß

$$\underline{\tilde{\mathbf{J}}}_{\mathsf{F}}^{(k_{\mathrm{u}})-1} = \left(\underline{\mathbf{F}}^{\mathrm{H}}\,\underline{\tilde{\mathbf{J}}}^{(\mathrm{circ},k_{\mathrm{u}})}\underline{\mathbf{F}}\right)^{-1}, \quad k_{\mathrm{u}} = 1,\dots,N_{\mathrm{u}},$$

wobei

$$\underline{\mathbf{F}} = \left[[\underline{\mathbf{F}}]_{\mu,\nu}\right],$$

$$[\underline{\mathbf{F}}]_{\mu,\nu} = \frac{1}{\sqrt{N_{\mathrm{s}}}}\exp\left\{-\mathrm{j}\frac{2\pi}{N_{\mathrm{s}}}(\mu-1)(\nu-1)\right\}, \quad \mu,\nu = 1,\dots,N_{\mathrm{s}},$$

eine Inverse ($\underline{\tilde{\mathbf{J}}}_{\mathsf{F}}^{(k_{\mathrm{u}})-1}$) der teilnehmerspezifischen, frequenztransformierten Kanalautokorrelationsdiagonalmatrix ($\underline{\mathbf{F}}^{\mathrm{H}}\underline{\tilde{\mathbf{J}}}^{(\mathrm{circ},k_{\mathrm{u}})}\underline{\mathbf{F}}$) zu bilden, um eine teilnehmerspezifische, frequenztransformierte, näherungsweise inverse Vorverzerrungsdiagonalmatrix ($\underline{\tilde{\mathbf{J}}}_{\mathsf{F}}^{(k_{\mathrm{u}})-1}$) zu erhalten.

7. Vorrichtung nach einem der vorhergehenden Ansprüche, die ausgebildet ist, um durch eine Transformation der teilnehmerspezifischen, zirkulanten Kanalautokorrelationsmatrix ($\underline{\tilde{\mathbf{J}}}^{(\mathrm{circ},k_{\mathrm{u}})}$) vom Zeitbereich in den Frequenzbereich eine teilnehmerspezifische, frequenztransformierte Kanalautokorrelationsdiagonalmatrix ($\underline{\mathbf{F}}^{\mathrm{H}}\underline{\tilde{\mathbf{J}}}^{(\mathrm{circ},k_{\mathrm{u}})}\underline{\mathbf{F}}$) zu erhalten und durch Reziprokwertbildung der Hauptdiagonalelemente der teilnehmerspezifischen, frequenztransformierten Kanalautokorrelationsdiagonalmatrix ($\underline{\mathbf{F}}^{\mathrm{H}}\underline{\tilde{\mathbf{J}}}^{(\mathrm{circ},k_{\mathrm{u}})}\underline{\mathbf{F}}$) eine teilnehmerspezifische, frequenztransformierte, näherungsweise inverse Vorverzerrungsdiagonalmatrix ($\underline{\tilde{\mathbf{J}}}_{\mathsf{F}}^{(k_{\mathrm{u}})-1}$) zu erhalten.

8. Vorrichtung nach Anspruch 6 oder 7, die ausgebildet ist, um, bei einer Mehrzahl ($N_{\mathrm{u}}$) von Teilnehmern, für jeden der Teilnehmer die teilnehmerspezifische, frequenztransformierte, näherungsweise inverse Vorverzerrungsdiagonalmatrix ($\underline{\tilde{\mathbf{J}}}_{\mathsf{F}}^{(k_{\mathrm{u}})-1}$) zu bestimmen und daraus gemäß

$$\underline{\tilde{\mathbf{J}}}_{\mathsf{F}}^{-1} \approx \begin{bmatrix} \underline{\tilde{\mathbf{J}}}_{\mathsf{F}}^{(1)-1} & \mathbf{0}_{N_{\mathrm{s}}\times N_{\mathrm{s}}} & \cdots & \mathbf{0}_{N_{\mathrm{s}}\times N_{\mathrm{s}}} \\ \mathbf{0}_{N_{\mathrm{s}}\times N_{\mathrm{s}}} & \underline{\tilde{\mathbf{J}}}_{\mathsf{F}}^{(2)-1} & \cdots & \mathbf{0}_{N_{\mathrm{s}}\times N_{\mathrm{s}}} \\ \vdots & \vdots & \ddots & \vdots \\ \mathbf{0}_{N_{\mathrm{s}}\times N_{\mathrm{s}}} & \mathbf{0}_{N_{\mathrm{s}}\times N_{\mathrm{s}}} & \cdots & \underline{\tilde{\mathbf{J}}}_{\mathsf{F}}^{(N_{\mathrm{u}})-1} \end{bmatrix}.$$

eine ($N_{\mathrm{u}}N_{\mathrm{s}}$) x ($N_{\mathrm{u}}N_{\mathrm{s}}$) diagonale, frequenztransformierte, näherungsweise inverse Vorverzerrungsdiagonalmatrix

( $\widetilde{\underline{\mathbf{J}}}_\mathsf{F}^{-1}$ ) für die Mehrzahl ($N_\mathsf{u}$) der Teilnehmer zu bilden.

**9.** Vorrichtung nach Anspruch 8, die ausgebildet ist, um die diagonale Vorverzerrungsdiagonalmatrix ( $\widetilde{\underline{\mathbf{J}}}_\mathsf{F}^{-1}$ ) gemäß

$$\left[\hat{\underline{\mathbf{H}}}_\mathsf{F}^{(1)\mathsf{H}} \quad \dots \quad \hat{\underline{\mathbf{H}}}_\mathsf{F}^{(N_\mathsf{u})\mathsf{H}}\right]\cdot\widetilde{\underline{\mathbf{J}}}_\mathsf{F}^{-1}$$

im Frequenzbereich zu gewichten, um ein angenähertes Vorverzerrungsmatrixfilter im Frequenzbereich zu erhalten, und wobei

$$\hat{\underline{\mathbf{H}}}_\mathsf{F}^{(k_\mathsf{u})} = \underline{\mathbf{F}}\hat{\underline{\mathbf{H}}}_\mathsf{F}^{(k_\mathsf{u})}\underline{\mathbf{F}}^\mathsf{H}, \quad k_\mathsf{u} = 1,\dots,N_\mathsf{u}.$$

eine Fourier-Transformierte einer teilnehmerspezifischen, geschätzten Kanalimpulsantwortmatrix $\hat{\underline{\mathbf{H}}}^{(k_\mathsf{u})}$ bedeutet, mit

$$\underline{\mathbf{F}} = \left[[\underline{\mathbf{F}}]_{\mu,\nu}\right],$$

$$[\underline{\mathbf{F}}]_{\mu,\nu} = \frac{1}{\sqrt{N_\mathsf{s}}}\exp\left\{-\mathrm{j}\frac{2\pi}{N_\mathsf{s}}(\mu-1)(\nu-1)\right\}, \quad \mu,\nu = 1,\dots,N_\mathsf{s}.$$

**10.** Vorrichtung gemäß einem der vorhergehenden Ansprüche, mit folgenden Merkmalen:

einer Einrichtung (304) zum Transformieren des Sendesignalvektors ($\underline{\mathbf{m}}$) vom Zeitbereich in den Frequenzbereich, um einen frequenztransformierten Sendesignalvektor ($\underline{\mathbf{m}}_F$) zu erhalten.
einer Einrichtung (306) zum Gewichten des frequenztransformierten Sendesignalvektors ($\underline{\mathbf{m}}_F$) mit einer von der zirkulanten Kanalautokorrelationsmatrix ($\widetilde{\underline{\mathbf{J}}}^{(\mathrm{circ},k_\mathsf{u})}$) abhängigen frequenztransformierten Diagonalmatrix ( $\widetilde{\underline{\mathbf{J}}}_\mathsf{F}^{-1}$ ) , um einen frequenztransformierten vorverzerrten Sendesignalvektor ($\underline{\mathbf{v}}_F$) zu erhalten; und
einer Einrichtung (308) zum Transformieren des frequenztransformierten, vorverzerrten Sendesignalvektors ($\underline{\mathbf{v}}_F$) vom Frequenzbereich in den Zeitbereich, um einen vorverzerrten Sendesignalvektor (**s'**) im Zeitbereich zu erhalten.

**11.** Vorrichtung gemäß einem der vorhergehenden Ansprüche, die eine Einrichtung (303) zum Zuordnen wenigstens eines teilnehmerspezifischen Datenvektors ($\underline{\mathbf{d}}^{(k_\mathsf{u})}$) zu teilnehmerspezifischen Übertragungsressourcen aufweist, um einen zugeordneten Gesamtdatenvektor **(Zd)** zu erhalten.

**12.** Vorrichtung gemäß Anspruch 11, die eine Einrichtung (303) zum Modulieren des zugeordneten Gesamtdatenvektors **(Zd)** aufweist, um einen modulierten zugeordneten Gesamtdatenvektor **(MZd)** als Sendesignalvektor zu erhalten.

**13.** Vorrichtung gemäß einem der vorhergehenden Ansprüche, die ausgebildet ist, um eine zyklische Erweiterung des Sendesignalvektors **(MZd)** gemäß

$$V_1 \cdot \underline{M} \cdot Z\underline{d}$$

mit einer $\left(\sum_{k_u=1}^{N_u}\left(N_s + N_h^{(k_u)} - 1\right)\right) \times N_u N_s$ reellwertigen Erweiterungsmatrix

$$V_1 = \left[\left[\left(E_{N_h^{(1)}-1}\right)^T \quad I_{N_s}\right] \quad \left[\left(E_{N_h^{(2)}-1}\right)^T \quad I_{N_s}\right] \quad \cdots \quad \left[\left(E_{N_h^{(N_u)}-1}\right)^T \quad I_{N_s}\right]\right]^T$$

,

mit $\left(N_h^{(k_u)} - 1\right) \times N_s$ teilnehmerspezifischen Matrizen $E_{N_h^{(k_u)}-1}$, vorzunehmen, um den Sendesignalvektor (**MZd**) um $\sum_{k_u=1}^{N_u}\left(N_h^{(k_u)} - 1\right)$ Elemente zu erweitern, um einem Einschwingen des wenigstens einen teilnehmerspezifischen Übertragungskanals zu berücksichtigen.

**14.** Vorrichtung gemäß Anspruch 13, die ausgebildet ist, um die $\left(N_h^{(k_u)} - 1\right) \times N_s$ teilnehmerspezifischen Matrizen gemäß

$$E_{N_h^{(k_u)}-1}^{(pad)} = 0_{\left(N_h^{(k_u)}-1\right) \times N_s}, \quad k_u = 1,\ldots,N_u,$$

zu bilden.

**15.** Vorrichtung gemäß Anspruch 13, die ausgebildet ist, um

die $\left(N_h^{(k_u)} - 1\right) \times N_s$ teilnehmerspezifischen Matrizen gemäß

$$E_{N_h^{(k_u)}-1}^{(cyc)} = \left[0_{\left(N_h^{(k_u)}-1\right) \times \left(N_s - N_h^{(k_u)}+1\right)} \quad I_{\left(N_h^{(k_u)}-1\right)}\right], \quad k_u = 1,\ldots,N_u,$$

zu bilden.

**16.** Verfahren zum Senden eines Sendesignalvektors ($\underline{m}$), der Datensymbole ( $\left[\underline{d}_1^{(k_u)}, \underline{d}_2^{(k_u)}, \ldots, \underline{d}_{N_d}^{(k_u)}\right]^\mathsf{T}$ ) wenigstens eines teilnehmerspezifischen Datenblocks umfasst, über wenigstens einen teilnehmerspezifischen Übertragungskanal (204) mit einer signalverzerrenden Wirkung, der durch wenigstens einen teilnehmerspezifischen Kanalimpulsantwortvektor ( $\underline{h}_{k_s}^{(k_u)}$ ) dargestellt werden kann, zu wenigstens einem Teilnehmer, mit folgendem Schritt:

Kompensieren der signalverzerrenden Wirkung des Übertragungskanals durch eine Vorverzerrung des Sendesignalvektors, wobei die Vorverzerrung basierend auf einer Annäherung einer optimalen teilnehmerspezifischen Kanalautokorrelationsmatrix ($\underline{J}$) durch eine zirkulante teilnehmerspezifische Kanalautokorrelationsmatrix ($\underline{J}_{circ}$), die von dem wenigstens einen Kanalimpulsantwortvektor ( $\underline{h}_{k_s}^{(k_u)}$ ) abhängt, im Frequenzbereich durchgeführt wird.

**17.** Computerprogramm zur Durchführung des Verfahrens gemäß Anspruch 16, wenn das Computerprogramm auf einem Computer oder Mikrocontroller durchgeführt wird.

FIG 1

FIG 2

EP 2 271 037 A1

FIG 3

$$E_{N_h^{(k_u)}-1}^{(pad)}$$

$$N_h^{(k_u)}-1 \longrightarrow \qquad N_s$$

$$E_{N_h^{(k_u)}-1}^{(cyc)}$$

$$N_h^{(k_u)}-1 \longrightarrow \qquad N_s$$

# FIG 4

**FIG 5**

FIG 6

FIG 7

FIG 8

A)

Basisstation | Übertragungsmedium | Kommunikationsendgerät

konventionelles Senden

B)

Basisstation | Übertragungsmedium | Kommunikationsendgerät

gemeinsames Senden

FIG 9

FIG 10

FIG 11

FIG 12

FIG 13

**FIG 14**

**FIG 15**

FIG 16

FIG 17

FIG 18

## FIG 19

## FIG 20

FIG 21

Analog/Digital-Sendermodul

2134

2132

Filter

2136

EVM-Anpassung

Atmel-EVM

Basisband, analog

HF analog   Basisband analog

2130

2100

Taktgeber

D/A-Umsetzer

Controller

2128

TX-FIFO

2142

USB-Controller

2126

digitales Schnittstellen-modul

2124

TMS320C6416 DSK

2120

basisband, digital, diskret

$\underline{S}$

$\underline{Z}$   $\underline{M}$   $\underline{V}$

Master-Controller

2180

EDMA

$\underline{d}$

Datenvor-verarbeitung

2122

Numerische Tastatur

2114

Bildschirm

Berührungs-empfindlicher Bildschirm

Mensch-Maschine-Schnittstellen

2110

2112

Live-video

2152

Personal-computer

2150

Internet

Textnach-richten

2158

Video-stream

2154

2160

**FIG 22**

2100

2120

2124

TMS320C6416 DSK

basisband, digital, diskret

2122

S

Z → M → V

s

digitales Schnittstellen-modul

Taktgeber

Analog/Digital-Sendermodul

Basisband, analog

TX-FIFO

D/A-Umsetzer

Filter

d

Master-Controller

Controller

EVM-Anpassung

d

Datenvor-verarbeitung

USB-Controller

Atmel-EVM

EDMA

Personalcomputer

Textnach-richten

2150

2158

Personal-computer

2170

s

H

SNR

Video-stream

2154

Internet

Live-video

2152

d

2160

EP 2 271 037 A1

62

FIG 23

FIG 24

FIG 25

Europäisches
Patentamt
European
Patent Office
Office européen
des brevets

**EUROPÄISCHER RECHERCHENBERICHT**

Nummer der Anmeldung

EP 09 00 8764

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MELVASALO M ET AL: "Low complexity space-time MMSE equalization in WCDMA systems" IEEE INTERNATIONAL SYMPOSIUM ONPERSONAL, INDOOR AND MOBILE RADIO COMMUNICATIONS, 11. September 2005 (2005-09-11), Seiten 306-310, XP031099756 Piscataway, US * Zusammenfassung * * Seite 306, rechte Spalte, Absatz 2 * ----- | 1-17 | INV. H04L25/03 |
| X | BURG A ET AL: "Regularized Frequency Domain Equalization Algorithm and its VLSI Implementation" IEEE INTERNATIONAL SYMPOSIUM ON CIRCUITS AND SYSTEMS, 27. Mai 2007 (2007-05-27), - 30. Mai 2007 (2007-05-30) Seiten 3530-3533, XP031182068 Piscataway, US * Zusammenfassung * ----- | 1-17 | |
| X | WO 97/48192 A1 (SIEMENS AG [DE]; KLEIN ANJA [DE]; BAIER PAUL WALTER [DE]; STEINER BERN) 18. Dezember 1997 (1997-12-18) * Seite 9, Zeile 1 - Seite 10, Zeile 20 * ----- | 1-17 | RECHERCHIERTE SACHGEBIETE (IPC) H04L |
| X | BAIG, UR-REHMAN: "Frequency Domain Channel Equalization Using Circulant Channel Matrix Diagonalization" IEEE INTERNATIONAL MULTITOPIC CONFERENCE, Dezember 2005 (2005-12), Seiten 1-5, XP031062569 Piscataway, US * Zusammenfassung * * section 6 * ----- -/-- | 1-17 | |

Der vorliegende Recherchenbericht wurde für alle Patentansprüche erstellt

| Recherchenort | Abschlußdatum der Recherche | Prüfer |
|---|---|---|
| Den Haag | 1. März 2010 | Scriven, Paul |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes
   Dokument

EPO FORM 1503 03.82 (P04C03)

| Europäisches Patentamt European Patent Office Office européen des brevets | **EUROPÄISCHER RECHERCHENBERICHT** | **Nummer der Anmeldung** EP 09 00 8764 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WHITE ET AL: "Low cost MMSE algorithm for UTRA TDD mode downlink receiver" ELECTRONICS LETTERS, Bd. 34, Nr. 21, 15. Oktober 1998 (1998-10-15), Seiten 2009-2010, XP006010471 STEVENAGE, GB * das ganze Dokument * ----- | 1-17 | |
| X | VISOZ R ET AL: "Advanced Transceiver Architectures for Downlink MIMO CDMA Evolution" IEEE TRANSACTIONS ON WIRELESS COMMUNICATIONS, IEEE SERVICE CENTER, PISCATAWAY, NJ, US, Bd. 6, Nr. 8, 1. August 2007 (2007-08-01), Seiten 3016-3027, XP011190266 ISSN: 1536-1276 * Zusammenfassung * ----- | 1,16-17 | |
| X | KUHLING ET AL: "12x12 MIMO-OFDM realtime implementation for 3GPP LTE+ on a Cell Processor" EUROPEAN WIRELESS CONFERENCE, 22. Juni 2008 (2008-06-22), Seiten 1-5, XP031320086 Piscataway, US * Zusammenfassung * ----- | 1-17 | **RECHERCHIERTE SACHGEBIETE (IPC)** |
| X | US 2006/056522 A1 (TSATSANIS MICHAIL [US] ET AL) 16. März 2006 (2006-03-16) * Absatz [0070] * ----- -/-- | 1,16-17 | |

Der vorliegende Recherchenbericht wurde für alle Patentansprüche erstellt

| Recherchenort Den Haag | Abschlußdatum der Recherche 1. März 2010 | Prüfer Scriven, Paul |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

Europäisches
Patentamt

European
Patent Office

Office européen
des brevets

## EUROPÄISCHER RECHERCHENBERICHT

**Nummer der Anmeldung**

EP 09 00 8764

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | YI JIANG, VARANASI: "Extended Uniform Channel Decomposition for MIMO Communications with Intersymbol Interference" ASILOMAR CONFERENCE ON SIGNALS, SYSTEMS AND COMPUTERS, 4. November 2007 (2007-11-04), Seiten 1549-1553, XP031242341 Piscataway, US * Zusammenfassung * ----- | 1-17 | |
| A | FENG WAN ET AL.: "A Frequency-Domain Correlation Matrix Estimation Algorithm for MIMO-OFDM Channel Estimation" IEEE VEHICULAR TECHNOLOGY CONFERENCE, 21. September 2008 (2008-09-21), Seiten 1-5, XP031352255 Piscataway, US * Zusammenfassung * ----- | 1-17 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 1. März 2010 | Scriven, Paul |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes
   Dokument

EPO FORM 1503 03.82 (P04C03)

**EP 2 271 037 A1**

**ANHANG ZUM EUROPÄISCHEN RECHERCHENBERICHT
ÜBER DIE EUROPÄISCHE PATENTANMELDUNG NR.**

EP 09 00 8764

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-03-2010

| Im Recherchenbericht angeführtes Patentdokument | Datum der Veröffentlichung | Mitglied(er) der Patentfamilie | Datum der Veröffentlichung |
|---|---|---|---|
| WO 9748192　A1 | 18-12-1997 | DE　19623665 C1<br>EP　0904640 A1 | 30-04-1997<br>31-03-1999 |
| US 2006056522　A1 | 16-03-2006 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- 3rd Generation Partnership Project, Technical Specification Group Radio Access Network: Physical channels and mapping of transport channels onto physical channels (FDD). *Release 7, 3GPP TS 25.211, Version 7.0.0,* Marz 2006
- TMS320C6414T, TMS320C6415T, TMS320C-6416T Fixed-Point Digital Signal Processor. *Document ID SPRS226L,* Februar 2008

- **Jung, P.** *Analyse und Entwurf digitaler Mobilfunksysteme,* 1997, ISBN 3-519-06190-2
- 3rd Generation Partnership Project, Technical Specification Group Radio Access Network: User Equipment (UE) radio transmission and reception (FDD). *Release 6, 3GPP TS 25.101, Version 6.15.0,* September 2007